(19) Europäisches Patentamt / European Patent Office / Office européen des brevets

(11) **EP 4 424 454 A1**

(12) **EUROPEAN PATENT APPLICATION**
published in accordance with Art. 153(4) EPC

(43) Date of publication:
**04.09.2024 Bulletin 2024/36**

(21) Application number: **21962382.4**

(22) Date of filing: **27.10.2021**

(51) International Patent Classification (IPC):
**B23K 26/36** [(2014.01)]

(52) Cooperative Patent Classification (CPC):
**B23K 26/36**

(86) International application number:
**PCT/JP2021/039660**

(87) International publication number:
**WO 2023/073833 (04.05.2023 Gazette 2023/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NIKON CORPORATION**
**Minato-ku**
**Tokyo 108-6290 (JP)**

(72) Inventors:
• **EGAMI, Shigeki**
  **Tokyo 108-6290 (JP)**
• **KITA, Naonori**
  **Tokyo 108-6290 (JP)**
• **TATSUZAKI, Yosuke**
  **Tokyo 108-6290 (JP)**

(74) Representative: **Hoffmann Eitle**
**Patent- und Rechtsanwälte PartmbB**
**Arabellastraße 30**
**81925 München (DE)**

(54) **DATA GENERATION METHOD, CLOUD SYSTEM, PROCESSING DEVICE, COMPUTER PROGRAM, AND RECORDING MEDIUM**

(57)     A data generation method is a data generation method of generating control data for controlling a processing apparatus that is configured to perform a subtractive manufacturing on an object by irradiating the object with a pulse energy beam, and measures a shape after the subtractive manufacturing of a test workpiece or the object after irradiating the test workpiece with the pulse energy beam; calculates information related to a light penetration depth into the test workpiece based on shape information before the subtractive manufacturing of the test workpiece and a measured result of the shape after the subtractive manufacturing of a test workpiece; calculates for each irradiation target position based on information related to an inclination at each irradiation target position of the object that is irradiated with the pulse energy beam with respect to an irradiation direction of the pulse energy beam and the information related to the light penetration depth, a unit processing amount of the object in a case where the object is irradiated with the pulse energy beam a unit number of times; and calculates, based on a target processing amount for each irradiation target position and the unit processing amount for each irradiation target position, a target number of times which each irradiation target position is irradiated with the pulse energy beam.

FIG. 12

EP 4 424 454 A1

**Description**

Technical Field

The present invention relates to a processing apparatus that is configured to process an object by an energy beam, a data generation method that generates control data for controlling the processing apparatus, a cloud system that determines a processing condition of the processing apparatus, a computer program that allows a computer to execute the data generation method, and a recording medium in which the computer program is recorded.

Background Art

A Patent Literature 1 discloses a processing apparatus that is configured to process an object by irradiating the object with laser light. This type of processing apparatus is required to properly process the object.

Citation List

Patent Literature

Patent Literature 1: US2002/0017509A1

Summary of Invention

A first aspect provides a data generation method of generating control data for controlling a processing apparatus that is configured to perform a subtractive manufacturing on an object by irradiating a surface of the object with a pulse energy beam, the data generation method including: after irradiating a test workpiece or the object with the pulse energy beam, measuring a shape of the test workpiece or the object after the subtractive manufacturing; calculating information related to a light penetration depth into the test workpiece or the object based on shape information of the test workpiece or the object before the subtractive manufacturing and a measured result of the shape of the test workpiece or the object after the subtractive manufacturing; calculating a unit processing amount of the object in a case where the object is irradiated with the pulse energy beam a unit number of times for each irradiation target position based on information related to an inclination of the object at each irradiation target position, which is irradiated with the pulse energy beam, with respect to an irradiation direction of the pulse energy beam and the information related to the light penetration depth; and calculating a target number of times which each irradiation target position should be irradiated with the pulse energy beam based on a target processing amount for each irradiation target position and the unit processing amount for each irradiation target position.

A second aspect provides a cloud system including: a communication apparatus that communicates with a client terminal of a user who uses a processing apparatus; and a calculation apparatus that determines a processing condition of the processing apparatus based on information related to an energy beam of the processing apparatus, information related to a material of a processing target object processed by the processing apparatus, and information related to at least one of a shape of the processing target object before a processing and a shape of the processing target object after the processing, which are acquired from the client terminal through the communication apparatus, wherein the communication apparatus transmits the processing condition determined by the calculation apparatus to the client terminal.

A third aspect provides a cloud system including: a communication apparatus that communicates with a client terminal of a user who uses a processing apparatus; and a calculation apparatus that determines a processing condition of the processing apparatus based on identification information for identifying the processing apparatus, information related to a material of a processing target object processed by the processing apparatus, and information related to at least one of a shape of the processing target object before a processing and a shape of the processing target object after the processing, which are acquired from the client terminal through the communication apparatus, wherein the communication apparatus transmits the processing condition determined by the calculation apparatus to the client terminal.

A fourth aspect provides a cloud system including: a communication apparatus that communicates with a client terminal of a user who uses a processing apparatus; and a calculation apparatus that determines a processing condition of the processing apparatus based on information related to an energy beam of the processing apparatus or identification information for identifying the processing apparatus which are acquired from the client terminal through the communication apparatus, wherein the communication apparatus transmits the processing condition determined by the calculation apparatus to the client terminal.

A fifth aspect provides a processing condition calculation method including: acquiring, from a client terminal through a communication apparatus that communicates with the client terminal of a user who uses a processing apparatus, information related to an energy beam of the processing apparatus, information related to a material of a processing target object processed by the processing apparatus, and information related to at least one of a shape of the processing target object before a processing and a shape of the processing target object after the processing; determining a processing condition of the processing apparatus based on the information related to the energy beam of the processing apparatus, the information related to the material of the processing target object processed by the processing apparatus, and the information related to at least one of the shape of the processing target object before the processing and the shape of the processing target object after the processing; and transmitting the determined processing condition to the client terminal through the communication apparatus.

A sixth aspect provides a data generation method of generating control data for controlling a processing apparatus that is configured to perform a subtractive manufacturing on an object by irradiating a surface of the object with a pulse energy beam, the data generation method including: calculating a target number of times which each irradiation target position should be irradiated with the pulse energy beam based on information related to an inclination of the object at each irradiation target position, which is irradiated with the pulse energy beam, with respect to an irradiation direction of the pulse energy beam and a target processing amount for each irradiation target position.

A seventh aspect provides a data generation method of generating control data for controlling a processing apparatus that is configured to perform a subtractive manufacturing on an object by irradiating a surface of the object with a pulse energy beam, the data generation method including: calculating a target number of times which each irradiation target position should be irradiated with the pulse energy beam based on information related to the pulse energy beam on the object at each irradiation target position, which is irradiated with the pulse energy beam, with respect to an irradiation direction of the pulse energy beam and a target processing amount for each irradiation target position.

A eighth aspect provides a data generation method of generating control data for controlling a processing apparatus that is configured to perform a subtractive manufacturing on an object by irradiating a surface of the object with a pulse energy beam, the data generation method including: calculating a target number of times which each irradiation target position, which is irradiated with the pulse energy beam, should be irradiated with the pulse energy beam by performing a deconvolution calculation using information related to the pulse energy beam and target shape information after the subtractive manufacturing.

A ninth aspect provides a computer program that allows a computer to execute the data generation method provided by any one of the first and sixth to eighth aspect.

A tenth aspect provides a recording medium on which the computer program provided by the ninth aspect is recorded.

A eleventh aspect provides a processing apparatus that performs the subtractive manufacturing on the object by using the control data generated by the data generation method provided by any one of the first and sixth to eighth aspect.

Brief Description of Drawings

[FIG. 1] FIG. 1 is a block diagram that illustrates an entire configuration of a processing system in a present example embodiment.

[FIG. 2] FIG. 2 is a perspective view that schematically illustrates an exterior appearance of a processing apparatus in the present example embodiment.

[FIG. 3] FIG. 3 is a system configuration diagram that illustrates a system configuration of the processing apparatus in the present example embodiment.

[FIG. 4] FIG. 4 is a perspective view that illustrates a configuration of an irradiation optical system.

[FIG. 5] Each of FIG. 5A to FIG. 5C is a cross-sectional view that illustrates an aspect of a subtractive manufacturing performed on a workpiece.

[FIG. 6] FIG. 6 illustrates the workpiece before the subtractive manufacturing is performed thereon and the workpiece on which the subtractive manufacturing has been already performed.

[FIG. 7] FIG. 7 illustrates a removal target part W_rmv that should be removed from the workpiece W.

[FIG. 8] FIG. 8 is a cross-sectional view that illustrates a plurality of removal layers that should be removed from the workpiece W.

[FIG. 9] Each of FIG. 9A to FIG. 9D is a plan view that illustrates an area in which the subtractive manufacturing is performed on a surface of the workpiece W in the process of removing each removal layer.

[FIG. 10] Each of FIG. 10A and FIG. 10B is a plan view that illustrates an irradiation target position on the surface of the workpiece.

[FIG. 11] FIG. 11 is a block diagram that illustrates a configuration of a data generation server.

[FIG. 12] FIG. 12 is a flowchart that illustrates a flow of a first data generation operation.

[FIG. 13] FIG. 13 is a cross-sectional view that illustrates a relationship between a target processing amount and a unit processing amount.

[FIG. 14] FIG. 14 is a flowchart that illustrates a flow of a second data generation operation.

[FIG. 15] FIG. 15 is a plan view that illustrates a range in which a fluence of processing light exceeds a lower threshold value of the fluence of the processing light that can remove and process the workpiece in a case where another irradiation target positions in the vicinity of one irradiation target position is irradiated with the processing light EL.

[FIG. 16] FIG. 16 is a cross-sectional view that illustrates the unit processing amount.

[FIG. 17] FIG. 17 is a cross-sectional view that illustrates an angle representing an inclination of the workpiece.

[FIG. 18] FIG. 18A is a cross-sectional view that illustrates the removal target part that should be removed from the workpiece, and FIG. 18B is a graph that illustrates a shape of a cross-section of the workpiece from which the removal target part has been removed.

[FIG. 19] FIG. 19A is a cross-sectional view that illustrates the removal target part that should be removed from the workpiece, and FIG. 19B is a graph that illustrates a shape of a cross-section of the workpiece from which the removal target part has been removed.

[FIG. 20] FIG. 20A is a cross-sectional view that illustrates the removal target part that should be removed from the workpiece, and FIG. 20B is a graph that illustrates a shape of a cross-section of the workpiece from which the removal target part has been removed.

[FIG. 21] FIG. 21 is a cross-sectional view that illustrates the workpiece on which the subtractive manufacturing has been performed.

[FIG. 22] FIG. 22 is a cross-sectional view that illustrates the workpiece on which the subtractive manufacturing has been performed.

[FIG. 23] FIG. 23 is a cross-sectional view that illustrates processing amount distribution data.

[FIG. 24] FIG. 24 is a flowchart that illustrates a flow of an operations for generating the processing amount distribution data.

[FIG. 25] FIG. 25 is a flowchart that illustrates a flow of the operations for generating the processing amount distribution data.

[FIG. 26] FIG. 26 conceptually illustrates the processing amount distribution data generated based on a fluence map and processing amount information.

[FIG. 27] FIG. 27 is a flowchart that illustrates a flow of an operation for generating control data for designating a processing condition that includes a plurality of different types of parameters.

[FIG. 28] FIG. 28 is a plan view that illustrates a plurality of test parts on which the subtractive manufacturing is performed based on a plurality of different processing conditions, respectively.

[FIG. 29] FIG. 29 shows the plurality of different processing conditions.

[FIG. 30] FIG. 30 shows an approximate curved plane that approximates a relationship between an evaluation parameter and the processing condition.

[FIG. 31] FIG. 31 is a plan view that illustrates a plurality of test areas on the workpiece.

[FIG. 32] FIG. 32 is a flowchart that illustrates a flow of an operation for repeating an operation for performing the subtractive manufacturing on the plurality of test parts based on the plurality of different processing conditions, respectively, while changing an aspect of a focus control.

[FIG. 33] FIG. 33 is a block diagram that illustrates a configuration of a data generation server in a fourth modified example.

[FIG. 34] FIG. 34 illustrates one example of a GUI (Graphical User Interface presented to an user.

Example Embodiments

Next, with reference to drawings, an example embodiment of a data generation method, a cloud system, a data generation apparatus, a processing apparatus, a computer program, and a recording medium will be described. In the below described description, the example embodiment of the data generation method, the cloud system, the data generation apparatus, the processing apparatus, the computer program, and the recording medium will be described by using a processing system SYS that is configured to process a workpiece W by using processing light EL. However, the present invention is not limited to the below described embodiment.

Moreover, in the below described description, a positional relationship of various components that constitute the processing system SYS will be described by using an XYZ rectangular coordinate system that is defined by a X-axis, a Y-axis and a Z-axis that are perpendicular to one another. Note that each of an X-axis direction and a Y-axis direction is assumed to be a horizontal direction (namely, a predetermined direction in a horizontal plane) and a Z-axis direction is assumed to be a vertical direction (namely, a direction that is perpendicular to the horizontal plane, and substantially an up-down direction), for the purpose of simple description, in the below described description. Moreover, rotational directions (in other words, inclination directions) around the X-axis, the Y-axis and the Z-axis are referred to as a $\theta X$ direction, a $\theta Y$ direction and a $\theta Z$ direction, respectively. Here, the Z-axis direction may be a gravity direction. An XY plane may be a horizontal direction.

## (1) Entire Configuration of Processing System SYS

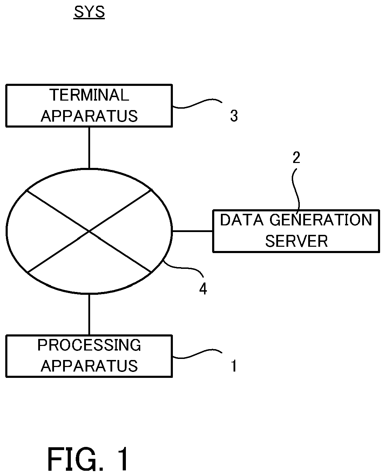

Firstly, with reference to FIG. 1, an entire configuration of the processing system SYS in the present example embodiment will be described. FIG. 1 is a block diagram that illustrates the entire configuration of the processing system SYS in the present example embodiment.

As illustrated in FIG. 1, the processing system SYS includes a processing apparatus 1 and a data generation server 2. Furthermore, the processing system SYS includes a client terminal apparatus 3. However, the processing system SYS may not include the client terminal apparatus 3. The processing apparatus 1, the data generation server 2, and the client terminal apparatus 3 are configured to communicate with one another through a communication network 4 that includes at least one of a wired communication network and a wireless communication network. In this case, the data generation server 2 may serve as a cloud server for the processing apparatus 1 and the client terminal apparatus 3. In a case where the data generation server 2 is configured to serve as the cloud server, the data generation server 2 may be referred to as a cloud system. However, at least one of the processing apparatus 1, the data generation server 2, and the client terminal apparatus 3 may not be configured to communicate with at least another one of the processing apparatus 1, the data generation server 2, and the client terminal apparatus 3.

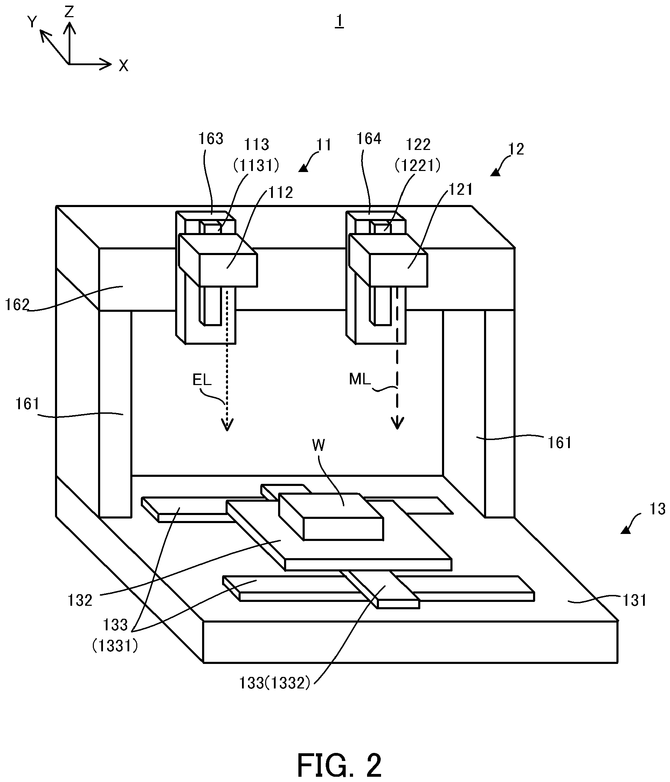

The processing apparatus 1 is configured to process the workpiece W (see FIG. 2) that is an object as a processing target (namely, a processing target object). The workpiece W may be a metal, may be an alloy (for example, a duralumin, and so on), may be a semiconductor (for example, a silicon), may be a resin, may be a composite material such as CFRP(Carbon Fiber Reinforced Plastic), may be a glass, may be a ceramic, or may be an object made of any other material, for example. At least one of a plaster, a rubber such as polyurethane, and an elastomer is one example of any material. Moreover, one part of the workpiece W may be made of one material and another part of the workpiece W may be made of another material.

In the present example embodiment, an example in which the processing apparatus 1 performs a subtractive manufacturing on the workpiece W will be described. Especially, in the present example embodiment, an example in which the processing apparatus 1 performs the subtractive manufacturing by irradiating the workpiece W with processing light EL will be described. However, the processing apparatus 1 may perform a processing that is different from the subtractive manufacturing on the workpiece W. For example, the processing apparatus 1 may perform an additive manufacturing on the workpiece W.

The data generation server 2 is configured to generate control data for controlling the processing apparatus 1. The control data may be any data as long as it is usable to control the processing apparatus 1. For example, the control data may include data that directly or indirectly designates a processing condition of the processing apparatus 1 (namely, data that directly or indirectly designates a detail of an operation of the processing apparatus 1). For example, the control data may include data that may directly control the processing apparatus 1 (for example, command data and so on). For example, the control data may include data that is usable to generate data actually used to control the processing apparatus 1 (for example, slice data and so on described below).

In order to generate the control data, the data generation server 2 may acquire (namely, receive), from at least one of the processing apparatus 1 and the client terminal apparatus 3 through the communication network 4, information that is referred by the data generation server 2 to generate the control data (in the below-described description, it is referred to as "reference information"). The reference information may include information related to the processing light EL used by the processing apparatus 1 to process the workpiece W, for example. The information related to the processing light EL may include at least one of information related to an intensity of the processing light EL, information related to a shape and a light intensity distribution of the processing light EL in a plane intersecting a propagating direction (in other words, an irradiation direction) of the processing light EL, and information related to a fluence and a fluence distribution of the processing light EL. The reference information may include identification information for identifying the processing apparatus 1, for example. The reference information may include information related to a material of the workpiece W processed by the processing apparatus 1, for example. The information related to the material of the workpiece W may include information related to a type of material (for example, a type of metal material) of the workpiece W. The reference information may include information related to a shape of the workpiece W before the processing apparatus 1 performs the subtractive manufacturing thereon, for example. The reference information may include information related to a shape of the workpiece W on which the processing apparatus 1 has already performed the subtractive manufacturing, for example. The reference information may include information (processing quality information) related to a quality of the processing by the processing apparatus 1. The processing quality information may include at least one of information related to a resolution of the processing by the processing apparatus 1, information related to a surface roughness of the workpiece W processed by the processing apparatus 1, and information related to an accuracy of the processing by the processing apparatus 1. The reference information may include information (processing throughput information) related to a throughput of the processing by the processing apparatus 1.

The data generation server 2 may acquire all of the necessary reference information from the client terminal apparatus 3. The data generation server 2 may acquire all of necessary reference information from the processing apparatus 1. The data generation server 2 may acquire a part of the necessary reference information from the client terminal apparatus 3 and may acquire other part of the necessary reference information from the processing apparatus 1. The data generation server 2 may acquire the reference information from the processing apparatus 1 through the client terminal apparatus 3. The data generation server 2 may acquire the reference information from the client terminal apparatus 3 through the processing apparatus 1.

The data generation server 2 may be configured to store the acquired reference information. Incidentally, both of the information related to the processing light EL and the identification information for identifying the processing apparatus 1 are information related to the processing apparatus 1. In this case, the data generation server 2 may be configured to store the information related to the processing light EL and the identification information in a state where the information related to the processing light EL and the identification information are associated with each other. Alternatively, a server (for example, a cloud server) different from the data generation server 2 may acquire the reference information from at least one of the processing apparatus 1 and the client terminal apparatus 3 through the communication network 4 and store the acquired reference information. In this case, the data generation server 2 may acquire the reference information from the cloud server that stores the reference information.

The data generation server 2 may generate the control data based on the acquired reference information. For example, the data generation server 2 may generate the control data by performing a calculation based on the acquired reference information. As one example, the data generation server 2 may determine the processing condition by performing the calculation based on the acquired reference information, and generate the control data for controlling the processing apparatus 1 so that the processing apparatus 1 operates in accordance with the determined processing conditions. A deconvolution calculation is one example of the calculation. Alternatively, for example, in a case where a plurality of candidates for the control data are prepared in advance, the data generation server 2 may select one control data based on the acquired reference information. As one example, the data generation server 2 may select one processing condition from a plurality of candidates for the processing condition prepared in advance based on the acquired reference information, and generate the control data for controlling the processing apparatus 1 so that the processing apparatus 1 operates in accordance with the selected processing condition. Namely, in the present example embodiment, an operation for generating the control data may include at least one of an operation for newly generating the control data by the calculation and an operation for selecting control data prepared in advance.

The data generation server 2 may be installed at a location at which the processing apparatus 1 is installed, or may be installed at a location that is different from the location at which the processing apparatus 1 is installed. The data generation server 2 may be installed at a location at which the client terminal apparatus 3 is installed, or may be installed at a location that is different from the location at which the client terminal apparatus 3 is installed. As one example, the data generation server 2 may be installed at a business location that is different from a business location at which at least one of the processing apparatus 1 and the client terminal apparatus 3 is installed. As another example, the data generation server 2 may be installed in a country that is different from a country in which at least one of the processing apparatus 1 and the client terminal apparatus 3 is installed.

The client terminal apparatus 3 is a terminal apparatus that is usable by a user of the processing apparatus 1. The client terminal apparatus 3 may include at least one of a personal computer, a smart phone, and a tablet terminal, for example.

## (2) Processing Apparatus 1

Next, the processing apparatus 1 of the processing system SYS will be described.

### (2-1) Configuration of Processing Apparatus 1

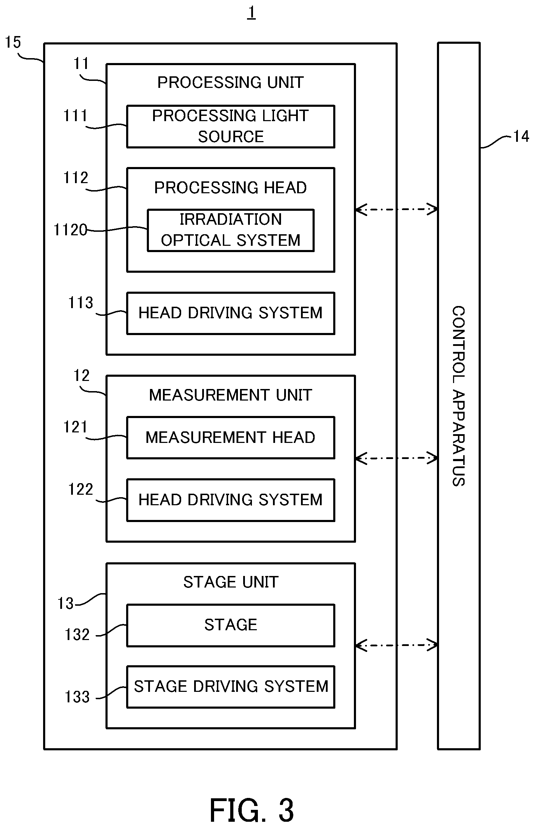

Firstly, with reference to FIG. 2 and FIG. 3, a configuration of the processing apparatus 1 will be described. FIG. 2 is a perspective view that illustrates an exterior appearance of the processing apparatus 1. FIG. 3 is a system configuration diagram that illustrates a system configuration of the processing apparatus 1.

As illustrated in FIG. 2 and FIG. 3, the processing apparatus 1 includes a processing unit 11, a measurement unit 12, a stage unit 13 and a control apparatus 14. The processing unit 11, the measurement unit 12 and the stage unit 13 are contained in a housing 15. However, the processing unit 11, the measurement unit 12 and the stage unit 13 may not be contained in the housing 15. The processing apparatus 1 may not include the housing 15 in which the processing unit 11, the measurement unit 12 and the stage unit 13 are contained.

The processing unit 11 is configured to perform the subtractive manufacturing on the workpiece W by irradiating the workpiece W with the processing light EL under the control of the control apparatus 14. In order to perform the subtractive manufacturing on the workpiece W, the processing unit 11 includes a processing light source 111, a processing head 112, and a head driving system 113.

The processing light source 111 is configured to emit, as the processing light EL, at least one of infrared light, visible light, ultraviolet light and Extreme ultraviolet light under the control of the control apparatus 14, for example. However, another type of light may be used as the processing light EL. The processing light EL may include pulsed light (namely, a plurality of pulsed beams). Incidentally, the pulsed light may be referred to as a pulsed energy beam, because the light is one example of an energy beam. In this case, the processing light source 111 may emit, as the processing light EL, the pulsed light whose pulse width is on an order of femtoseconds, picoseconds, or nanoseconds. However, the processing light EL may not include the pulsed light. For example, the processing light EL may be continuous light. The processing light EL may be a laser light. In this case, the processing light source 111 may include a laser light source (for example, a semiconductor laser such as a Laser Diode (LD)). The laser light source may include at least one of a fiber laser, a $CO_2$ laser, a YAG laser, an Excimer laser and the like. However, the processing light EL may not be the laser light. The processing light source 111 may include any light source (for example, at least one of a LED (Light Emitting Diode), a discharge lamp and the like).

The processing head 112 processes the workpiece W by irradiating the workpiece W with the processing light EL emitted from the processing light source 111 under the control of the control apparatus 14. The processing head 112 performs the subtractive manufacturing on the workpiece W placed on a below-described stage 132. Namely, the subtractive manufacturing is performed on the stage 132. In this case, the processing head 112 may be disposed above the stage 132 on which the workpiece W is placed. For example, the processing head 112 may be attached to a gate-shaped support frame 16 disposed on a surface plate 131 of the stage unit 13. The support frame 16 may include a pair of leg members 161 projecting along the Z-axis direction from the surface plate 131 and a beam member 162 connecting the pair of leg members 161 through upper ends of the leg members 161. The beam member 162 may be disposed above the stage 132. The processing head 112 may be attached to the beam member 162. Incidentally, in an example illustrated in FIG. 2, the processing head 112 is attached to the beam member 162 through the below-described head driving system 113. In a case where the processing head 112 is disposed above the stage 132, the processing head 112 may irradiate the workpiece W with the processing light EL by emitting the processing light EL downwardly from the processing head 112. Namely, the processing head 112 may irradiate the workpiece W with the processing light EL propagating along the Z-axis direction by emitting the processing light EL propagating along the Z-axis direction.

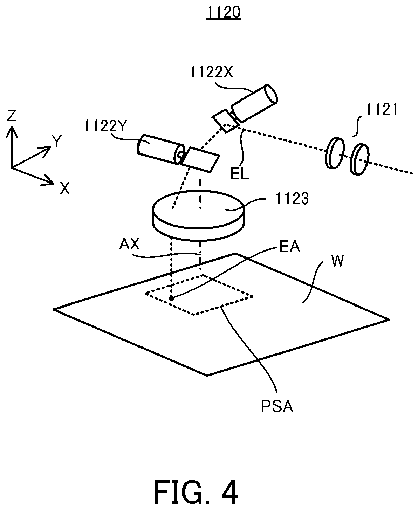

In order to irradiate the workpiece W with the processing light EL, the processing head 112 includes an irradiation optical system 1120. Here, with reference to FIG. 4, the irradiation optical system 1120 will be described. FIG. 4 is a perspective view that illustrates a configuration of the irradiation optical system 1120.

As illustrated in FIG. 4, the irradiation optical system 1120 may include a focus changing optical system 1121, a Galvano mirror 1122, and an fθ lens 1123, for example.

The focus changing optical system 1121 is an optical component that is configured to change a light concentration position of the processing light EL (namely, a converged position of the processing light EL) along the propagating direction of the processing light EL. The focus changing optical system 1121 may include a plurality of lenses aligned along the propagating direction of the processing light EL, for example. In this case, the light concentration position of the processing light EL may be changed by moving at least one of the plurality of lenses along its optical axis direction.

The processing light EL that has passed through the focus changing optical system 1121 enters the Galvano mirror 1122. The Galvano mirror 1122 changes an emission direction of the processing light EL from the Galvano mirror 1122 by deflecting the processing light EL (namely, changing an emission angle of the processing light EL). When the emission direction of the processing light EL from the Galvano mirror 1122 is changed, a position from which the processing light EL is emitted from the processing head 112 is changed. When the position from which the processing light EL is emitted from the processing head 112 is changed, a position of a target irradiation area EA that is irradiated with the processing light EL on the surface of the workpiece W is changed.

The Galvano mirror 1122 includes a X sweeping mirror 1122X and a Y sweeping mirror 1122Y, for example. Each of the X sweeping mirror 1122X and the Y sweeping mirror 1122Y is a tilt angle variable mirror an angle of which is variable relative to an optical path of the processing light EL entering each mirror. The X sweeping mirror 1122X reflects the processing light EL to the Y sweeping mirror 1122Y. The X sweeping mirror 1122X is configured to swing or rotate around a rotational axis along the Y axis direction. Due to the swing or the rotation of the X sweeping mirror 1122X, the surface of the workpiece W is swept with the processing light EL along the X axis direction. Due to the swing or the rotation of the X sweeping mirror 1122X, the target irradiation area EA moves on the surface of the workpiece W along the X axis direction. The Y sweeping mirror 1122Y reflects the processing light EL to the fθ lens 1123. The Y sweeping mirror 1122Y is configured to swing or rotate around a rotational axis along the X axis. Due to the swing or the rotation of the Y sweeping mirror 1122Y, the surface of the workpiece W is swept with the processing light EL along the Y axis direction. Due to the swing or the rotation of the Y sweeping mirror 1122X, the target irradiation area EA moves on the surface of the workpiece W along the Y axis direction. Incidentally, the Galvano mirror 1122 may move an irradiation position of the processing light EL with which the surface of the workpiece W is irradiated.

The Galvano mirror 1122 allows a processing area PSA defined with respect to the processing head 112 to be swept with the processing light EL. Namely, the Galvano mirror 1122 allows the target irradiation area EA to move in the processing area PSA defined with respect to the processing head 112. Note that the processing area PSA indicates an area (in other words, a range) in which the subtractive manufacturing is performed by the processing head 112 in a state where a positional relationship between the processing head 112 and the workpiece W is fixed (namely, is not changed). Typically, the processing area PSA is set to be an area that is same as or narrower than a swept range of the processing light EL that is deflected by the Galvano mirror 1122 in a state where the positional relationship between the processing head 112 and the workpiece W is fixed. Furthermore, the processing area PSA (the target irradiation area EA) is movable relative on the surface of the workpiece W by the below-described head driving system 113 moving the processing head 112 and or a below-described stage driving system 133 moving the stage 132. Incidentally, depending on a height of the surface of the workpiece W, the processing head 112 may be moved in the Z-axis direction (in a direction intersecting the surface of the workpiece W) by the head driving system 113, the stage 132 may be moved in the Z-axis direction by the stage driving system 133, and the light concentration position may be changed by using the focus changing optical system 1121. At least two methods of these three methods may be used together.

The fθ lens 1123 is an optical system for emitting the processing light EL from the Galvano mirror 1122 toward the workpiece W. Especially, the fθ lens 1123 is an optical element that is configured to condense the processing light EL from the Galvano mirror 1122 on a condensing plane. Therefore, the fθ lens 1123 may be referred to as a condensing optical system or an objective optical system. The condensing plane of the fθ lens 1123 may be set on the surface of the workpiece W, for example. The condensing plane of the fθ lens 1123 may be set on a plane that is away from the surface of the workpiece W along a direction along an optical axis AX of the fθ lens 1123. Incidentally, the condensing plane of the fθ lens 1123 may be set on a plane including a rear focal point position of the fθ lens 1123. In this case, the Galvano mirror 1122 may be disposed at a front focal point position of the fθ lens 1123 (in a case where the Galvano mirror 1122 includes the plurality of sweeping mirrors (the X sweeping mirror 1122X and the Y sweeping mirror 1122Y), the front focal point position of the fθ lens 1123 may be set between the plurality of sweeping mirrors.

Again in FIG. 2 and FIG. 3, the head driving system 113 moves the processing head 112, and thus the irradiation optical system 1120, along at least one of the X-axis direction, the Y-axis direction, the Z-axis direction, the θX direction, the θY direction, and the θZ direction under control of the control apparatus 14. Therefore, the head driving system 113 may be referred to as a movement apparatus. FIG. 2 illustrates an example in which the head driving system 113 moves the processing head 112 along the Z-axis direction. In this case, the head driving system 113 may include a Z slide member 1131 extending along the Z-axis direction, for example. The Z slide member 1131 is disposed at the support frame 16 that is disposed on the surface plate 131 through a vibration isolator. The Z slide member 1131 is disposed at the beam member 162 through a support member 163 that extends along the Z-axis direction, for example. The processing head 112 is connected to the Z slide member 1131 so as to be movable along the Z slide member 1131.

When the processing head 112 moves, a positional relationship between the processing head 112 and the below-described stage 132 changes. Furthermore, when the processing head 112 moves, a positional relationship between the processing head 112 and the workpiece W placed on the stage 132 changes. Therefore, moving the processing head 112 may be considered to be equivalent to changing the positional relationship between the processing head 112 and each of the stage 132 and the workpiece W. Moreover, when the processing head 112 moves, the target irradiation area EA and the processing area PSA, which are irradiated with the processing light EL on the surface of the workpiece W, move relative to the surface of the workpiece W.

The measurement unit 12 is configured to measure a measurement target object under the control of the control apparatus 14. In order to measure the measurement target object, the measurement unit 12 includes a measurement head 121 and a head driving system 122.

The measurement head 121 is capable of measuring (in other words, is capable of measuring) the measurement target object under the control of the control apparatus 14. Specifically, the measurement head 121 is configured to measure any characteristic of the measurement target object. A position of the measurement target object is one example of the characteristic of the measurement target object. A shape (for example, a two-dimensional shape or a three-dimensional shape) of the measurement target object is another example of the characteristic of the measurement target object. At least one of a reflectance of the measurement target object, a transmittance of the measurement target object, and a surface roughness of the measurement target object is another example of the characteristic of the measurement target obj ect.

The measurement target object may include the workpiece W. Specifically, the measurement target object may include at least one of the workpiece W before the processing unit 11 performs the subtractive manufacturing thereon, the workpiece W that is in the process of the subtractive manufacturing performed by the processing unit 11, and the workpiece W on which the processing unit 11 has already performed the subtractive manufacturing. The measuring object may include the stage 132 on which the workpiece W may be placed.

The measurement head 121 may measure the measurement target object by using any measurement method. For example, the measurement head 121 may measure the measurement target object optically, electrically, magnetically, physically, chemically or thermally. The measurement head 121 may measure the measurement target object without contacting the measurement target object. The measurement head 121 may measure the measurement target object by contacting the measurement target object. In the present example embodiment, an example in which the measurement head 121 optically measures the measurement target object by irradiating the measurement target object with measurement light ML without contacting the measurement target object. For example, the measurement head 121 may measure the measurement target object by using a light section method that projects the measurement light ML, which is a slit light, on the surface of the measurement target object and measures a shape of the projected slit light. For example, the measurement head 121 may measure the measurement target object by using a white light interference method that measures an interference pattern of the measurement light ML, which is a white light through the measurement target object, and a white light not through the measurement target object. For example, the measurement head 121 measure the measurement target object by using at least one of a pattern projection method that projects the measurement light ML, which forms a light pattern on the surface of the measurement target object, and measures a shape of the projected pattern, and a time of flight method that performs an operation, which emits the measurement light ML to the surface of the measurement target object and measures a distance to the measurement target object based on an elapsed time until the emitted light returns, at plurality of positions on the measurement target object. The measurement head 121 measure the measurement target object by using at least one of a moiré topography method ( specifically, a grid irradiation method or a grid projection method), a holography interference method, an auto collimation method, a stereo method, an astigmatism method, a critical angle method, a knife edge method, an interference measurement method and a confocal method.

The measurement head 121 may be disposed above the stage 132 on which the workpiece W is placed. Specifically, the measurement head 121 may be attached to the beam member 162 in the same manner as the processing head 112. In the example illustrated in FIG. 2, the measurement head 121 is attached to the beam member 162 through the head driving system 122. In a case where the measurement head 121 is disposed above the stage 132, the measurement head 121 may measure the workpiece W above the workpiece W. The measurement head 121 may measure the stage 132 above the stage 132. In a case where the measurement head 121 is disposed above the stage 132, the measurement head 121 may irradiate the workpiece W with the measurement light ML by emitting the measurement light ML downwardly from the measurement head 121. Namely, the measurement head 121 may irradiate the workpiece W with the measurement light ML propagating along the Z-axis direction by emitting the measurement light ML propagating along the Z-axis direction.

The measurement head 121 may include a plurality of measurement devices, each of which is configured to measure the measurement target object. The plurality of measurement devices may include at least two measurement devices whose measurement resolutions are different from each other (in other words, whose measurement accuracies are different from each other). The plurality of measurement devices may include at least two measurement devices whose sizes of measurement areas are different from each other.

The head driving system 122 moves the measurement head 121 along at least one of the X-axis direction, the Y-axis direction, the Z-axis direction, the θX direction, the θY direction, and the θZ direction under the control of the control apparatus 14. Therefore, the head driving system 122 may be referred to as a movement apparatus. FIG. 2 illustrates an example in which the head driving system 122 moves the measurement head 121 along the Z-axis direction. In this case, the head driving system 122 may include a Z slide member 1221 extending along the Z-axis direction, for example. The Z slide member 1221 is disposed at the support frame 16 that is disposed on the surface plate 131 through the vibration isolator. The Z slide member 1221 is disposed at the beam member 162 through a support member 164 that extends along the Z-axis direction, for example. The measurement head 121 is connected to the Z slide member 1221 so as to be movable along the Z slide member 1221.

When the measurement head 121 moves, a positional relationship between the measurement head 121 and the below-described stage 132 changes. Furthermore, when the measurement head 121 moves, a positional relationship between the measurement head 121 and the workpiece W placed on the stage 132 changes. Therefore, moving the measurement head 121 may be considered to be equivalent to changing the positional relationship between the measurement head 121 and each of the stage 132 and the workpiece W.

The stage unit 13 includes the surface plate 131, the stage 132, and the stage driving system 133.

The surface plate 131 is disposed on a bottom surface of the housing 15 (alternatively, a support surface such as a floor surface on which the housing 15 is placed). The stage 132 is placed on the surface plate 131. The non-illustrated vibration isolator that reduces a transmission of vibration from the surface plate 131 to the stage 132 may be disposed between the surface plate 131 and the bottom surface of the housing 15 or the support surface such as the floor surface on which the housing 15 is placed. Moreover, the above-described support frame 16 may be disposed on the surface plate 131. Incidentally, a leg member may be provided between the surface plate 131 and the bottom surface of the housing 15 (alternatively, the support surface such as the floor surface on which the housing 15 is placed). In this case, a vibration isolator may be disposed between the leg member and the surface plate 131 and / or between the leg members and the bottom surface (alternatively, the support surface).

The stage 132 is a placing apparatus on which the workpiece W is placed. The stage 132 may be configured to hold the workpiece W placed on the stage 132. Alternatively, the stage 132 may not be configured to hold the workpiece W placed on the stage 132. In this case, the workpiece W may be placed on the stage 132 without a clamp. In a case where the stage 132 is configured to hold the workpiece W, the stage 132 may include at least one of a mechanical chuck, an electrostatic chuck and a vacuum suction chuck to hold the workpiece W.

The stage driving system 133 moves the stage 132 under the control of the control apparatus 14. For example, the stage driving system 133 may move the stage 132 along at least one of the X-axis direction, the Y-axis direction, the Z-axis direction, the θX direction, the θY direction, and the θZ direction under the control of the control apparatus 14. Incidentally, the stage driving system 133 may be referred to as a movement apparatus.

In the example illustrated in FIG. 2, the stage driving system 133 moves the stage 132 along each of the X-axis and the Y-axis. Namely, in the example illustrated in FIG. 2, the stage driving system 133 moves the stage 132 along a direction that is along the XY plane intersecting the propagating direction of each of the processing light EL and the measurement light MI,. In this case, the stage driving system 133 may include an X slide member 1331 extending along the X-axis direction (in the example illustrated in FIG. 2, two X slide members 1331 disposed to be parallel to each other) and a Y slide member 1332 extending along the Y-axis direction (in the example illustrated in FIG. 2, one Y slide member 1332), for example. The two X slide members 1331 are disposed on the surface plate 131 so as to be aligned along the Y-axis direction. The Y slide member 1332 is connected to the two X slide members 1331 so as to be movable along the two X slide members 1331. The stage 132 is connected to the Y slide member 1332 so as to be movable along the Y slide member 1332. Incidentally, there are the plurality of X slide members 1331 in the example illustrated in FIG. 2, however, there may be only one X slide member 1331. Moreover, the stage 132 may be supported to float on the surface plate 131 by an air bearing.

When the stage driving system 133 moves the stage 132, the positional relationship between each of the processing head 112 and measurement head 121 and each of the stage 132 and the workpiece W changes. Therefore, the stage driving system 133 may be considered to be configured to serve as a position change apparatus configured to change the positional relationship between each of the processing head 112 and the measurement head 121 and each of the stage 132 and the workpiece W. Furthermore, when the stage driving system 133 moves the stage 132, each of the stage 132 and the workpiece W moves relative to each of the processing area PSA in which the processing head 112 performs the subtractive manufacturing and the measurement area in which the measurement head 121 performs the measurement.

The control apparatus 14 controls the operation of the processing apparatus 1. For example, the control apparatus 14 may generate processing control information for processing the workpiece W, and control the processing unit 11 and the stage unit 13 based on the processing control information so that the workpiece W is processed in accordance with the generated processing control information. Namely, the control apparatus 14 may control the processing of the workpiece W. For example, the control apparatus 14 may generate measurement control information for measuring the measurement target object, and control the processing unit 11 and the stage unit 13 based on the measurement control information so that the measurement target object is measured in accordance with the generated measurement control information. Namely, the control apparatus 14 may control the measurement of the measurement target object.

The control apparatus 14 may generate at least one of the processing control information and the measurement control information based on the control data generated by the data generation server 2. In this case, the control apparatus 14 may acquire the control data from the data generation server 2 through the communication network 4. Alternatively, the control apparatus 14 may acquire the control data from the client terminal apparatus 3 that has acquired the control data from the data generation server 2 through the communication network 4.

The control apparatus 14 may include a calculation apparatus and a storage apparatus. The calculation apparatus may include at least one of a CPU (Central Processing Unit) and a GPU (Graphic Processing Unit), for example. The control apparatus 14 serves as an apparatus for controlling the operation of the processing apparatus by means of the calculation apparatus executing a computer program. The computer program is a computer program that allows the calculation apparatus to execute (namely, to perform) a below-described operation that should be executed by the control apparatus 14. Namely, the computer program is a computer program that allows the control apparatus 14 to function so as to make the processing apparatus 1 perform the below-described operation. The computer program executed by the calculation apparatus may be recorded in the storage apparatus (namely, a recording medium) of the control apparatus 14, or may be recorded in any recording medium (for example, a hard disk or a semiconductor memory) that is built in the control apparatus 14 or that is attachable to the control apparatus 14. Alternatively, the calculation apparatus may download the computer program that should be executed from an apparatus disposed at the outside of the control apparatus 14 through a network interface.

The control apparatus 14 may not be disposed in the processing apparatus 1. For example, the control apparatus 14 may be disposed at the outside of the processing apparatus 1 as a server or the like. For example, the control apparatus 14 may be disposed as a computer (for example, a laptop computer) that is connectable to the processing apparatus 1. For example, the control apparatus 14 may be disposed as a computer (for example, a laptop computer) that is disposed in the vicinity of the processing apparatus 1. In this case, the control apparatus 14 may be connected to the processing apparatus 1 through a wired and / or wireless network (alternatively, a data bus and / or a communication line). A network using a serial-bus-type interface such as at least one of IEEE1394, RS-232x, RS-422, RS-423, RS-485 and USB may be used as the wired network. A network using a parallel-bus-type interface may be used as the wired network. A network using an interface that is compatible to Ethernet such as at least one of 10-BASE-T, 100BASE-TX or 1000B ASE-T may be used as the wired network. A network using an electrical wave may be used as the wireless network. A network that is compatible to IEEE802.1x (for example, at least one of a wireless LAN and Bluetooth (registered trademark)) is one example of the network using the electrical wave. A network using an infrared ray may be used as the wireless network. A network using an optical communication may be used as the wireless network. In this case, the control apparatus 14 and the processing apparatus 1 may be configured to transmit and receive various information through the network. Moreover, the control apparatus 14 may be configured to transmit information such as a command and a control parameter to the processing apparatus 1 through the network. The processing apparatus 1 may include a reception apparatus that is configured to receive the information such as the command and the control parameter from the control apparatus 14 through the network. Alternatively, a first control apparatus that is configured to perform a part of the processing performed by the control apparatus 14 may be disposed in the processing apparatus 1 and a second control apparatus that is configured to perform another part of the processing performed by the control apparatus 14 may be disposed at an outside of the processing apparatus 1.

The control apparatus 14 may be configured to serve as the client terminal apparatus 3. For example, a certain computer may be used as the control apparatus 14 and may be used as the client terminal apparatus 3. Namely, the control apparatus 14 and the client terminal apparatus 3 may be an integrated apparatus (alternatively, an integrated system). However, typically, two different computers may be used as the control apparatus 14 and the client terminal apparatus 3, respectively.

An arithmetic model that is buildable by machine learning may be implemented in the control apparatus 14 by the calculation apparatus executing the computer program. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The control apparatus 14 may control the operation of the processing apparatus 1 by using the arithmetic model. Namely, the operation for controlling the operation of the processing apparatus 1 may include an operation for controlling the operation of the processing apparatus 1 by using the arithmetic model. Note that the arithmetic model that has been built by off-line machine learning using training data may be implemented in the control apparatus 14. Moreover, the arithmetic model implemented in the control apparatus 14 may be updated by online machine learning on the control apparatus 14. Alternatively, the control apparatus 14 may control the operation of the processing apparatus 1 by using the arithmetic model implemented in an apparatus external to the control apparatus 14 (namely, an apparatus external to the processing apparatus 1), in addition to or instead of the arithmetic model implemented on the control apparatus 14.

Note that at least one of an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program may be used as the recording medium recording therein the computer program that should be executed by the control apparatus 14. Moreover, the recording medium may include a device that is configured to record the computer program (for example, a device for a universal use or a device for an exclusive use in which the computer program is embedded to be executable in a form of at least one of a software, a firmware and the like). Moreover, various arithmetic processing or functions included in the computer program may be realized by a logical processing block that is realized in the control apparatus 14 by means of the control apparatus 14 (namely, a computer) executing the computer program, may be realized by a hardware such as a predetermined gate array (a FPGA, an ASIC) of the control apparatus 14, or may be realized in a form in which the logical process block and a partial hardware module that realizes an partial element of the hardware are combined.

## (2-2) Subtractive manufacturing performed by Processing Apparatus 1

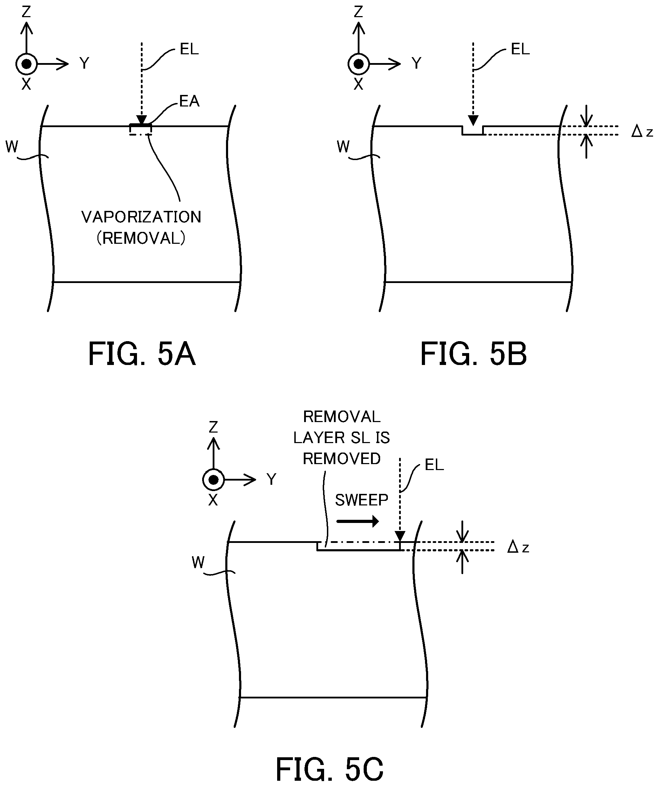

Next, with reference to FIG. 5A to FIG. 5C, one example of the subtractive manufacturing using the processing light EL will be described. Each of FIG. 5A to FIG. 5C is a cross-sectional view that illustrates an aspect of the subtractive manufacturing performed on the workpiece W.

As illustrated in FIG. 5A, the processing apparatus 1 irradiates the target irradiation area EA set (in other words, formed) on the surface of the workpiece W with the processing light EL. When the target irradiation area EA is irradiated with the processing light EL, an energy of the processing light EL is transmitted to the target irradiation area EA and a part that is in vicinity of the target irradiation area EA of the workpiece W. When a heat caused by the energy of the processing light EL is transmitted, a material constituting the target irradiation area EA and a part that is in vicinity of the target irradiation area EA of the workpiece W is melted due to the heat caused by the energy of the processing light EL. The melted material spatters as liquid drop. Alternatively, the melted material evaporates due to the heat caused by the energy of the processing light EL. As a result, the target irradiation area EA and a part that is in vicinity of the target irradiation area EA of the workpiece W is removed. Namely, as illustrated in FIG. 5B, a concave part (in other words, a groove part), whose depth corresponds to a standard processing amount $\Delta z$ due to the processing light EL, is formed at the surface of the workpiece W. Here, the standard processing amount $\Delta z$ may be a depth by which the workpiece W is removed by irradiating the workpiece W with the processing light for a unit number of pulses in a case where the processing light EL is the pulsed light. Here, the unit number of pulses may be one or a number that is more than one. Moreover, since the standard processing amount $\Delta z$ is an amount processed by the irradiation of the processing light EL for the unit number of pulses, this may be referred to as a unit processing amount. In this case, it can be said that the processing apparatus 1 performs the subtractive manufacturing on the workpiece W by using a principle of what we call a thermal processing. Incidentally, in a case where the thermal processing is performed, the processing light EL may include the pulsed light an ON time of which is equal to or longer than milli-seconds or the continuous light. Incidentally, in a case where the processing light EL is the continuous light, the standard processing amount $\Delta z$ may be a processed amount (a removed depth) of the workpiece W by irradiating the workpiece W with the processing light EL having a unit energy for a unit time.

On the other hand, the processing apparatus 1 may process the workpiece W by using a principle of non-thermal processing (for example, an ablation processing) depending on a characteristic of the processing light EL. Namely, the processing apparatus 1 may perform the non-thermal processing (for example, the ablation processing) on the workpiece W. For example, in a case where the light whose photon density (in other words, fluence) is high is used as the processing light EL, the material constituting the target irradiation area EA and a part that is in vicinity of the target irradiation area EA of the workpiece W instantly evaporates and spatters. Namely, the material constituting the target irradiation area EA and a part that is in vicinity of the target irradiation area EA of the workpiece W evaporates and spatters within a time sufficiently shorter than a thermal diffusion time of the workpiece W. In this case, the material constituting the target irradiation area EA and a part that is in vicinity of the target irradiation area EA of the workpiece W may be released from the workpiece W as at least one of ion, atom, radical, molecule, cluster and solid piece. Incidentally in a case where the non-thermal processing is performed, the processing light EL may include the pulsed light the ON time of which is equal to or shorter than pico-seconds (alternatively, is equal to or shorter than nano-seconds or femto-seconds, in some case). In a case where the pulsed light the ON time of which is equal to or shorter than pico-seconds (alternatively, is equal to or shorter than nano-seconds or femto-seconds, in some case) is used as the processing light EL, the material constituting the target irradiation area EA and a part that is in vicinity of the target irradiation area EA of the workpiece W may sublimate without going through a molten state. Therefore, it is possible to process the workpiece W while reducing an effect of the heat caused by the energy of the processing light EL on the workpiece W as much as possible.

The processing apparatus 1 moves the target irradiation area EA on the surface of the workpiece W by using the above-described Galvano mirror 1122. Namely, the processing apparatus 1 scans the surface of the workpiece W with the processing light EL. As a result, as illustrated in FIG. 4C, the surface of the workpiece W is removed at least partially along a scanning trajectory of the processing light EL (namely, a movement trajectory of the target irradiation area EA). Therefore, the processing apparatus 1 may appropriately remove a part of the workpiece W on which the subtractive manufacturing should be performed by scanning the surface of the workpiece W with the processing light EL along a desired scanning trajectory corresponding to an area on which the subtractive manufacturing should be performed. The processing apparatus 1 may appropriately remove the part of the workpiece W on which the subtractive manufacturing should be performed by scanning the surface of the workpiece W with the processing light EL along the desired scanning trajectory corresponding to the area on which the subtractive manufacturing should be performed. The processing apparatus 1 may appropriately remove a removal layer SL, which has a thickness corresponding to the standard processing amount $\Delta z$ and is the part on which the subtractive manufacturing should be performed, from the workpiece W by scanning the surface of the workpiece W with the processing light EL along a desired scanning trajectory corresponding to the area on which the subtractive manufacturing should be performed.

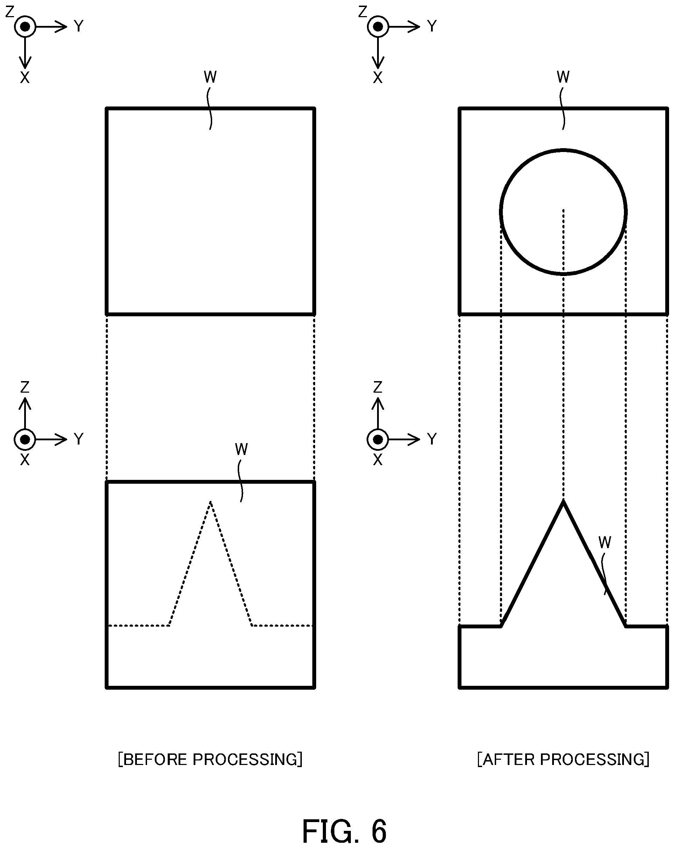

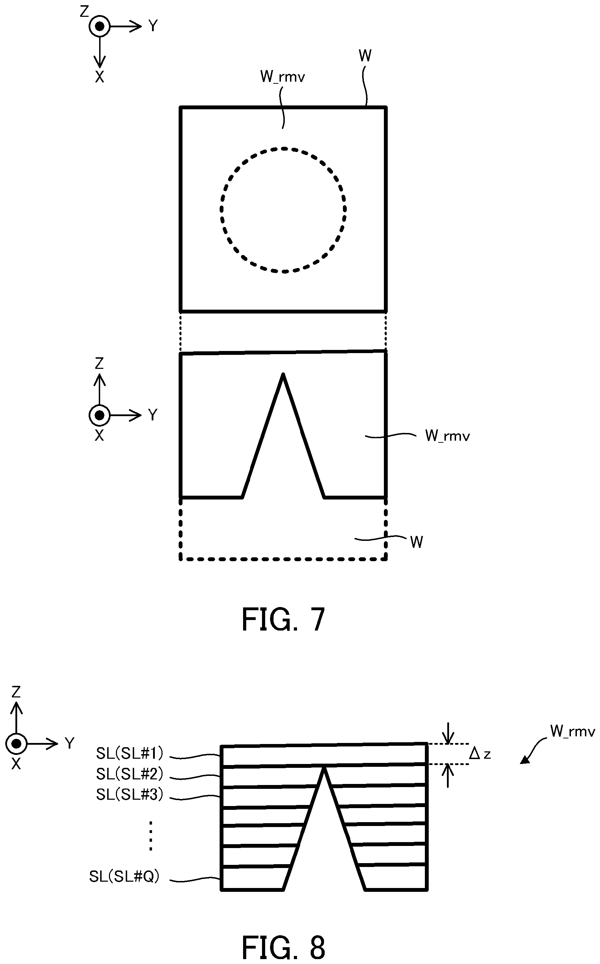

The processing apparatus 1 may process the workpiece W so that the shape of the workpiece W becomes a desired shape by repeating an operation for removing the removal layer SL having the thickness corresponding to the standard processing amount $\Delta z$. In the below-described description, for convenience of description, an example in which the workpiece W is processed so that the shape of the workpiece W, which had a cuboid shape illustrated on a left side in FIG. 6, becomes the shape in which a cone protrudes from a plate-like member illustrated on a right side in FIG. 6 will be described. In this case, the processing apparatus 1 performs, on the workpiece W, the subtractive manufacturing for removing the removal target part W_rmv that should be removed from the workpiece W, as illustrated in FIG. 7.

Incidentally, FIG. 6 illustrates an example in which the surface of the workpiece W (especially the surface of the workpiece W on which the subtractive manufacturing is performed) before the subtractive manufacturing is performed thereon is a surface along the XY plane. However, the surface of the workpiece W (especially the surface of the workpiece W on which the subtractive manufacturing is performed) may include a surface inclined with respect to the XY plane. The surface of the workpiece W (especially the surface of the workpiece W on which the subtractive manufacturing is performed) may include a curved surface.

In order to perform the subtractive manufacturing for removing the removal target part W_rmv, the processing apparatus 1 removes a plurality of removal layers SL, which are obtained by slicing the removal target part W_rmv along the Z-axis direction, in sequence, as illustrated in FIG. 8. Each removal layer SL may be considered to correspond to a removed part that is removed by the scan of the processing light EL performed in a state where a positional relationship between the workpiece W and the processing head 112 in the Z-axis direction (especially, a positional relationship between the workpiece W and the light concentration position of the processing light EL) is fixed. In this case, the processing apparatus 1 firstly performs the removal process for removing the uppermost removal layer SL#1 from the workpiece W. Then, the processing apparatus 1 moves the stage 132 and / or the processing head 112 so that the processing head 112 is closer to the workpiece W by a distance corresponding to the standard processing amount $\Delta z$. Alternatively, the processing apparatus 1 controls the irradiation optical system 1120 (especially the focus changing optical system 1121) so that the light concentration position of the processing light EL is closer to the workpiece W by the distance corresponding to the standard processing amount $\Delta z$. Then, the processing apparatus 1 performs the subtractive manufacturing for removing the second removal layer SL#2 from the workpiece W from which the first removal layer SL#1 has been removed. Then, the processing apparatus 1 repeats the same operation until all of the removal layers SL (for example, in the example illustrated in FIG. 8, Q (wherein, Q is a constant representing an integer that is equal to or larger than 2) removal layers SL#1 to SL#Q) are removed. As a result, the shape of the workpiece W, which had the cuboid shape illustrated on the left side in FIG. 6, becomes the shape in which the cone protrudes from the plate-like member illustrated on the right side in FIG. 6.

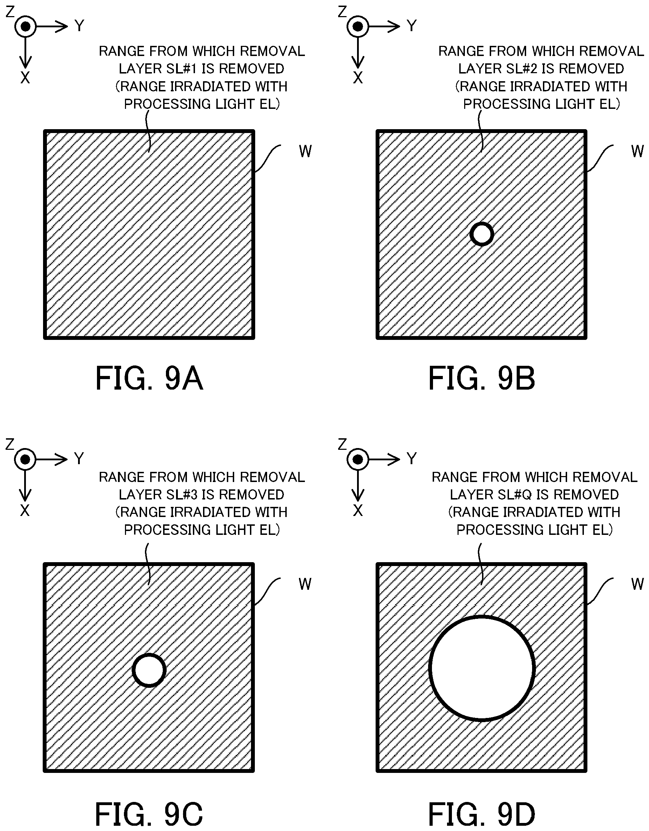

The processing apparatus 1 may remove the plurality of removal layers SL in sequence based on slice data indicating an area on which the subtractive manufacturing is performed on the surface of the workpiece W in the process of removing each removal layer SL. Note that the slice data may be one example of the processing control information for processing the workpiece W. For example, the processing apparatus 1 may remove the removal layer SL#1 by irradiating an area indicated by first slice data on the surface of the workpiece W with the processing light EL based on the first slice data (see FIG. 9A) indicating an area on which the subtractive manufacturing is performed on the surface of the workpiece W in the process of removing the removal layer SL#1. Then, the processing apparatus 1 may remove the removal layer SL#2 by irradiating an area indicated by second slice data on the surface of the workpiece W with the processing light EL based on the second slice data (see FIG. 9B) indicating an area on which the subtractive manufacturing is performed on the surface of the workpiece W in the process of removing the removal layer SL#2. Then, the processing apparatus 1 may remove the removal layer SL#3 by irradiating an area indicated by third slice data on the surface of the workpiece W with the processing light EL based on the third slice data (see FIG. 9C) indicating an area on which the subtractive manufacturing is performed on the surface of the workpiece W in the process of removing the removal layer SL#3. Then, the processing apparatus 1 repeats the same operation. Finally, the processing apparatus 1 may remove the removal layer SL#Q by irradiating an area indicated by Q-th slice data on the surface of the workpiece W with the processing light EL based on the Q-th slice data (see FIG. 9D) indicating an area on which the subtractive manufacturing is performed on the surface of the workpiece W in the process of removing the removal layer SL#Q. Incidentally, in each of FIG. 9A to FIG. 9D, the area on which the subtractive manufacturing is performed (namely, an area that is irradiated with the processing light EL) on the surface of the workpiece W is indicated by hatching.

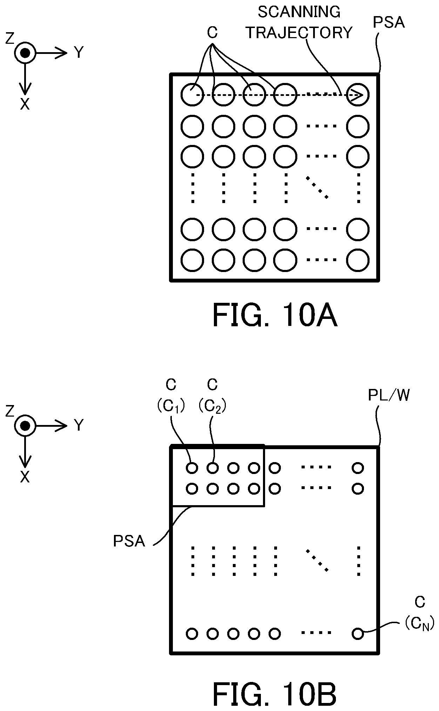

The processing apparatus 1 scans the processing area PSA set on the surface of the workpiece W with the processing light EL along the XY plane. In this case, as illustrated in FIG. 10A, irradiation target positions C that may be irradiated with the processing light EL may be considered to be set in the processing area PSA, wherein the number of the irradiation target positions C is based on a scanning speed of the processing light EL and a pulse frequency of the processing light EL. Furthermore, the processing apparatus 1 moves the processing area PSA along the XY plane on the surface of the workpiece W by moving at least one of the processing head 112 and the stage 132. Therefore, as illustrated in FIG. 10B, the irradiation target positions C that may be irradiated with the processing light EL may be considered to be set in a processing surface PL (typically, a surface along the XY plane), which is along a scanning direction of the processing light EL in the processing area PSA and a movement direction of the processing area PSA and in which the processing apparatus 1 performs the subtractive manufacturing, in the process of removing each removal layer SL, wherein the number of the irradiation target positions C is based on the number of the irradiation target positions C set in the processing area PSA and the number of times which the processing area PSA moves on the surface of the workpiece W (namely, the number of times which the processing area PSA is set on the surface of the workpiece W). In this case, a plurality of irradiation target positions C may be considered to be set on the surface of the workpiece W in the process of removing each removal layer SL. In the below-described description, for convenience of description, an example in which N (wherein, N is a constant value representing an integer that is equal to or larger than 2) irradiation target positions C (specifically, irradiation target positions $C_1$ to $C_N$) are set in the processing surface PL, as illustrated in FIG. 10B, will be described.

FIG. 10A and FIG. 10B schematically illustrates each irradiation target position C by using a beam spot (namely, a circular beam spot) of the processing light EL with which the irradiation target position C is irradiated. The beam spot of the processing light EL may mean an area that is irradiated with the processing light EL whose intensity exceeds a predetermined intensity threshold value. In this case, an area outside a circle schematically illustrating each irradiation target position C may be irradiated with the processing light EL whose intensity does not exceed the predetermined intensity threshold value, in a situation where each irradiation target position C is irradiated with the processing light EL. Alternatively, the beam spot of the processing light EL may mean an area corresponding to a full width at half maximum of an intensity distribution (for example, a Gaussian distribution) of the processing light EL.

Moreover, FIG. 10A and FIG. 10B illustrate an example in which one irradiation target position C does not overlap with other irradiation target positions C that is adjacent to the one irradiation target position C, in order to prioritize a visibility of the drawings. However, in practice, one irradiation target position C and other irradiation target position C that is adjacent to the one irradiation target position C may overlap with each other at least partially. Namely, the beam spot of the processing light EL with which one irradiation target position C is irradiated and the beam spot of the processing light EL with which other irradiation target position C that is adjacent to the one irradiation target position C may overlap with each other at least partially.

In this case, the slice data may be considered to be equivalent to information indicating whether or not each of the irradiation target positions $C_1$ to $C_N$ is irradiated with the processing light EL As one example, the Q-th slice data illustrated in FIG. 9D may be considered to be equivalent to information indicating that at least one irradiation target position C that is included in an hatched area illustrated in FIG. 9D among the irradiation target positions $C_1$ to $C_N$ should be irradiated with the processing light EL but at least one irradiation target position C that is not included in the hatched area illustrated in FIG. 9D should not be irradiated with the processing light EL.

The above-described data generation server 2 may generate the control data for generating the slice data illustrated in FIG. 9A to FIG. 9D. For example, each of the Q slice data indicates whether or not each of the irradiation target positions $C_1$ to $C_N$ is irradiated with the processing light EL. Namely, it can be said that each of the Q slice data substantially indicates whether the number of times which each of the irradiation target positions $C_1$ to $C_N$ should be irradiated with the processing light EL is 1 or 0 (alternatively, any other number) in the process of removing each removal layer SL corresponding to each of the Q slice data. Therefore, it can be said that the Q slice data as a whole substantially indicate the number of times which each of the irradiation target positions $C_1$ to $C_N$ should be irradiated with the processing light EL. In this case, the data generation server 2 may generate the control data indicating the number of times which each of the irradiation target positions $C_1$ to $C_N$ should be irradiated with the processing light EL. In this case, the control apparatus 14 may generate the Q slice data based on the control data and remove the Q removal layers SL in sequence based on the Q slice data.

Incidentally, since the processing light EL is the pulsed light as described above, the number of times which the irradiation target position C should be irradiated with the processing light EL may mean the number of times which the irradiation target position C should be irradiated with the pulse of pulsed light included in the processing light EL. Namely, the number of times which the irradiation target position C should be irradiated with the processing light EL may mean the number of pulses with which the irradiation target position C should be irradiated.

In a case where the subtractive manufacturing is performed, the processing apparatus 1 may form a riblet structure on the workpiece W. The riblet structure may be a structure by which a resistance (especially, at least one of a frictional resistance and a turbulent frictional resistance) of the surface of the workpiece W to a fluid is reducible. The riblet structure may include a structure by which a noise, which is generated when the fluid and the surface of the workpiece W relatively move, is reducible. The riblet structure may include a structure in which a plurality of grooves each of which extends along a first direction (for example, the Y-axis direction) that is along the surface of the workpiece W are aligned along a second direction (for example, the X-axis direction) that is along the surface of the workpiece W and that intersects the first direction, for example.

In a case where the subtractive manufacturing is performed, the processing unit 11 may form any structure having any shape on the surface of the workpiece W. A structure that generates a swirl relative to a flow of the fluid on the surface of the workpiece W is one example of any structure. A structure for giving a hydrophobic property to the workpiece W is one example of any structure. A fine texture structure (typically, a concave and convex structure) that is formed regularly or irregularly in a micro / nano-meter order is another example of any structure. This fine texture structure may include at least one of a shark skin structure and a dimple structure that has a function of reducing a resistance from a fluid (a liquid and / or a gas). The fine texture structure may include a lotus leaf surface structure that has at least one of a liquid repellent function and a self-cleaning function (for example, has a lotus effect). The fine texture structure may include at least one of a fine protrusion structure that has a liquid transporting function (Refer to US2017/0044002A1), a concave and convex structure that has a lyophile effect, a concave and convex structure that has an antifouling effect, a moth eye structure that has at least one of a reflectance reduction function and a liquid repellent function, a concave and convex structure that intensifies only light of a specific wavelength by interference to have a structural color, a pillar array structure that has an adhesion function using van der Waals force, a concave and convex structure that has an aerodynamic noise reduction function, a honeycomb structure that has a droplet collection function, a concave and convex structure that improve an adhesion to a layer formed on the surface and so on.

### (3) Data Generation Server 2

Next, the data generation server 2 of the processing system SYS will be described. In the below-described description, the data generation server 2, which generates the control data indicating the number of times which each of the irradiation target positions $C_1$ to $C_N$ should be irradiated with the processing light EL as described above, will be described. However, the data generation server 2 may generate the control data that is different from the control data indicating the number of times which each of the irradiation target positions $C_1$ to $C_N$ should be irradiated with the processing light EL.

### (3-1) Configuration of Data Generation Server 2

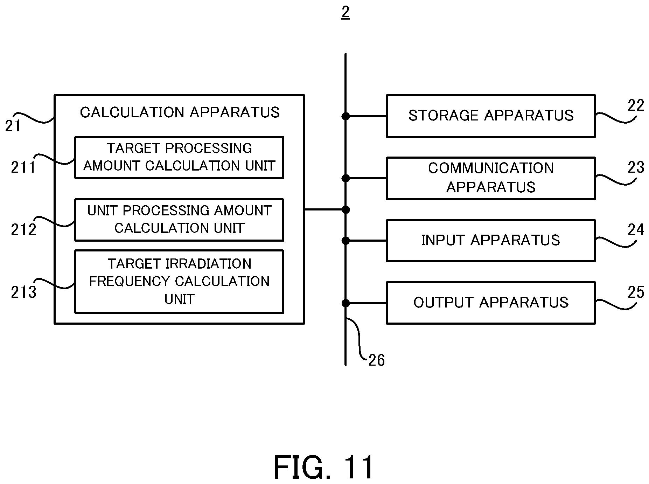

Firstly, with reference to FIG. 11, a configuration of data generation server 2 will be described. FIG. 11 is a block diagram that illustrates the configuration of the data generation server 2.

As illustrated in FIG. 11, the data generation server 2 includes a calculation apparatus 21, a storage apparatus 22, and a communication apparatus 23. Furthermore, data generation server 2 may include an input apparatus 24 and an output apparatus 25. However, the data generation server 2 may not include at least one of the input apparatus 24 and the output apparatus 25. The calculation apparatus 21, the storage apparatus 22, the communication apparatus 23, the input apparatus 24, and the output apparatus 25 may be connected through a data bus 26.

The calculation apparatus 21 includes at least one of a CPU and a GPU, for example. The calculation apparatus 21 reads a computer program. For example, the calculation apparatus 21 may read the computer program stored in the storage apparatus 22. For example, the calculation apparatus 21 may read the computer program stored in a non-transitory computer-readable recording medium by using a non-illustrated recording medium reading apparatus. The calculation apparatus 21 may acquire (namely, may download or read) the computer program from a non-illustrated apparatus disposed at the outside of the data generation server 2 through the communication apparatus 23. Namely, the calculation apparatus 21 may acquire (namely, may download or read) the computer program stored in a storage apparatus of the non-illustrated apparatus disposed at the outside of the data generation server 2 through the communication apparatus 23. The calculation apparatus 21 executes the read computer program. As a result, a logical functional block for executing an operations that should be performed by the data generation server 2 (for example, data generation operation for generating the control data) is implemented in the calculation apparatus 21. Namely, the calculation apparatus 21 is configured to serve as a controller for implementing the logical functional block for executing the operation that should be performed by the data generation server 2. In this case, any apparatus (typically, a computer) executing the computer program is configured to serve as the data generation server 2.

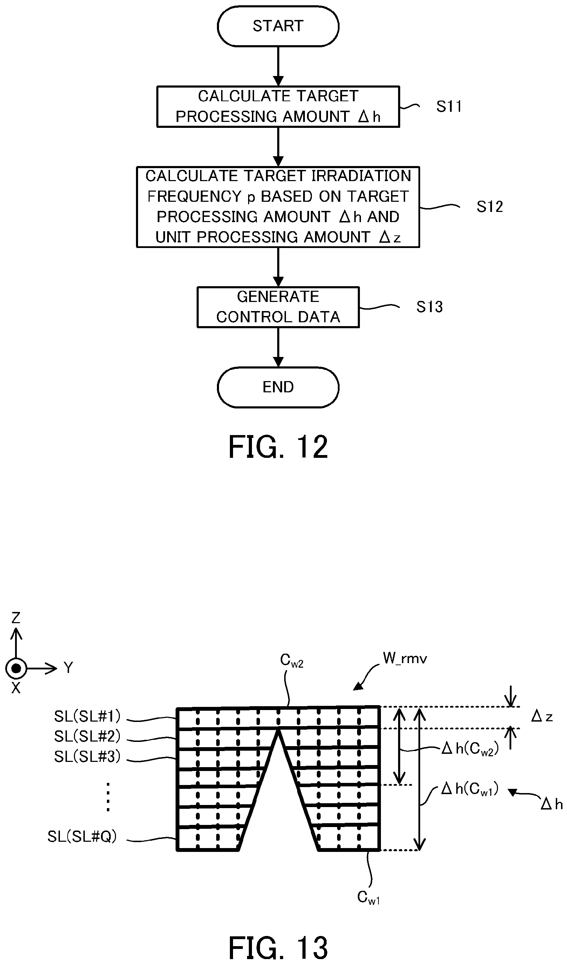

FIG. 11 illustrates an example of the logical functional block implemented in the calculation apparatus 21 to perform the operation for generating the control data indicating the number of times which each of the irradiation target positions $C_1$ to $C_N$ should be irradiated with the processing light EL. As illustrated in FIG. 11, in the calculation apparatus 21, a target processing amount calculation unit 211, a unit processing amount calculation unit 212, and a target irradiation frequency calculation unit 213 are implemented. Incidentally, an operation of each of the target processing amount calculation unit 211, the unit processing amount calculation unit 212, and the target irradiation frequency calculation unit 213 will be described in detail later with reference to FIG. 12.

Incidentally, the data generation server 2 may generate any control data that is different from the control data indicating the number of times which each of the irradiation target positions $C_1$ to $C_N$ should be irradiated with the processing light EL. For example, as described above, the data generation server 2 may generate the control data designating the processing condition of the processing apparatus 1. The processing condition may include a condition (an irradiation condition) of the processing light EL with which the workpiece W is irradiated. The irradiation conditions may include at least one of a condition related to the intensity of the processing light EL, a condition related to the energy (for example, a pulse energy) of the processing light EL, a condition related to an irradiation frequency of the processing light EL, a condition related to the irradiation position of the processing light EL, and a condition related to a burst mode of the processing light EL, for example. Incidentally, the burst mode may mean an operation mode in which each pulse included in the processing light EL can be divided into a desired number of pulses, as described in JP2016-524864A, for example. In this case, the condition related to the burst mode may include a condition related to the number of divisions of the pulsed light. Moreover, the number of times which each of the irradiation target positions $C_1$ to $C_N$ should be irradiated with the processing light EL may be considered to be equivalent to the condition related to the irradiation frequency and the irradiation position of the processing light EL. In this case, the control data indicating the number of times which each of the irradiation target positions $C_1$ to $C_N$ should be irradiated with the processing light EL may be considered to be the control data designating the processing condition. The processing condition may include a movement condition of at least one of the processing head 112 and the stage 132. The movement condition may include at least one of a condition related to a movement speed, a condition related to a movement distance, a condition related to a movement direction, and a condition related to a movement timing, for example.

An arithmetic model that is buildable by machine learning may be implemented in the calculation apparatus 21 by the calculation apparatus 21 executing the computer program. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The calculation apparatus 21 may perform the data generation operation by using the arithmetic model. Namely, the data generation operation may include an operation for generating the control data by using the arithmetic model. Namely, at least one of the target processing amount calculation unit 211, the unit processing amount calculation unit 212, and the target irradiation frequency calculation unit 213 may be realized by the arithmetic model. In other words, the operation performed by at least one of the target processing amount calculation unit 211, the unit processing amount calculation unit 212, and the target irradiation frequency calculation unit 213 may be performed by the arithmetic model. Note that the arithmetic model that has been built by off-line machine learning using training data may be implemented in the calculation apparatus 21. Moreover, the arithmetic model implemented in the calculation apparatus 21 may be updated by online machine learning on the calculation apparatus 21. Alternatively, the calculation apparatus 21 may generate the control data by using the arithmetic model implemented in an apparatus external to the calculation apparatus 21 (namely, an apparatus external to the data generation server 2), in addition to or instead of the arithmetic model implemented on the calculation apparatus 21.

Note that the calculation apparatus 21 (namely, the data generation server 2) may not include at least part of the functional blocks (namely, the target processing amount calculation unit 211, the unit processing amount calculation unit 212, and the target irradiation frequency calculation unit 213) in the calculation apparatus 21 of the data generation server 2. For example, the client terminal apparatus 3 may include at least part of the functional blocks (namely, the target processing amount calculation unit 211, the unit processing amount calculation unit 212, and the target irradiation frequency calculation unit 213) in the calculation apparatus 21. For example, the processing apparatus 1 (for example, the control apparatus 14) may include at least part of the functional blocks (namely, the target processing amount calculation unit 211, the unit processing amount calculation unit 212, and the target irradiation frequency calculation unit 213) in the calculation apparatus 21.

The storage apparatus 22 is configured to store desired data. For example, the storage apparatus 22 may temporarily store the computer program that is executed by the calculation apparatus 21. The storage apparatus 22 may temporarily store data temporarily used by the calculation apparatus 21 when the calculation apparatus 21 executes the computer program. The storage apparatus 22 may store data stored for a long term by the data generation server 2. The storage apparatus 22 may include at least one of a RAM (Random Access Memory), a ROM (Read Only Memory), a hard disk apparatus, a magneto-optical disc, a SSD (Solid State Drive) and a disk array apparatus. Namely, the storage apparatus 22 may include a non-transitory recording medium.

The communication apparatus 23 is configured to communicate with at least one of the processing apparatus 1 and the client terminal apparatus 3 through the communication network 4. In the present example embodiment, the communication apparatus 23 is configured to receive the reference information, which is referred by the data generation server 2 to generate the control data, from at least one of the processing apparatus 1 and the client terminal apparatus 3 through the communication network 4. Furthermore, the communication apparatus 23 is configured to transmits the generated control data to at least one of the processing apparatus 1 and the client terminal apparatus 3 through the communication network 4.

The input apparatus 24 is an apparatus that is configured to receive an input of information from an outside of the data generation server 2 to the data generation server 2. For example, the input apparatus 24 may include an operating apparatus (for example, at least one of a keyboard, a mouse, and a touch panel) that is operable by a server user. For example, the input apparatus 24 may include a reading apparatus that is configured to read information recorded as data on a recording medium that is attachable to the data generation server 2.

The output apparatus 25 is an apparatus that outputs information to the outside of the data generation server 2. For example, the output apparatus 25 may output the information as an image. Namely, the output apparatus 25 may include a display apparatus (a so-called display) that is configured to display an image indicating the information to be outputted. For example, the output apparatus 25 may output the information as audio. Namely, the output apparatus 25 may include an audio apparatus (so-called a speaker) that is configured output the audio. For example, the output apparatus 25 may output the information on a paper. Namely, the output apparatus 25 may include a printing apparatus (so-called a printer) that is configured to print desired information on the paper.

The data generation server 2 may be configured to serve as the client terminal apparatus 3. For example, a certain computer may be used as the data generation server 2 and may be used as the client terminal apparatus 3. Namely, the data generation server 2 and the client terminal apparatus 3 may be an integrated apparatus (alternatively, an integrated system). However, typically, two different computers may be used as the data generation server 2 and the client terminal apparatus 3, respectively.

### (3-2) Data Generation Operation performed by Data Generation Server 2

Next, the data generation operation performed by the data generation server 2 is described. In the present example embodiment, the data generation server 2 may perform at least one of a first data generation operation and a second data generation operation. Therefore, in the below-described description, the first data generation operation and the second data generation operation will be described in turn.

### (3-2-1) First Data Generation Operation

Firstly, with reference to FIG. 12, the first data generation operation will be described. FIG. 12 is a flowchart that illustrates a flow of the first data generation operation.

As illustrated in FIG. 12, the target processing amount calculation unit 211 calculates a target processing amount $\Delta h$ (a step S11). The target processing amount $\Delta h$ indicates a thickness of the removal target part W_rmv that should be removed from the workpiece W by the subtractive manufacturing. The target processing amount $\Delta h$ includes the target processing amount indicating the thickness of the removal target part W_rmv that should be removed at the irradiation target position C from the workpiece W by the subtractive manufacturing as many as the number of the irradiation target positions C. Specifically, the target processing amount $\Delta h$ includes: the target processing amount $\Delta h(C_1)$ indicating the thickness of the removal target part W_rmv that should be removed at the irradiation target position $C_1$ from the workpiece W by the subtractive manufacturing; the target processing amount $\Delta h(C_2)$ indicating the thickness of the removal target part W_rmv that should be removed at the irradiation target position $C_2$ from the workpiece W by the subtractive manufacturing; ...; and the target processing amount $\Delta h(C_N)$ indicating the thickness of the removal target part W_rmv that should be removed at the irradiation target position Crr from the workpiece W by the subtractive manufacturing.

The target processing amount calculation unit 211 may calculate the target processing amount $\Delta h$ based on information related to an initial shape of the workpiece W before the subtractive manufacturing is performed thereon and information related to a designed shape of the workpiece W on which the subtractive manufacturing has been performed. Specifically, the target processing amount calculation unit 211 may calculate, as the target processing amount $\Delta h$, a difference between the initial shape of the workpiece W and the designed shape of the workpiece W. Namely, the target processing amount calculation unit 211 may calculate, as the target processing amount $\Delta h$ at each irradiation target position C, a difference between the initial shape of the workpiece W and the designed shape of the workpiece W at each irradiation target position C.

The target processing amount calculation unit 211 may acquire, as the reference information, the information related to the initial shape of the workpiece W and the information related to the designed shape of the workpiece W from at least one of the processing apparatus 1 and the client terminal apparatus 3. For example, the data generation operation is usually performed before the processing apparatus 1 actually processes the workpiece W. This is because the processing apparatus 1 processes the workpiece W based on the control data generated by the data generation operation. Therefore, the measurement unit 12 can measure the initial shape of the workpiece W at a timing when the data generation operation is performed. In this case, the target processing amount calculation unit 211 may use the measured result of the shape of the workpiece W by the measurement unit 12 as the information related to the initial shape of the workpiece W. Namely, the measurement unit 12 may measure the shape of the workpiece W, and the target processing amount calculation unit 211 may acquire, as the information related to the initial shape of the workpiece W, the measured result of the shape of the workpiece W by the measurement unit 12 from the processing apparatus 1. On the other hand, the measurement unit 12 cannot measure the designed shape of the workpiece W at the timing when the data generation operation is performed, because the processing apparatus 1 has not processed the workpiece W yet. In this case, the target processing amount calculation unit 211 may use, as the information related to the designed shape of the workpiece W, three-dimensional model data (for example, CAD data and the like) indicating the designed shape of the workpiece W. Namely, the target processing amount calculation unit 211 may acquire the three-dimensional model data indicating the designed shape of the workpiece W from at least one of the processing apparatus 1 and the client terminal apparatus 3 (alternatively, from another apparatus or recording medium). Namely, the three-dimensional model data indicating the designed shape of the workpiece W may be inputted to the target processing amount calculation unit 211 through at least one of the communication apparatus 23 and the input apparatus 24.

Then, the target irradiation frequency calculation unit 213 calculates target irradiation frequency p based on the target processing amount $\Delta h$ calculated at the step S11 and the standard processing amount $\Delta z$ (namely, the

thickness of the removal layer SL) caused by the irradiation of the processing light EL (a step S12). The target irradiation frequency p includes the number of times which each irradiation target position C should be irradiated with the processing light EL as many as the number of the irradiation target positions C. Specifically, the target irradiation frequency p includes: the target irradiation frequency p(Ci) that is the number of times which the irradiation target position $C_1$ should be irradiated with the processing light EL; the target irradiation frequency $p(C_2)$ that is the number of times which the irradiation target position $C_2$ should be irradiated with the processing light EL; ...; and the target irradiation frequency $p(C_Q)$ that is the number of times which the irradiation target position $C_Q$ should be irradiated with the processing light EL.

In a case where the standard processing amount $\Delta z$ is the processing amount processed by one pulse of the processing light EL, the target irradiation frequency calculation unit 213 may calculate, as the target irradiation frequency $p(C_w)$, a value calculated by dividing the target processing amount $\Delta h(C_w)$ by the standard processing amount $\Delta z$. The target irradiation frequency calculation unit 213 may calculate, as the target irradiation frequency $p(C_w)$, the smallest integer that exceeds the value calculated by dividing the target processing amount $\Delta h(C_w)$ by the standard processing amount $\Delta z$. Note that w is a variable number representing an integer that is equal to or larger than 1 and that is equal to or smaller than N. For example, FIG. 13 illustrates the removal target part W_rmv illustrated in FIG. 8. In the example illustrated in FIG. 13, the removal layer SL#1 to the removal layer SL#Q should be removed at the irradiation target position $C_{w1}$ in order to remove the removal target part W_rmv. Namely, the irradiation target position $C_{w1}$ should be irradiated with the processing light EL at least Q times in order to remove the removal layer SL#1 to the removal layer SL#Q at the irradiation target position $C_{w1}$. Note that w1 is a variable number representing an integer that is equal to or larger than 1 and that is equal to or smaller than N. In this case, the target processing amount calculation unit 211 calculates the thickness of the Q removal layer SL (= Q × $\Delta z$) as the target processing amount $\Delta h(C_{w1})$. Therefore, the target irradiation frequency calculation unit 213 calculates the number of times that is Q (= $\Delta h(C_{w1})$ / $\Delta z$) as the target irradiation frequency $p(C_{w1})$. On the other hand, in the example illustrated in FIG. 13, the removal layer SL#1 to the removal layer SL#4 should be removed at the irradiation target position $C_{w2}$ in order to remove the removal target part W_rmv. Namely, the irradiation target position $C_{w2}$ should be irradiated with the processing light EL at least 4 times in order to remove the removal layer SL#1 to the removal layer SL#4 at the irradiation target position $C_{w2}$. Note that w2 is a variable number representing an integer that is equal to or larger than 1 and that is equal to or smaller than N. In this case, the target processing amount calculation unit 211 calculates the thickness of the 4 removal layer SL (= 4 × $\Delta z$) as the target processing amount $\Delta h(C_{w2})$. Therefore, the target irradiation frequency calculation unit 213 calculates the number of times that is 4 (= $\Delta h(C_{w2})$ / $\Delta z$) as the target irradiation frequency $p(C_{w2})$. In this manner, the target irradiation frequency calculation unit 213 can appropriately calculate the target irradiation frequency p(Cw) based on the target processing amount $\Delta h(Cw)$ and the standard processing amount $\Delta z$.

Then, the target irradiation frequency calculation unit 213 may generate the control data based on the target irradiation frequency p calculated at the step S12 (a step S 13). For example, the target irradiation frequency calculation unit 213 may generate the control data indicating the target irradiation frequency p. For example, the target irradiation frequency calculation unit 213 may generate the control data indicating a relationship between the irradiation target position C and the target irradiation frequency p. For example, the target irradiation frequency calculation unit 213 may generate the control data in which the irradiation target position C is associated with the target irradiation frequency p. For example, the target irradiation frequency calculation unit 213 may generate the control data in which the target irradiation frequency p(Ci) is associated with the irradiation target position $C_1$, the target irradiation frequency $p(C_2)$ is associated with the irradiation target position $C_2$, ..., the target irradiation frequency $p(C_Q)$ is associated with the irradiation target position $C_Q$.

At the step S13, the target irradiation frequency calculation unit 213 may transmit the generated control data to at least one of the processing apparatus 1 and the client terminal apparatus 3 by using the communication apparatus 23. Alternatively, the target irradiation frequency calculation unit 213 may store the generated control data in the storage apparatus 22. Namely, the target irradiation frequency calculation unit 213 may record the generated control data in the storage apparatus 22. In this case, the data generation server 2 may transmit the control data stored in the storage apparatus 22 to at least one of the processing apparatus 1 and the client terminal apparatus 3 upon request from at least one of the processing apparatus 1 and the client terminal apparatus 3.

At least one of the processing apparatus 1 and the client terminal apparatus 3 that has acquired the control data may generate the processing control information (for example, the slice data) based on the control data. For example, at least one of the processing apparatus 1 and the client terminal apparatus 3 may generate the slice data for realizing a processing operation that irradiates the irradiation target position $C_w$ with the processing light EL p(Cw) times that is the target irradiation frequency.

## (3-2-2) Second Data Generation Operation

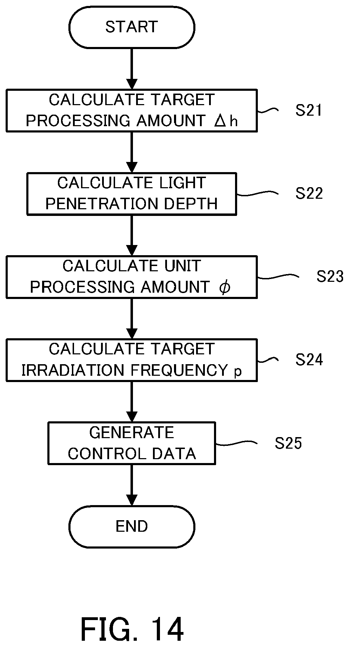

Next, with reference to FIG. 14, the second data generation operation will be described. FIG. 14 is a flowchart that illustrates a flow of the second data generation operation.

As illustrated in FIG. 14, the target processing amount calculation unit 211 calculates the target processing amount $\Delta h$ (a step S21). Incidentally, an operation at the step S21 in FIG. 14 may be the same as an operation at the step S11 in FIG. 12. Therefore, a detailed description of the operation at the step S21 is omitted.

Then, the unit processing amount calculation unit 212 calculates a light penetration depth (a step S22). The light penetration depth is a parameter indicating a degree of depth at which the processing light EL, with which the workpiece W is irradiated, penetrates into the interior of the workpiece W. The light penetration depth is typically a parameter corresponding to a reciprocal of an absorption coefficient of the workpiece W for the processing light EL.

The unit processing amount calculation unit 212 may calculate the light penetration depth based on a measured result of a test workpiece Wt on which the processing apparatus 1 has actually performed the subtractive manufacturing by the measurement unit 12. Specifically, the processing apparatus 1 actually processes the test workpiece Wt by irradiating the test workpiece Wt with the processing light EL. The workpiece Wt may be an object having a material that is the same as or similar to a material of the workpiece W. The workpiece Wt may be an object having a composition that is the same as or similar to a composition of the workpiece W. Especially, the processing apparatus 1 processes the workpiece Wt by irradiating the workpiece Wt with the processing light EL so that at least a part of the N irradiation target positions C described above are irradiated with the processing light EL in sequence. For example, the processing apparatus 1 may process the workpiece Wt by irradiating the workpiece Wt with the processing light EL so that a plurality of irradiation target positions that are aligned along one direction (for example, the X-axis direction) among the N irradiation target positions C described above are irradiated with the processing light EL in sequence. For example, the processing apparatus 1 may process the workpiece Wt by irradiating the workpiece Wt with the processing light EL so that a plurality of irradiation target positions that are aligned along one direction (for example, the X-axis direction) among the N irradiation target positions C described above and a plurality of irradiation target positions that are aligned along another direction (for example, the Y-axis direction) intersecting the one direction among the N irradiation target positions C described above are irradiated with the processing light EL in sequence.

Then, the measurement unit 12 measures the processed workpiece Wt. Specifically, the measurement unit 12 measures a shape of the processed workpiece Wt. Note that an operation for measuring the shape of the processed workpiece Wt may mean an operation for measuring a shape of an area of the workpiece Wt including a portion that is irradiated with the processing light EL.

Then, the unit processing amount calculation unit 212 acquires the measured result of the workpiece Wt by the measurement unit 12. Then, the unit processing amount calculation unit 212 calculates an actual processing amount $\Delta z_{scan}$ at the i-th irradiation target position $C_i$ that has been irradiated with the processing light EL among the N irradiation target positions C, based on the measured result of the workpiece Wt by the measurement unit 12. Namely, the unit processing amount calculation unit 212 calculates the actual processing amount $\Delta z_{scan}$ corresponding to a thickness (in other words, a depth or a height) of a part (for example, the removal layer SL) that has been actually removed from the workpiece Wt at the i-th irradiation target position $C_i$. Note that i is a variable number representing an integer that is equal to or larger than 1 and that is equal to or smaller than N. For example, the unit processing amount calculation unit 212 may calculate, as the actual processing amount $\Delta z_{scan}$, a difference between an actual shape of the workpiece Wt at the irradiation target position $C_i$ indicated by the measured result of the workpiece Wt by the measurement unit 12 and an initial shape of the workpiece Wt at the irradiation target position $C_i$.

Incidentally, a reason why the measurement unit 12 measures the shape of the workpiece Wt is for the unit processing amount calculation unit 212 to calculate the actual processing amount $\Delta z_{scan}$. Therefore, an operation of the measurement unit 12 measuring the shape of the workpiece Wt may include an operation for measuring the thickness (in other words, the depth or the height) of the part (for example, the removal layer SL) removed from the workpiece Wt. The measurement unit 12 measuring the shape of the workpiece Wt may be considered to measure the thickness (in other words, the depth or the height) of the part (for example, the removal layer SL) removed from the workpiece Wt. In this case, the unit processing amount calculation unit 212 may calculate, as the actual processing amount $\Delta z_{scan}$, the thickness (in other words, the depth or the height) of the part (for example, the removal layer SL) removed at the irradiation target position $C_i$ from the workpiece Wt based on the measured result of the workpiece Wt by the measurement unit 12 without using the initial shape of the workpiece Wt at the irradiation target position $C_i$.

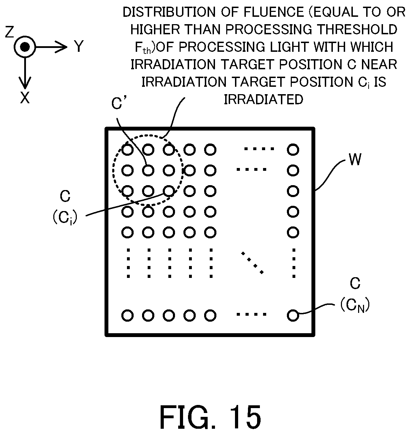

Here, there is a possibility that the workpiece Wt at the irradiation target position $C_i$ is processed not only by the processing light EL with which the irradiation target position $C_i$ is irradiated but also by the processing light EL with which the irradiation target position C' in the vicinity of the irradiation target position $C_i$ among the N irradiation target positions C is irradiated. Specifically, FIG. 15 is a plan view that illustrates a range in which the fluence of the processing light EL exceeds a lower threshold value $F_{th}$ of the fluence of the processing light EL that can remove and process the workpiece Wt in a case where the irradiation target position C' in the vicinity of the irradiation target position $C_i$. As illustrated in FIG. 15, even in a case where the irradiation target position C' in the vicinity of the irradiation target position $C_i$ is irradiated with the processing light EL, the i-th irradiation target position $C_i$ is processed by the processing light EL with which the irradiation target position C' in the vicinity of the irradiation target position $C_i$ is irradiated in a case where the fluence of the processing light EL at the i-th irradiation target position $C_i$ exceeds the lower threshold value $F_{th}$.

Namely, there is a possibility that the workpiece Wt at the irradiation target position $C_i$ is processed by the processing light EL with which the j-th irradiation target position $C_j$, which has been actually irradiated with the processing light EL among the N irradiation target positions C, is irradiated. Note that j is a variable number representing an integer that is equal to or larger than 1 and that is equal to or smaller than N and an index of all the irradiation target positions C that has been actually irradiated with the processing light EL. Since the irradiation target position $C_i$ is irradiated with the processing light EL, the variable number j may be equal to the variable number i in some case. Therefore, the calculated actual processing amount $\Delta z_{scan}$ is affected by the fluence (especially, the fluence that exceeds the lower threshold value $F_{th}$) of the processing light EL with which all irradiation target positions $C_j$ is irradiated.

Therefore, the unit processing amount calculation unit 212 calculates the fluence $F(C_i - C_j, C_j)$ of the processing light EL at the i-th irradiation target position $C_i$ in a case where the j-th irradiation target position $C_j$ is irradiated with the processing light EL a unit number of times (for example, once), for all irradiation target positions $C_j$. For example, the unit processing amount calculation unit 212 may calculate the fluence $F(C_i - C_j, C_j)$ based on the intensity of the processing light EL with which the irradiation target position $C_j$ is irradiated and a beam diameter (a spot diameter) of the processing light EL at the irradiation target position $C_j$. For example, the unit processing amount calculation unit 212 may calculate, as the fluence $F(C_i - C_j, C_j)$, a value calculated by dividing the intensity of the processing light EL with which the irradiation target position $C_j$ is irradiated by the beam diameter of the processing light EL at the irradiation target position $C_j$.

Then, the unit processing amount calculation unit 212 calculates the light penetration depth based on the relationship between the actual processing amount $\Delta z_{scan}$ and the fluence $F(C_i - C_j, C_j)$. Specifically, the unit processing amount calculation unit 212 may calculate the light penetration depth based on an Equation 1. Note that "$\alpha^{-1}$" in the Equation 1 represents the light penetration depth. Incidentally, in the Equation 1, the unit processing amount calculation unit 212 calculates the light penetration depth by using such a constraint condition that a value of a natural logarithm is not smaller than zero. In this case, the unit processing amount calculation unit 212 may regard the value of the natural logarithm as zero in a case where the value of the natural logarithm is smaller than zero.

[Equation 1]

$$\alpha^{-1} = \Delta z_{scan} / \left( \sum_j \ln \left( \frac{F(C_i - C_j, C_j)}{F_{th}} \right) \right)$$

As represented by the Equation 1, the light penetration depth $\alpha^{-1}$ is a parameter that is larger as the actual processing light $\Delta z_{scan}$ is larger. The light penetration depth $\alpha^{-1}$ is a parameter that is smaller as the actual processing light $\Delta z_{scan}$ is smaller. The light penetration depth $\alpha^{-1}$ is a parameter that is smaller as a value calculated by normalizing a total sum of the fluence $F(C_i - C_j, C_j)$ by the lower threshold value $F_{th}$ is larger. The light penetration depth $\alpha^{-1}$ is a parameter that is larger as the value calculated by normalizing the total sum of the fluence $F(C_i - C_j, C_j)$ by the lower threshold value $F_{th}$ is smaller. The light penetration depth $\alpha^{-1}$ is a parameter that is smaller as the total sum of the fluences $F(C_i - C_j, C_j)$ is larger. The light penetration depth $\alpha^{-1}$ is a parameter that is larger as the total sum of the fluences $F(C_i - C_j, C_j)$ is smaller.

Incidentally, the processing apparatus 1 may process at least a part of the workpiece W to be processed by using the control data generated by the data generation server 2, in addition to or instead of the test workpiece Wt. In this case, the measurement unit 12 may measure the workpiece W and unit processing light calculation unit 212 may calculate the light penetration depth based on the measured result of the workpiece W.

Moreover, in a case where the light penetration depth is information already known to the data generation server 2, the data generation server 2 may not necessarily calculate the light penetration depth. Namely, the data generation server 2 may not necessarily perform the operation at the step S22 in FIG. 14.

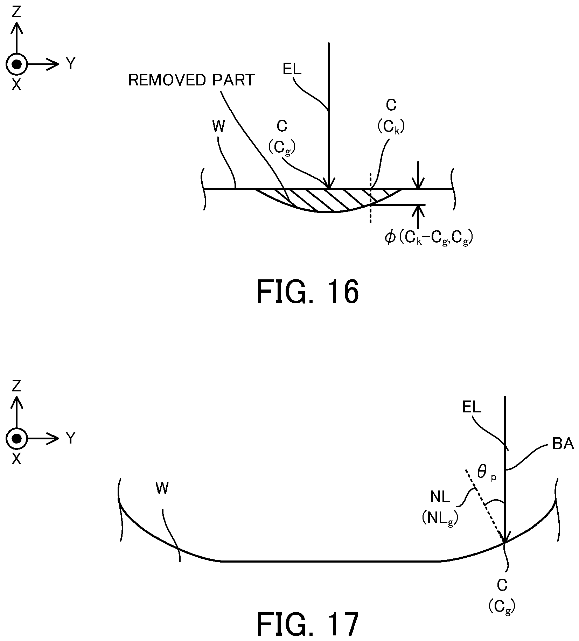

Again in FIG. 14, then, the unit processing amount calculation unit 212 calculates a unit processing amount $\varphi$ by using the light penetration depth calculated at the step S23 (a step S23). As illustrated in FIG. 16, the unit processing amount $\varphi$ includes a unit processing amount $\varphi(C_k - C_g, C_g)$ that indicates an expected value (a predicted value) of the processing amount at the k-th irradiation target position $C_k$ among the N irradiation target positions C in a case where the g-th irradiation target position $C_g$ of the N irradiation target positions C is irradiated with the processing light EL unit number of times (for example, once). Note that each of the variable numbers g and k is a variable number representing an integer that is equal to or larger than 1 and that is equal to or smaller than N. Therefore, the unit processing amount $\varphi$ includes the unit processing amounts $\varphi(C_k - C_g, C_g)$ as many as the number of combinations of the variable numbers g and k.

The unit processing amount calculation unit 212 may calculate the unit processing amount by using an Equation 2. Incidentally, "$F(C_k - C_g, C_g)$" in the Equation 2 represents the fluence of the processing light EL at the k-th irradiation target position $C_k$ in a case where the g-th irradiation target position $C_g$ is irradiated with the processing light EL unit number of times (for example, once). "$\theta_g$" in the Equation 2 represents an angle between a beam axis BA, which is along the irradiation direction (in other words, the propagating direction) of the processing light EL with which the g-th irradiation target position $C_g$ is irradiated, and a normal line NL (a normal line $NL_g$) to the workpiece W at the irradiation target position $C_g$, as illustrated in FIG. 17. "$T(\theta_g)$" in the Equation 2 represents a transmittance of the workpiece W at the g-th irradiation target position $C_g$ to the processing light EL. The transmittance $T(\theta_g)$ may be a parameter that varies depending on the angle $\theta_g$. Namely, a reflection characteristic of the processing light EL at the workpiece W may be different (namely, may vary) depending on the angle $\theta_g$ (namely, an inclination of the workpiece W). Incidentally, the unit processing amount calculation unit 212 calculates the unit processing amount $\varphi$ by using such a constraint condition that a value of a natural logarithm is not smaller than zero. In this case, the unit processing amount calculation unit 212 may regard the value of the natural logarithm as zero in a case where the value of the natural logarithm is smaller than zero.

[Equation 2]

$$\phi(C_k - C_g, C_g) = \alpha^{-1}\ln \left(\frac{F(C_k - C_g, C_g) \times T(\theta_g) \times cos\theta_g}{F_{th}}\right)$$

The normal line NL to the workpiece W may be a normal line to the surface of the workpiece W. The normal line to the surface of the workpiece W may be a normal line to the surface of the workpiece W before the subtractive manufacturing is performed. The normal line to the surface of the workpiece W may be a normal line to the surface of the workpiece W on which the subtractive manufacturing has been performed. The normal line to the surface of the workpiece W may be a normal line to the surface of the workpiece W at a desired timing in a period during which the subtractive manufacturing is performed. The normal line to the surface of the workpiece W may be a normal to a virtual surface of the workpiece W. The virtual surface of the workpiece W may be a surface determined based on the surface of the workpiece W before the subtractive manufacturing is performed thereon and the surface of the workpiece W on which the subtractive manufacturing has been performed. For example, the virtual surface of the workpiece W may be a surface that is located at an intermediate position between the surface of the workpiece W before the subtractive manufacturing is performed thereon and the surface of the workpiece W on which the subtractive manufacturing has been performed. As one example, in a case where the surface of the workpiece W before the subtractive manufacturing is performed thereon is a surface along the XY plane and the surface of the workpiece W on which the subtractive manufacturing has been performed is a surface intersecting the XY plane at an angle of 40 degrees, the virtual surface of the workpiece W may be a surface intersecting the XY plane at an angle of 20 degrees.

The angle $\theta_g$ may be regarded as a parameter indicating an inclination of the workpiece W at the irradiation target position $C_g$ with respect to the irradiation direction (in other words, the propagating direction) of the processing light EL with which the g-th irradiation target position $C_g$ is irradiated. The irradiation direction of the processing light EL may typically be a direction along the optical axis AX of the f$\theta$ lens 1123 that emits the processing light EL. Therefore, the angle $\theta_g$ may be regarded as a parameter indicating an inclination of the workpiece W at the irradiation target position $C_g$ with respect to the optical axis AX of the f$\theta$ lens 1123. The irradiation direction of the processing light EL may typically be a direction that intersects a placement surface of the stage 132 on which the workpiece W is placed. In this case, a state where the workpiece W at the irradiation target position $C_g$ is inclined with respect to the irradiation direction of the processing light EL may be considered to be equivalent to a state where the workpiece W at the irradiation target position $C_g$ is inclined with respect to the placement surface of the stage 132. Therefore, the angle $\theta_g$ may be regarded as a parameter indicating an inclination of the workpiece W at the irradiation target position $C_g$ with respect to the placement surface of the stage 132.

In a case where the angle $\theta_g$ is larger than zero degrees and smaller than 180 degrees, the workpiece W at the irradiation target position $C_g$ may be considered to be inclined with respect to the irradiation direction of the processing light EL. In this case, there is a possibility that the irradiation size on the workpiece W of the processing light EL with which the workpiece W is irradiated varies (namely, changes) depending on the inclination of the workpiece W. Moreover, there is a possibility that a cross-sectional shape (namely, a shape of the beam spot) on the workpiece W of the processing light EL with which the workpiece W is irradiated varies (namely, changes) depending on the inclination of the workpiece W.

Again in FIG. 14, the target irradiation frequency calculation unit 213 calculates the target irradiation frequency p based on the target processing amount $\Delta h$ calculated at the step S21 and the unit processing amount $\varphi$ calculated at the step S23 (a step S24). As described above, the target irradiation frequency p includes the number of times which each irradiation target position C should be irradiated with the processing light EL as many as the number of the irradiation target positions C. Specifically, the target irradiation frequency p includes: the target irradiation frequency p(Ci) that is the number of times which the irradiation target position $C_1$ should be irradiated with the processing light EL; the target irradiation frequency p($C_2$) that is the number of times which the irradiation target position $C_2$ should be irradiated with the processing light EL; ...; and the target irradiation frequency p($C_Q$) that is the number of times which the irradiation target position $C_Q$ should be irradiated with the processing light EL.

The target irradiation frequency calculation unit 213 may calculate the target irradiation frequency p by solving an optimization problem that defines a relationship between the target processing amount $\Delta h$, the unit processing amount $\varphi$, and the target irradiation frequency p. The optimization problem includes such a problem that an expected processing amount (namely, the thickness of the removal target part W_rmv that is expected to be removed from the workpiece W) $\Delta he(C_m)$ of the workpiece W at the m-th irradiation target position $C_m$ among the N irradiation target positions C is equal to the target processing amount $\Delta h(C_m)$ at the m-th irradiation target position $C_m$. Note that m is a variable number representing an integer that is equal to or larger than 1 and that is equal to or smaller than N. Namely, the optimization problem includes such a problem that the expected processing amount $\Delta he(C_1)$ of the workpiece W at the irradiation target position $C_1$ is equal to the target processing amount $\Delta h(C_1)$, the expected processing amount $\Delta he(C_2)$ of the workpiece W at the irradiation target position $C_2$ is equal to the target processing amount $\Delta h(C_2)$, ..., and the expected processing amount $\Delta he(C_Q)$ of the workpiece W at the irradiation target position $C_Q$ is equal to the target processing amount $\Delta h(C_Q)$.

As already described with reference to FIG. 15, there is a possibility that the workpiece W at the irradiation target position $C_m$ is processed not only by the processing light EL with which the irradiation target position $C_m$ is irradiated but also by the processing light EL with which the irradiation target position C' in the vicinity of the irradiation target position $C_m$ among the N irradiation target positions C is irradiated. Therefore, the expected processing amount $\Delta he(C_m)$ of the workpiece W at the irradiation target position $C_m$ depends on not only the unit processing amount $\varphi(C_m - C_m, C_m)$ caused by the processing light EL with which the irradiation target position $C_m$ is irradiated, but also the unit processing amount $\varphi(C_m - C_n, C_n)$ caused by the processing light EL with which the irradiation target position $C_n$, which is different from the irradiation target position $C_m$, is irradiated Note that n is a variable number representing an integer that is equal to or larger than 1 and that is equal to or smaller than N. Therefore, the target irradiation frequency calculation unit 213 may calculate the expected processing amount $\Delta he(C_m)$ of the workpiece W at the irradiation target position $C_m$ by using an Equation of $\Delta he(C_m) = \varphi(C_m - C_1, C_1) \times p(C_1) + \varphi(C_m - C_2, C_2) \times p(C_2) + ... + \varphi(C_m - C_N, C_N) \times p(C_N)$. As a result, the optimization problem that should be solved by the target irradiation frequency calculation unit 213 is represented by an Equation 3.

[Equation 3]

$$
\begin{bmatrix} \Delta h(C_1) \\ \Delta h(C_2) \\ \vdots \\ \Delta h(C_N) \end{bmatrix} = \begin{bmatrix} \phi(C_1 - C_1, C_1) & \phi(C_1 - C_2, C_2) & ... & \phi(C_1 - C_N, C_N) \\ \phi(C_2 - C_1, C_1) & \phi(C_2 - C_2, C_2) & ... & \phi(C_2 - C_N, C_N) \\ \vdots & \vdots & \ddots & \vdots \\ \phi(C_N - C_1, C_1) & \phi(C_N - C_2, C_2) & ... & \phi(C_N - C_N, C_N) \end{bmatrix} \begin{bmatrix} p(C_1) \\ p(C_2) \\ \vdots \\ p(C_N) \end{bmatrix}
$$

A calculation for solving the optimization problem represented in the Equation 3 is an example of a deconvolution calculation. The target irradiation frequency calculation unit 213 may calculate the target irradiation frequency p by performing the deconvolution calculation using the target processing amount $\Delta h$ and the unit processing amount $\varphi$. Since the target processing amount $\Delta h$ is calculated from the designed shape of the workpiece W on which the subtractive manufacturing is performed and the unit processing amount $\varphi$ is calculated from the fluence of the processing light EL, the target irradiation frequency calculation unit 213 may be considered to perform the deconvolution calculation using the designed shape of the workpiece W on which the subtractive manufacturing is performed and the fluence of the processing light EL (namely, the information related to the processing light EL ). Especially, since the unit processing amount $\varphi$ is a parameter that depends on the irradiation target position C, the deconvolution calculation using the unit processing amount $\varphi$ may be regarded as a shift-variant deconvolution calculation.

Incidentally, it is practically impossible for at least one of the target irradiation frequencies p(Ci) to $p(C_Q)$ to be smaller than zero. This is because it is practically impossible to irradiate the workpiece W with the processing light EL for a negative number of times. Therefore, the target irradiation frequency calculation unit 213 may calculate the target irradiation frequency p by using such a constraint condition that each of the target irradiation frequencies p(Ci) to $p(C_Q)$ is larger than zero. Moreover, the target irradiation frequency calculation unit 213 may calculate the target irradiation frequency p by using such a constraint condition that each of the target irradiation frequencies p(Ci) to $p(C_Q)$ is smaller than an allowable upper limit value.

The target irradiation frequency calculation unit 213 may solve the optimization problem by using a loss function determined by a difference between the expected processing amount $\Delta he(C_m)$ and the target processing amount $\Delta h(C_m)$. In this case, the target irradiation frequency calculation unit 213 may add a weighting based on the irradiation target position $C_m$ in calculating the loss function. For example, in a case where the irradiation target position $C_m$ is relatively important for the subtractive manufacturing, the target irradiation frequency calculation unit 213 may add the weighting based on the irradiation target position $C_m$ so that a contribution of the irradiation target position $C_m$ (namely, a contribution of the difference between the expected processing amount $\Delta he(C_m)$ and the target processing amount $\Delta h(C_m)$) to the

loss function is relatively large. A vertex (namely, a pointy corner, for example, a vertex of the riblet structure described above) is one example of the position that is relatively important for the subtractive manufacturing.

Then, the target irradiation frequency calculation unit 213 may generate the control data based on the target irradiation frequency p calculated at the step S24 (a step S25). Incidentally, an operation at the step S25 in FIG. 14 may be the same as an operation at the step S13 in FIG. 12. Therefore, a detailed description of the operation at the step S25 is omitted.

As described above, the second data generation operation takes into account a possibility that the workpiece W at the irradiation target position $C_m$ is processed not only by the processing light EL with which the irradiation target position $C_m$ is irradiated but also by the processing light EL with which the irradiation target position C' in the vicinity of the irradiation target position $C_m$ among the N irradiation target positions C is irradiated. Therefore, the second data generation operation calculate the target irradiation frequency p by using both of the unit processing amount $\varphi(C_m - C_m, C_m)$ that indicates the expected value of the processing amount at the m-th irradiation target position $C_m$ in a case where the m-th irradiation target position $C_m$ is irradiated with the processing light EL unit number of times (for example, once) and the unit processing amount $\varphi(C_m - C_n, C_n)$ that indicates the expected value of the processing amount at the m-th irradiation target position $C_m$ in a case where the n-th irradiation target position $C_n$ is irradiated with the processing light EL unit number of times (for example, once). Therefore, in a case where the processing apparatus 1 processes the workpiece W based on the control data generated by the second data generation operation, the actual shape of the workpiece W on which the subtractive manufacturing has been performed is closer to the designed shape of the workpiece W the subtractive manufacturing has been performed, compared to a case where the processing apparatus 1 processes the workpiece W based on the control data generated by the first data generation operation.

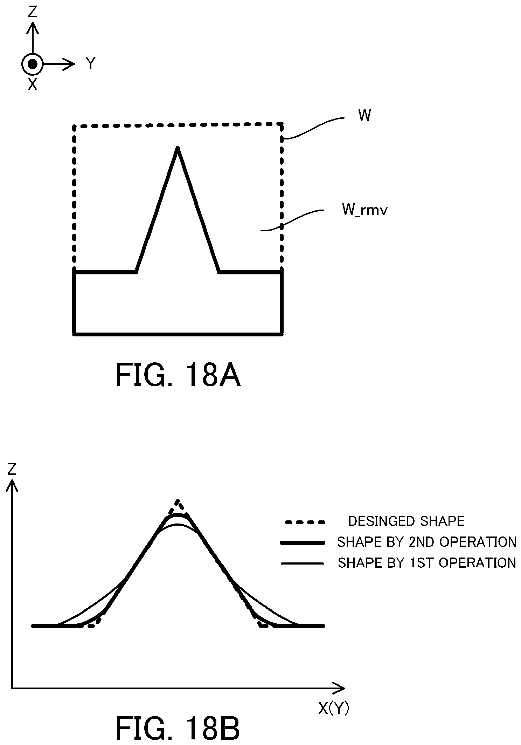

For example, FIG. 18B illustrates the shape (actually, a result of the simulation of the shape) of workpiece W that has been processed so that the shape of the workpiece W, which had a cuboid shape as illustrated in FIG. 18A, becomes a shape in which a cone protrudes from a plate-like member. As illustrated in FIG. 18B, in a case where the processing apparatus 1 processes the workpiece W based on the control data generated by the second data generation operation, the actual shape becomes closer to the conical shape, compared to a case where the processing apparatus 1 processes the workpiece W based on the control data generated by the first data generation operation.

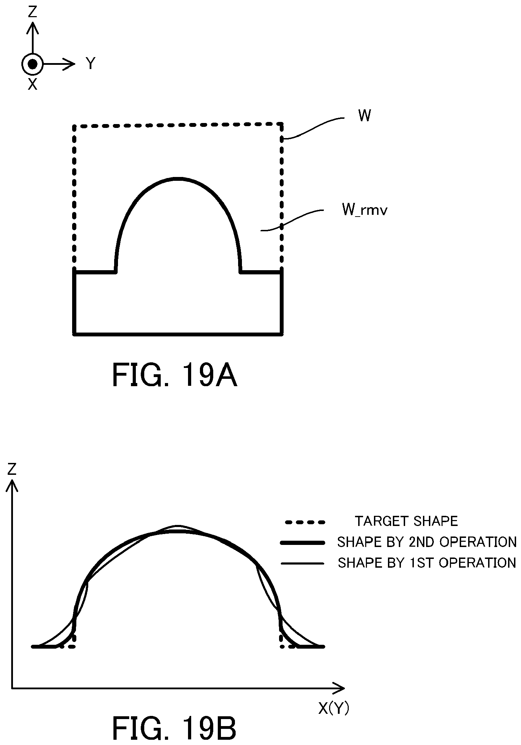

For example, FIG. 19B illustrates the shape (actually, a result of the simulation of the shape) of a workpiece W that has been processed so that the shape of the workpiece W, which had a cuboid shape as illustrated in FIG. 19A, becomes shape in which a hemisphere protrudes from a plate-like member. As illustrated in FIG. 19B, in a case where the processing apparatus 1 processes the workpiece W based on the control data generated by the second data generation operation, the actual shape becomes closer to a smooth hemispherical shape, compared to a case where the processing apparatus 1 processes the workpiece W based on the control data generated by the first data generation operation.

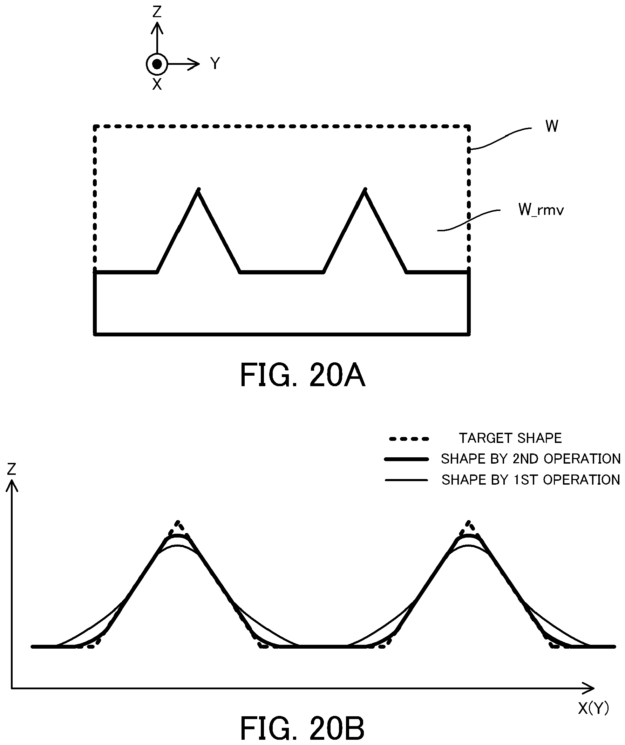

For example, FIG. 20B illustrates the shape (actually, a result of the simulation of the shape) of a workpiece W that has been processed so that the shape of the workpiece W, which had a cuboid shape as illustrated in FIG. 20A, becomes shape in which the riblet structure protrudes from a plate-like member. As illustrated in FIG. 20B, in a case where the processing apparatus 1 processes the workpiece W based on the control data generated by the second data generation operation, the actual shape becomes closer to the shape of the riblet structure, compared to a case where the processing apparatus 1 processes the workpiece W based on the control data generated by the first data generation operation.

Incidentally, the data generation server 2 may generate the control data that is different from the control data indicating the number of times which each of the irradiation target positions $C_1$ to $C_N$ should be irradiated with the processing light EL, as described above. As one example, the data generation server 2 may generate the control data indicating the pulse energy that allows the fluence of the processing light EL with which the irradiation target positions $C_1$ to $C_N$ are irradiated to be maintained at a constant level (as a result, the processing amount to be maintained constant).

## (4) Modified Example

Next, a modified example of the processing system SYS will be described.

## (4-1) First Modified Example

As illustrated in FIG. 18 to FIG. 20 described above, even in a case where the processing apparatus 1 processes the workpiece W based on the control data generated by the first data generation operation, an accuracy of a shape of a non-inclined surface, which is orthogonal to the propagating direction of the processing light EL (for example, the Z-axis direction), of the surface of the workpiece W on which the subtractive manufacturing has been performed is high. On the other hand, in a case where the processing apparatus 1 processes the workpiece W based on the control data generated by the first data generation operation, an accuracy of an shape of an inclined surface, which is inclined to the propagating direction of the processing light EL (for example, the Z-axis direction), of the surface of the workpiece W on which the subtractive manufacturing has been performed tends to deteriorate. On the other hand, in a case where the processing apparatus 1 processes the workpiece W based on the control data generated by the second data generation operation, the accuracy of the shape of the inclined surface of the workpiece W on which the subtractive manufacturing has been performed is relatively high.

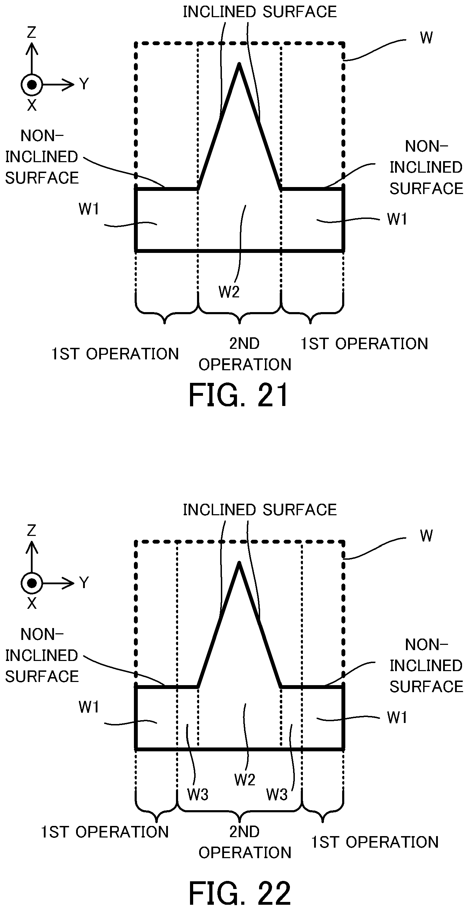

Therefore, in the first modified example, as illustrated in FIG. 21, in a case where the workpiece W is processed to form a first part W1 including a surface of the workpiece W that becomes the non-inclined surface after the subtractive manufacturing is performed, the processing apparatus 1 may process the workpiece W based on the control data generated by the first data generation operation. On the other hand, in a case where the workpiece W is processed to form a second part W2 including a surface of the workpiece W that becomes the inclined surface after the subtractive manufacturing is performed, the processing apparatus 1 may process the workpiece W based on the control data generated by the second data generation operation.

In this case, the data generation server 2 may perform the first data generation operation to generate the target irradiation frequency p at at least one first irradiation target position C that is among N irradiation target positions C and that is irradiated with the processing light EL to form the first part W1. On the other hand, the data generation server 2 may perform the second data generation operation to generate the target irradiation frequency p at at least one second irradiation target position C that is among N irradiation target positions C and that is irradiated with the processing light EL to form the second part W2.

As a result, in the first modified example, the accuracy of the shape of both of the non-inclined surface and the inclined surface of the workpiece W on which the subtractive manufacturing has been performed is relatively high. Namely, the actual shape of the workpiece W on which the subtractive manufacturing has been performed becomes closer to the designed shape of the workpiece W on which the subtractive manufacturing has been performed.

Incidentally, as illustrated in FIG. 18 to FIG. 20 described above, it can be said that the accuracy of the shape of a surface part, which is located near the inclined surface, of the non-inclined surface of the workpiece W on which the subtractive manufacturing has been performed is not necessarily high. It can be said that the accuracy of the shape of a surface part, which is adjacent to a boundary with the inclined surface, of the non-inclined surface of the workpiece W on which the subtractive manufacturing has been performed is not necessarily high. In this case, as illustrated in FIG. 22, in a case where the workpiece W is processed to form a third part W3 including the surface of the workpiece W that becomes the non-inclined surface of the workpiece W after the subtractive manufacturing is performed, the processing apparatus 1 may process the workpiece W based on the control data generated by the second data generation operation. Namely, a boundary between a part of the workpiece W that is processed by using the control data generated by the second data generation operation and a part of the workpiece W that is processed by using the control data generated by the first data generation operation may be away toward the first part W1 from the boundary between the first part W1 and the second part W2 illustrated in FIG. 21. In this case, the actual shape of the workpiece W on which the subtractive manufacturing has been performed becomes more closer to the designed shape of the workpiece W on which the subtractive manufacturing has been performed.

## (4-2) Second Modified Example

In a second modified example, the data generation server 2 may generate processing amount distribution data. The processing amount distribution data indicates a distribution of the expected processing amount that is expected in a case where the processing apparatus 1 performs the subtractive manufacturing on the workpiece W. For example, the processing amount distribution data may indicate the distribution of the expected processing amount on the surface of the workpiece W that is expected in a case where the processing apparatus 1 performs the subtractive manufacturing on the workpiece W by using the processing light EL whose pulse energy (for example, an energy amount of one pulse) is maintained constant. For example, the processing amount distribution data may indicate the distribution of the expected processing amount on the surface of the workpiece W that is expected in a case where the processing apparatus 1 performs the subtractive manufacturing on the workpiece W so that the processing light EL whose pulse energy is maintained constant scans the surface of the workpiece W a unit number of times (for example, once). For example, For example, the processing amount distribution data may indicate the distribution of the expected processing amount on the surface of the workpiece W that is expected in a case where the processing apparatus 1 performs the subtractive manufacturing on the workpiece W by irradiating each irradiation target position C on the surface of the workpiece W with the processing light EL whose pulse energy is maintained constant a unit number of times (for example, once).

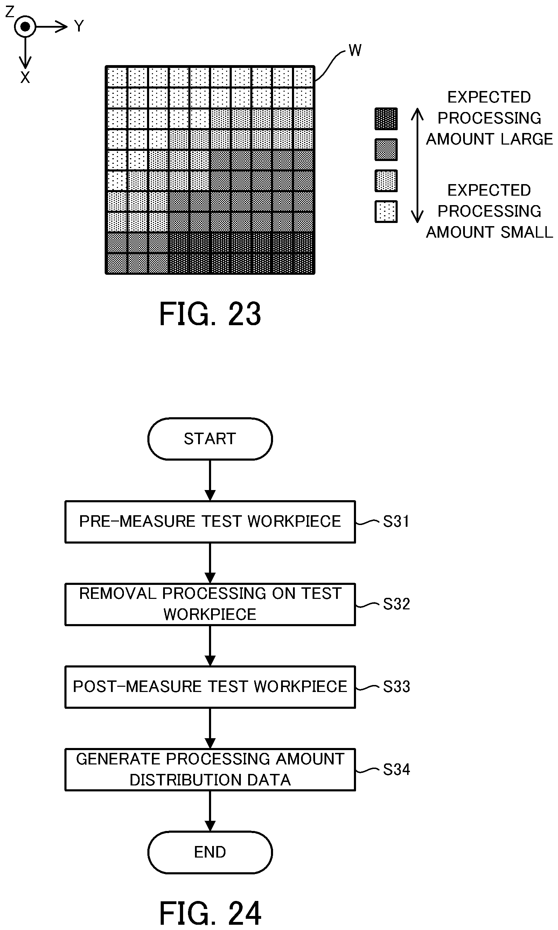

One example of the processing amount distribution data is illustrated in FIG. 23. As illustrated in FIG. 23, the processing amount distribution data indicates the expected processing amount that is expected in a case where the processing apparatus 1 performs the subtractive manufacturing on each position (for example, each of the N irradiation target positions C described above) on the surface of the workpiece W. Therefore, the processing amount distribution data may be considered to indicate a variation of the expected processing amount on the surface of the workpiece W.

The processing amount of the workpiece W depends on the fluence of the processing light EL with which the workpiece W is irradiated. Especially, processing amount of the workpiece W depends on the fluence of the processing light EL with which the workpiece W is irradiated under a situation where a total energy amount of the processing light EL with which the workpiece W is irradiated is maintained constant. Incidentally, a relationship between the processing amount of the workpiece W and the fluence of the processing light EL with which the workpiece W is irradiated may not be a proportional relationship. Therefore, the processing amount distribution data may be considered to indicate the fluence that is expected in a case where the processing apparatus 1 performs the subtractive manufacturing on each position (for example, each of the N irradiation target positions C described above) on the surface of the workpiece W.

The data generation server 2 may generate the control data indicating the above-described target irradiation frequency p based on the generated processing amount distribution data. For example, the data generation server 2 may calculate the target irradiation frequency p based on the processing amount distribution data.

In order to calculate the target irradiation frequency p based on the processing amount distribution data, the data generation server 2 may correct the target processing amount $\Delta h$ based on the processing amount distribution data. Specifically, an example in which the expected processing amount at the irradiation target position $C_m$ is different from the expected processing amount at the irradiation target position $C_n$ under a situation where the target processing amount $\Delta h_m$ at the irradiation target position $C_m$ is equal to the target processing amount $\Delta h_n$ at the irradiation target position $C_n$. In this case, in a case where the workpiece W is irradiated with the processing light EL based on the target irradiation frequency p calculated without considering the processing amount distribution data, there is a possibility that the actual processing amount at the irradiation target position $C_m$ is not equal to the actual processing amount at the irradiation target position $C_m$. For example, in a case where the expected processing amount at the irradiation target position $C_m$ is larger than the expected processing amount at the irradiation target position $C_n$, there is a possibility that the actual processing amount at the irradiation target position $C_m$ is larger than the actual processing amount at the irradiation target position $C_m$. For example, in a case where the expected processing amount at the irradiation target position $C_m$ is smaller than the expected processing amount at the irradiation target position $C_n$, there is a possibility that the actual processing amount at the irradiation target position $C_m$ is smaller than the actual processing amount at the irradiation target position C.. Therefore, the data generation server 2 may correct the target processing amounts $\Delta h_m$ and $\Delta h_n$ to reduce a difference between the actual processing amount at the irradiation target position $C_m$ and the actual processing amount at the irradiation target position $C_n$. For example, in a case where the expected processing amount at the irradiation target position $C_m$ is larger than the expected processing amount at the irradiation target position $C_n$, the data generation server 2 may perform at least one of a correction for decreasing the target processing amount $\Delta h_m$ calculated at the step S21 in FIG. 14 and a correction for increasing the target processing amount $\Delta h_n$ calculated at the step S21 in FIG. 14. For example, in a case where the expected processing amount at the irradiation target position $C_m$ is smaller than the expected processing amount at the irradiation target position $C_n$, the data generation server 2 may perform at least one of a correction for increasing the target processing amount $\Delta h_m$ calculated at the step S21 in FIG. 14 and a correction for decreasing the target processing amount $\Delta h_n$ calculated at the step S21 in FIG. 14. As a result, the processing apparatus 1 can remove and process the workpiece W at the irradiation target position $C_m$ by the target processing amount $\Delta h_m$ and can remove and process the workpiece at the irradiation target position $C_n$ by the target processing amount $\Delta h_n$. For example, even in a case where the expected processing amount at the irradiation target position $C_m$ is different from the expected processing amount at the irradiation target position $C_n$, the processing apparatus 1 can remove and process the workpiece by the same processing amount at both of the irradiation target positions $C_m$ and $C_n$. Namely, the processing apparatus 1 can process the workpiece W with higher accuracy.

In order to calculate the target irradiation frequency p based on the processing amount distribution data, the data generation server 2 may correct the unit processing amount $\varphi$ based on the processing amount distribution data. Specifically, in the above-described description, the unit processing amount $\varphi$ is calculated without considering the variation of the expected processing amount on the surface of the workpiece W. Therefore, the data generation server 2 may correct the unit processing amount $\varphi$ so that the unit processing amount $\varphi$ reflects the variation of the expected processing amount indicated by the processing amount distribution data. For example, in a case where the expected processing amount at the irradiation target position $C_m$ is larger than the expected processing amount at the irradiation target position $C_n$, the data generation server 2 may perform at least one of a correction for increasing at least one of the unit processing amounts $\varphi (C_m - C_1, C_1)$ to $\varphi (C_m - C_N, C_N)$ calculated at the step S23 in FIG. 14 and a correction for decreasing at least one of the unit processing amounts $\varphi (C_n - C_1, C_1)$ to $\varphi (C_n - C_N, C_N)$ calculated at the step S21 in FIG. 14. In this case, such a fact that the expected processing amount at the irradiation target position $C_m$ is larger than the expected processing amount at the irradiation target position $C_n$ is reflected on the unit processing amounts $\varphi (C_m - C_1, C_1)$ to $\varphi (C_m - C_N, C_N)$ and the unit processing amounts $\varphi (C_n - C_1, C_1)$ to $\varphi (C_n - C_N, C_N)$. For example, in a case where the expected processing amount at the irradiation target position $C_m$ is smaller than the expected processing amount at the irradiation target position $C_n$, the data generation server 2 may perform at least one of a correction for decreasing at least one of the unit processing amounts $\varphi (C_m - C_1, C_1)$ to $\varphi (C_m - C_N, C_N)$ calculated at the step S23 in FIG. 14 and a correction for increasing at least one of the unit processing amounts $\varphi (C_n - C_1, C_1)$ to $\varphi (C_n - C_N, C_N)$

calculated at the step S21 in FIG. 14. In this case, such a fact that the expected processing amount at the irradiation target position $C_m$ is smaller than the expected processing amount at the irradiation target position $C_n$ is reflected on the unit processing amounts $\varphi (C_m - C_1, C_1)$ to $\varphi (C_m - C_N, C_N)$ and the unit processing amounts $\varphi (C_n - C_1, C_1)$ to $\varphi (C_n - C_N, C_N)$. As a result, the processing apparatus 1 can remove and process the workpiece W at the irradiation target position $C_m$ by the target processing amount $\Delta h_m$ and can remove and process the workpiece at the irradiation target position $C_n$ by the target processing amount $\Delta h_n$. For example, even in a case where the expected processing amount at the irradiation target position $C_m$ is different from the expected processing amount at the irradiation target position $C_n$, the processing apparatus 1 can remove and process the workpiece by the same processing amount at both of the irradiation target positions $C_m$ and $C_n$. Namely, the processing apparatus 1 can process the workpiece W with higher accuracy.

Alternatively, the data generation server 2 may generate the processing amount distribution data as the control data itself. In this case, the data generation server 2 may transmit the processing amount distribution data to at least one of the processing apparatus 1 and the client terminal apparatus 3. At least one of the processing apparatus 1 and the client terminal apparatus 3 that acquires the processing amount distribution data may generate the processing control information based on the processing amount distribution data. For example, at least one of the processing apparatus 1 and the client terminal apparatus 3 may generate the processing control information that designates the processing condition for operating the processing apparatus 1 so that the variation of the actual processing amount by the processing apparatus 1 is smaller than the variation of the expected processing amount indicated by the processing amount distribution data. As a result, the processing apparatus 1 can process the workpiece W with higher accuracy.

The data generation server 2 may generate the processing amount distribution data based on a measured result of the test workpiece Wt, on which the processing apparatus 1 has actually performed the subtractive manufacturing, by the measurement unit 12. Next, with reference to FIG. 24, an operation for generating the processing amount distribution data based on the measured result of the test workpiece Wt by the measurement unit 12will be described below. FIG. 24 is a flowchart that illustrates a flow of the operation for generating the processing amount distribution data based on the measured result of the test workpiece Wt by the measurement unit 12.

Incidentally, the workpiece Wt used to generate the processing amount distribution data may be the same as or may be different from the workpiece Wt used to calculate the above-described light penetration depth. The workpiece Wt may be an object having a material that is the same as or similar to a material of the workpiece W. The workpiece Wt may be an object having a composition that is the same as or similar to a composition of the workpiece W. The workpiece Wt may be an object having a size that is the same as or similar to a size of the workpiece W. The workpiece Wt may be an object having a shape that is the same as or similar to a shape of the workpiece W.

As illustrated in FIG. 24, firstly, the processing apparatus 1 measures the shape of the workpiece Wt by using the measurement unit 12 before starting the subtractive manufacturing (a test processing) of the test workpiece Wt placed on the stage 132 (a step S31). The measured result by the measurement unit 12 may be transmitted to the data generation server 2.

Then, the processing apparatus 1 performs the subtractive manufacturing on the workpiece Wt by using the processing unit 11 (a step S32). For example, the processing apparatus 1 may perform the subtractive manufacturing on the workpiece Wt by irradiating the workpiece Wt with the processing light EL whose pulse energy is maintained constant. For example, the processing apparatus 1 may perform the subtractive manufacturing on the workpiece Wt by scanning the surface of the workpiece Wt with the processing light EL whose pulse energy is maintained constant a unit number of times (for example, once). For example, the processing apparatus 1 may perform the subtractive manufacturing on the workpiece Wt by irradiating each irradiation target position C of the workpiece Wt with the processing light EL whose pulse energy is maintained constant a unit number of times (for example, once or multiple times (for example, five or ten times)). In this case, the processing apparatus 1 may perform the subtractive manufacturing on the entire surface of the workpiece Wt. Alternatively, the processing apparatus 1 may perform the subtractive manufacturing on a part of the workpiece Wt.

Then, the processing apparatus 1 measures the shape of the workpiece Wt on which the subtractive manufacturing has been performed by using the measurement unit 12 (a step S33). The measured result by the measurement unit 12 may be transmitted to the data generation server 2.

Then, the data generation server 2 generates the processing amount distribution data based on the measured result of the workpiece Wt by the measurement unit 12 (a step S34). Specifically, the data generation server 2 calculates the actual processing amount at each position (for example, at each of the N irradiation target positions C described above) on the surface of the workpiece Wt based on the measured result of the workpiece Wt by the measurement unit 12. For example, the data generation server 2 may calculate a difference between the measured result of the shape of the workpiece Wt at the step S31 and the measured result of the shape of the workpiece Wt at the step S33 as the actual processing amount at each position on the surface of the workpiece Wt. Then, the data generation server 2 generates data indicating the distribution of the actual processing amount on the surface of the workpiece Wt as the processing amount distribution data. Namely, the actual processing amount on the surface of the workpiece Wt is used as the expected processing amount at each position on the surface of the workpiece W. For example, the data generation server 2 may generate the processing amount distribution data in which the position that is irradiated with the processing light EL on the surface of the workpiece Wt is associated with the actual processing amount at that position.

However, in the operation illustrated in FIG. 24, the processing apparatus 1 performs the subtractive manufacturing on the entire surface (alternatively, a relatively large area) of the workpiece Wt for testing. Therefore, there is a possibility that a time required to generate the processing amount distribution data is relatively long. Therefore, the processing apparatus 1 may process a surface part of the workpiece Wt that corresponds to the surface (especially, a surface part on which the subtractive manufacturing is performed) of the workpiece W. For example, at the step S32, the processing apparatus 1 may perform the subtractive manufacturing on a plurality of areas on the workpiece Wt by repeating an operation for moving the stage 132 by a predetermined step movement amount and then performing the subtractive manufacturing on a relatively small area (for example, an area whose size is a few millimeters square) on the workpiece Wt. In this case, at the step S34, the data generation server 2 may generate the processing amount distribution data by interpolating, from the measured result of the workpiece Wt, the processing amount in an area of the workpiece Wt that is not actually processed by the processing apparatus 1. As a result, the time required to generate the processing amount distribution data is relatively short, because the subtractive manufacturing may not be necessarily performed on the entire surface (alternatively, relatively large area) of the test workpiece Wt.

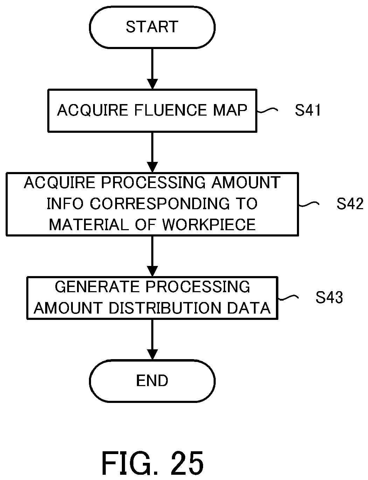

Alternatively, in order to relatively shorten the time required to generate the processing amount distribution data, the data generation server 2 may generate the processing amount distribution data by performing an operation illustrated in FIG. 25.

Specifically, as illustrated in FIG. 25, the data generation server 2 acquires a fluence map (a step S41). The fluence map indicates a distribution of the fluence of the processing light EL in the processing area PSA that is scanned by the Galvano mirror 1122 with the processing light EL. The fluence map may be generated based on the intensity of the processing light EL that depends on an output (furthermore, the pulse frequency) of the light source 111 and a measured result of a beam diameter of the processing light EL at each position in the processing area PSA. Specifically, a beam diameter measurement apparatus that is configured to measure the beam diameter may measure the beam diameter of the processing light EL at each position in the processing area PSA. Then, the fluence of the processing light EL at each position in the processing area PSA may be calculated based on the beam diameter of the processing light EL at each position in the processing area PSA and the intensity of the processing light EL. As a result, the fluence map in which each position in the processing area PSA is associated with a calculated result of the fluence at each position is generated.

The data generation server 2 may acquire the fluence map by generating the fluence map at the step S41. Alternatively, the data generation server 2 may acquire the fluence map that has been already generated at the step S41. For example, in a case where the fluence map that has been already generated is stored in the storage apparatus 22, the data generation server 2 may acquire the fluence map from the storage apparatus 22. For example, in a case where the fluence map that has been already generated is stored in an apparatus that is different from the data generation server 2 (for example, at least one of the processing apparatus 1 and the client terminal apparatus 3), the data generation server 2 may acquire the fluence map from the apparatus that is different from the data generation server 2. For example, in a case where the fluence map that has been already generated is recorded in a recording medium that is attachable to the data generation server 2, the data generation server 2 may acquire the fluence map from the recording medium by using the input apparatus 24 that is configured to serve as the recording medium reading apparatus.

In parallel with, before or after the operation at the step S41, the data generation server 2 acquires processing amount information (a step S42). The processing amount information indicates a relationship between the fluence of the processing light EL with which the workpiece W is irradiated for performing the subtractive manufacturing on the workpiece W and the actual processing amount of the workpiece W by the processing light EL. The processing amount information may be generated based on the measured result of the test workpiece Wt, on which the processing apparatus 1 has actually performed the subtractive manufacturing, by the measurement unit 12, as with the processing amount distribution data illustrated in FIG. 24. Specifically, the processing apparatus 1 may measure the shape of the workpiece Wt by using the measurement unit 12 before starting the subtractive manufacturing (the test processing) of the test workpiece Wt placed on the stage 132. Then, the processing apparatus 1 repeats an operation for setting the fluence of the processing light EL to be a predetermined intensity and an operation for processing the workpiece Wt with the processing light EL whose fluence is set to be the predetermined intensity, while changing the predetermined intensity and changing the position at which the workpiece Wt is processed with the processing light EL. As one example, the processing apparatus 1 may process a first area of the workpiece Wt by using the processing light EL whose fluence is set to be a first intensity, and process a second area of the workpiece Wt that is different from the first area by using the processing light EL whose fluence is set to be a second intensity that is different from the first intensity. Then, the processing apparatus 1 measures the shape of the workpiece Wt on which the subtractive manufacturing has been performed by using the measurement unit 12. Then, the processing amount information is generated based on the measured result of the workpiece Wt by the measurement unit 12. Specifically, the actual processing amount at each position that has been irradiated with the processing light EL on the surface of the workpiece Wt may be calculated from a difference between the measured result of the shape of the workpiece Wt before the subtractive manufacturing and the measured result of the shape of the workpiece Wt after the subtractive manufacturing. Then, information indicating a relationship between the fluence of the processing light EL with which each position on the surface of the workpiece Wt is irradiated and the actual processing amount at each position may be generated as the processing amount information. As one example, the actual processing amount in the first area may be calculated from the measured result of the first area of the workpiece Wt that has been processed by using the processing light EL whose fluence is set to be the first intensity, the actual processing amount in the second area may be calculated from the measured result of the second area of the workpiece Wt that has been processed by using the processing light EL whose fluence is set to be the second intensity, and information indicating a relationship between the first and second intensities and the actual processing amounts in the first and second areas may be generated as the processing amount information.

In order to generate the processing amount information, it is sufficient for the processing apparatus 1 to perform the subtractive manufacturing only on a part of the surface of the workpiece Wt. Namely, the processing apparatus 1 may not perform the subtractive manufacturing on the entire surface of the workpiece Wt. Typically, it is sufficient for the processing apparatus 1 to perform the subtractive manufacturing only on a part of the surface of the workpiece Wt on which the processing area PSA is set. As one example, it is sufficient for the processing apparatus 1 to perform the subtractive manufacturing on an area having a size of several millimeters by several millimeters on the surface of the workpiece Wt in order to generate the processing amount information, while the processing apparatus 1 performs the subtractive manufacturing on at least an area having a size of tens of millimeters by tens of millimeters on the surface of the workpiece Wt in order to generate the processing amount distribution data by the operation illustrated in FIG. 24. Therefore, a time required to generate the processing amount information is much shorter than the time required to generate the processing amount distribution data by the operation illustrated in FIG. 24. As a result, the time required to generate the processing amount distribution data by the operation illustrated in FIG. 25 is relatively short.

The data generation server 2 may acquire the processing amount information by generating the processing amount information at the step S42. Alternatively, the data generation server 2 may acquire the processing amount information that has been already generated at the step S42. For example, in a case where the processing amount information that has been already generated is stored in the storage apparatus 22, the data generation server 2 may acquire the processing amount information from the storage apparatus 22. For example, in a case where the processing amount information that has been already generated is stored in an apparatus that is different from the data generation server 2 (for example, at least one of the processing apparatus 1 and the client terminal apparatus 3), the data generation server 2 may acquire the processing amount information from the apparatus that is different from the data generation server 2. For example, in a case where the processing amount information that has been already generated is recorded in a recording medium that is attachable to the data generation server 2, the data generation server 2 may acquire the processing amount information from the recording medium by using the input apparatus 24 that is configured to serve as the recording medium reading apparatus.

Then, the data generation server 2 generates the processing amount information based on the fluence map acquired at the step S41 and the processing amount information acquired at the step S42 (a step S43). For example, the data generation server 2 determines the fluence at each position in one area from the fluence map under the assumption that the processing area PSA is set in the one area on the surface of the workpiece W, and determines the processing amount corresponding to the determined fluence from the processing amount information. The determined processing amount is used as the expected processing amount at each position in the one area. The data generation server 2 repeats the same operation while changing the area on which the processing area PSA is set on the surface of the workpiece W. As a result, the processing amount distribution data illustrated in FIG. 23 is generated.

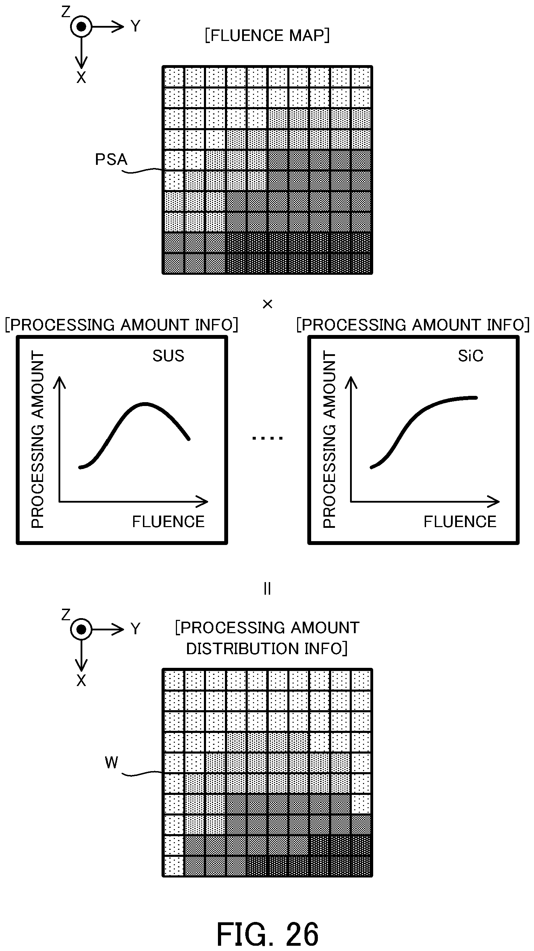

A plurality of pieces of processing amount information that correspond to a plurality of types of workpieces W whose types of material are different from each other may be generated,. This is because there is a possibility that the relationship between the fluence of the processing light EL and the actual processing amount of the workpiece W may vary depending on the type of material of the workpiece W. In this case, at the step S42 of FIG. 25, the data generation server 2 may acquire one processing amount information corresponding to the type of material of the workpiece W from the plurality of pieces of processing amount information. As one example, FIG. 26 illustrates an example in which first processing amount information corresponding to the workpiece W made from stainless steel (SUS) and second processing amount information corresponding to the workpiece W made from silicon carbide (SiC) are generated. In this case, in a case where the processing apparatus 1 performs the subtractive manufacturing on the workpiece W made from the stainless steel (SUS), the data generation server 2 may acquire the first processing amount information, and generate, based the first processing amount information and the fluence map, the processing amount distribution data indicating the distribution of the expected processing amount that is expected in a case where the processing apparatus 1 perform the subtractive manufacturing on the workpiece W made from the stainless steel (SUS). On the other hand, in a case where the processing apparatus 1 performs the subtractive manufacturing on the workpiece W made from the silicon carbide (SiC), the data generation server 2 may acquire the second processing amount information, and generate, based the second processing amount information and the fluence map, the processing amount distribution data indicating the distribution of the expected processing amount that is expected in a case where the processing apparatus 1 perform the subtractive manufacturing on the workpiece W made from the silicon carbide (SiC).

Incidentally, the data generation server 2 may not necessarily generate the processing amount distribution data. In this case, an apparatus (for example, the processing apparatus 1) that is different from the data generation server 2 may generate the processing amount distribution data. The data generation server 2 may acquire the processing amount distribution data generated by the apparatus different from the data generation server 2 and generate the control data based on the acquired processing amount distribution data.

### (4-3) Third Modified Example

In a third modified example, the data generation server 2 may generate the control data that designates the processing condition including a plurality of different types of parameters. In the below-described description, for convenience of description, an example in which the control data that specifies the processing condition including the fluence of the processing light EL, which is a first type of parameter and an overlap rate of the processing light EL, which is a second type of parameter is generated will be described.

Incidentally, the overlap rate of the processing light EL may mean an overlap rate between an area in which the processing light EL with which a first position is irradiated at the first timing forms a beam spot and an area in which the processing light EL with which a second position different from the first position is irradiated at a second timing after the first timing forms a beam spot. More specifically, the overlap ratio may indicates an overlap rate between, the overlap ratio between an area in which the processing light EL scanning the surface of the workpiece W along one scanning line forms a beam spot and an area in which the processing light EL scanning the surface of the workpiece W along another scanning line adjacent to the one scanning line forms the beam spot, in a case where the Galvano mirror 1122 scans the surface of the workpiece W with the processing light EL. A state in which the overlap rate is 100% may mean a state in which the area in which the area in which the processing light EL scanning the surface of the workpiece W along one scanning line forms the beam spot and the area in which the processing light EL scanning the surface of the workpiece W along another scanning line adjacent to the one scanning line forms the beam spot completely overlap with each other. A state in which the overlap rate is 0% may mean a state in which the area in which the area in which the processing light EL scanning the surface of the workpiece W along one scanning line forms the beam spot and the area in which the processing light EL scanning the surface of the workpiece W along another scanning line adjacent to the one scanning line forms the beam spot do not overlaps with each other at all.

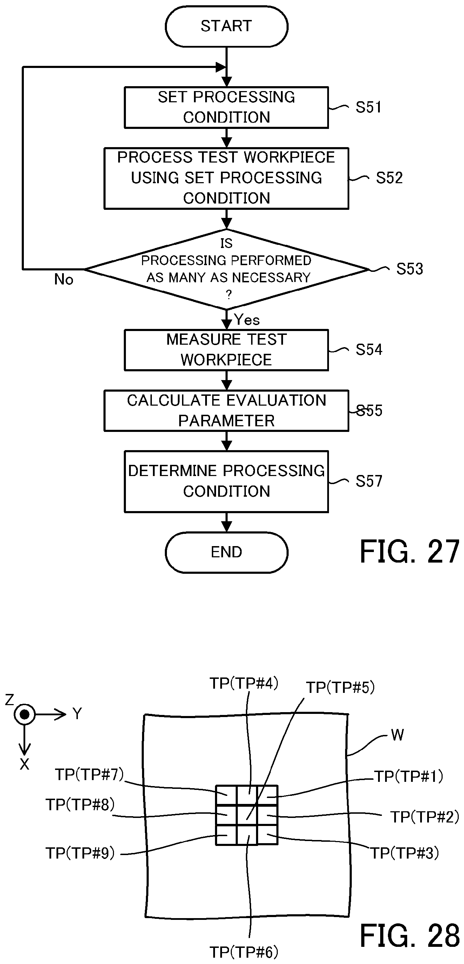

The data generation server 2 may generate the control data that designates the processing condition including the plurality of different types of parameters based on a measured result of the test workpiece Wt, on which the processing apparatus 1 has actually performed the subtractive manufacturing, by the measurement unit 12. Next, with reference to FIG. 27, an operation for generating the control data that designates the processing condition including the plurality of different types of parameters based on the measured result of the test workpiece Wt by the measurement unit 12 will be described. FIG. 27 is a flowchart that illustrates a flow of the operation for generating the control data that designates the processing condition including the plurality of different types of parameters based on the measured result of the test workpiece Wt by the measurement unit 12.

As illustrated in FIG. 27, the processing apparatus 1 sets the processing condition (a step S51). Namely, the processing apparatus 1 sets the fluence of the processing light EL and sets the overlap rate of the processing light EL. Then, the processing apparatus 1 performs the subtractive manufacturing on the test workpiece Wt by using the processing condition set at the step S51 (a step S52).

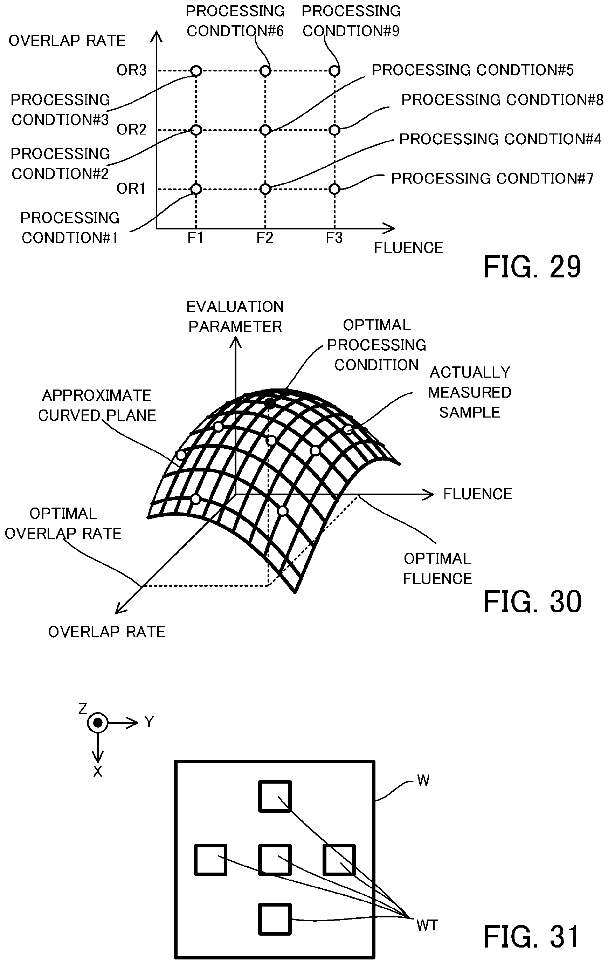

The processing apparatus 1 repeats the operations at the steps S51 and S52 as many times as necessary (a step S53). Namely, the processing apparatus 1 re-sets the processing condition each time the subtractive manufacturing is performed on the workpiece Wt (the step S51) until the subtractive manufacturing has been performed as many times as necessary at the step S52 (the step S53: No). At this time, the processing apparatus 1 re-sets the processing condition so that the re-set processing condition is different from the processing condition that has been already set. Specifically, the processing apparatus 1 re-sets at least one of the fluence and the overlap ratio so that at least one of the fluence and the overlap ratio included in the processing condition has a value that is different from a value that has been already set as a value of at least one of the fluence and the overlap ratio. Then, the processing apparatus 1 performs the subtractive manufacturing on the test workpiece Wt by using the re-set processing condition. At this time, the processing apparatus 1 performs, by using the re-set processing condition, the subtractive manufacturing on a part of the workpiece Wt on which the subtractive manufacturing has not yet been performed. Thus, as illustrated in FIG. 28, the subtractive manufacturing is performed on a plurality of test parts TP on the workpiece Wt based on the different processing conditions, respectively. FIG. 28 illustrates an example in which the subtractive manufacturing is performed on nine test parts TP (specifically, test parts TP#1 to TP#9) on the workpiece Wt based on nine different processing conditions, respectively. For example, as illustrated in FIG. 29, the processing apparatus 1 may performs the subtractive manufacturing on the test part TP#1 based on the processing condition #1 in which the value of the fluence is F1 and the value of the overlap ratio is OR1, perform the subtractive manufacturing on the test part TP#2 based on the processing condition #2 in which the value of the fluence is F1 and the value of the overlap ratio is OR2, perform the subtractive manufacturing on the test part TP#3 based on the processing condition #3 in which the value of the fluence is F1 and the value of the overlap ratio is OR3, perform the subtractive manufacturing on the test part TP#4 based on the processing condition #4 in which the value of the fluence is F2 and the value of the overlap ratio is OR1, perform the subtractive manufacturing on the test part TP#5 based on the processing condition #5 in which the value of the fluence is F2 and the value of the overlap ratio is OR2, perform the subtractive manufacturing on the test part TP#6 based on the processing condition #6 in which the value of the fluence is F2 and the value of the overlap ratio is OR3, perform the subtractive manufacturing on the test part TP#7 based on the processing condition #7 in which the value of the fluence is F3 and the value of the overlap ratio is OR1, perform the subtractive manufacturing on the test part TP#8 based on the processing condition #8 in which the value of the fluence is F3 and the value of the overlap ratio is OR2, and perform the subtractive manufacturing on the test part TP#9 based on the processing condition #9 in which the value of the fluence is F3 and the value of the overlap ratio is OR3.

Again in FIG. 27, then, after the operations at the steps S51 and S52 have been repeated as many times as necessary (the step S53: Yes), the processing apparatus 1 measures the workpiece Wt on which the subtractive manufacturing has been performed (a step S54). Especially, the processing apparatus 1 measures at least the plurality of test parts TP of the workpiece Wt on which subtractive manufacturing has actually been performed by using the measurement unit 12.

Then, the data generation server 2 calculates an evaluation parameter for evaluating a result of the subtractive manufacturing performed on the workpiece Wt based on a measured result of the workpiece Wt by the measurement unit 12 (a step S55). Specifically, the data generation server 2 calculates the evaluation parameter for evaluating the result of the subtractive manufacturing performed for each of the plurality of test parts TP on the workpiece Wt. In the example illustrated in FIG. 28, the data generation server 2 calculates the evaluation parameter for evaluating the result of the subtractive manufacturing performed on the test part TP#1, the evaluation parameter for evaluating the result of the subtractive manufacturing performed on the test part TP#2, ..., and the evaluation parameter for evaluating the result of the subtractive manufacturing performed on the test part TP#9.

The evaluation parameter may be any parameter as long as it is capable of evaluating the result of the subtractive manufacturing. For example, the evaluation parameter may be a parameter that can quantitatively evaluate the result of the subtractive manufacturing. At least one of a surface roughness, a processing resolution, a processing efficiency, and a throughput is one example of the evaluation parameter. Incidentally, the processing efficiency may be an index value that quantitatively indicates the processing amount (a removed amount) relative to the energy amount of inputted by the processing apparatus 1 for the subtractive manufacturing. The throughput may be an index value that quantitatively indicates the processing amount (the removed amount) per unit of time.

Then, the data generation server 2 determines the processing condition that can achieve a state where the evaluation parameter satisfies a predetermined criterion as an optimal processing condition based on the processing condition set at the step S51 and the evaluation parameter calculated at the step S55 (a step S56). Namely, the data generation server 2 determines a combination of the value of the fluence value and the value of the overlap ratio that can achieve the state where the evaluation parameter satisfies the predetermined criterion based on the processing condition set at the step S51 and the evaluation parameter calculated at the step S55 (a step S56). The optimal processing condition determined at the step S56 is used when the processing apparatus 1 actually performs the subtractive manufacturing on the workpiece W. Namely, the processing apparatus 1 actually performs the subtractive manufacturing on the workpiece W by using the optimum processing condition determined at the step S56.

The state in which the evaluation parameter satisfies the predetermined criterion may include a state in which the evaluation parameter is optimal. In a case where the value of the evaluation parameter is smaller as the result of the subtractive manufacturing improves, the state in which the evaluation parameter satisfies the predetermined criterion may include a state in which the evaluation parameter is minimum. The state in which the evaluation parameter satisfies the predetermined criterion may include a state in which the evaluation parameter is smaller than a first threshold value. In a case where the value of the evaluation parameter is larger as the result of the subtractive manufacturing improves, the state in which the evaluation parameter satisfies the predetermined criterion may include a state in which the evaluation parameter is maximum. The state in which the evaluation parameter satisfies the predetermined criterion may include a state in which the evaluation parameter becomes larger than a second threshold value. The state in which the evaluation parameter satisfies the predetermined criterion may include a state in which the evaluation parameter is within an optimal range.

The data generation server 2 may calculate a relationship between the evaluation parameter and the processing condition, and determine, based on the relationship between the evaluation parameter and the processing condition, the optimal processing condition that can achieve the state in which the evaluation parameter satisfies the predetermined criterion. As one example, as illustrated in FIG. 30, the data generation server 2 may calculate an approximate equation (in the example illustrated in FIG. 30, an approximate curved plane) that approximates the relationship between the evaluation parameter and the processing condition, and determine the optimal processing condition that can achieve the state where the evaluation parameter satisfies the predetermined criterion based on the approximate equation. Namely, the data generation server 2 may determine the optimal processing condition by using a Response Surface Method. In this case, the data generation server 2 may calculate the approximate equation that approximates the relationship between the evaluation parameter and the processing condition by using any method for calculating the approximate equation.

Incidentally, in a case where the approximate curved plane (for example, a response curved plane) is used to determine the optimal processing condition, the plurality of different processing conditions set at the step S51 in FIG. 27 may be independent from each other. Specifically, the plurality of different processing conditions may satisfy such a condition that an orthogonality of the plurality of different processing conditions is relatively high (namely, an orthogonality of a plurality of vectors that correspond to the plurality of different processing conditions, respectively, is relatively high in a case where each processing condition is expressed as a vector). In this case, the optimal processing condition can be set appropriately while reducing the number of times which the subtractive manufacturing is performed on the test workpiece Wt. Conversely, in a case where the number of times which the subtractive manufacturing is performed on the test workpiece Wt is limited by the user, the processing apparatus 1 may set the plurality of different processing conditions that are independent from each other at the step S51 in FIG. 27.

In this manner, the data generation server 2 can appropriately determine the processing condition that include the plurality of different types of parameters. Namely, the data generation server 2 can appropriately generate the control data that designates the processing condition including the plurality of different types of parameters. Especially, in the above-described description, the overlap rate can be optimized because the processing condition including the overlap rate is determined. Namely, a beam overlapping can be optimized.

Incidentally, the target irradiation frequency p calculated by the first or second data generation operation described above may be regarded as a parameter that quantitatively indicates an overlap of the area in which the processing light EL forms the beam spot at each irradiation target position C. For example, in a case where the target irradiation frequency p at a certain irradiation target position C is 2, this target irradiation frequency p may be considered to indicate that the area in which the processing light EL forms the beam spot overlaps twice at that irradiation target position C. In this case, the operation for calculating the target irradiation frequency p by the first or second data generation operation described above may be considered to be equivalent to an operation for calculating the number of times which the area in which the processing light EL forms the beam spot overlaps at each irradiation target position C. Namely, the operation for calculating the optimum target irradiation frequency p by the first or second data generation operation described above may be considered to be equivalent to an operation for calculating an optimum number of times which the areas in which the processing light EL forms the beam spot overlaps at each irradiation target position C. In this case, it may be considered that the beam overlapping can be optimized.

The processing apparatus 1 may perform the operation for performing the subtractive manufacturing on the plurality of test parts TP based on the plurality of different processing conditions, respectively, in each of a plurality of test areas TA on the workpiece Wt. One example of the plurality of test areas TA is illustrated in FIG. 31. As illustrated in FIG. 31, the plurality of test areas TA may include at least two test areas TA with different positions in a first direction along the surface of the workpiece Wt (for example, in the X-axis direction). As illustrated in FIG. 31, the plurality of test areas TA may include at least two test areas TA with different positions in a second direction (for example, in the Y-axis direction) that are along the surface of the workpiece Wt and intersect the first direction. In this case, the data generation server 2 can determine the optimal processing condition that takes into account the different in characteristic between positions on the surface of the workpiece Wt.

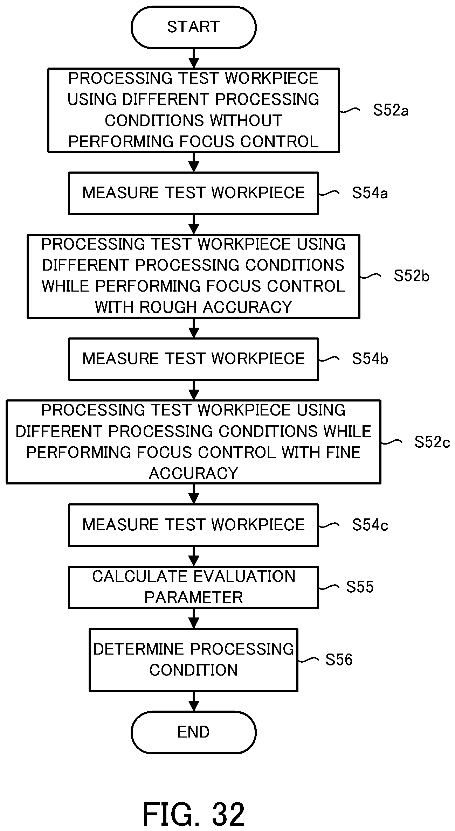

The processing apparatus 1 may repeat the operation for performing the subtractive manufacturing on the plurality of test parts TP based on plurality of different processing condition, respectively, while changing a detail of a focus control for controlling the light concentration position of the processing light EL. For example, as illustrated in FIG. 32, the processing apparatus 1 may perform the subtractive manufacturing on the workpiece Wt based on the plurality of different processing conditions without performing the focus control (for example, without performing the focus control for allowing the light concentration position to follow the surface of the workpiece Wt) (a step S52a). Then, the processing apparatus 1 measures the workpiece Wt on which the subtractive manufacturing has been performed at the step S52a (a step S54a). As a result, the processing resolution (namely, the standard processing amount $\Delta z$) by the processing apparatus 1 is determined with rough accuracy from the measured result of the workpiece Wt. Then, the processing apparatus 1 may perform the subtractive manufacturing on the workpiece Wt based on the plurality of different processing conditions while performing the focus control (for example, while performing the focus control for allowing the light concentration position to follow the surface of the workpiece Wt) with rough accuracy based on the processing resolution determined at the step S54a (a step S52b). Furthermore, the processing apparatus 1 may measure the workpiece Wt on which the subtractive manufacturing has been performed without performing the focus control by using the measurement unit 12 (a step S54b). As a result, the processing resolution (namely, the standard processing amount $\Delta z$) by

the processing apparatus 1 is determined with fine accuracy (namely, higher accuracy than the rough accuracy) from the measured result of the workpiece Wt. Then, the processing apparatus 1 may perform the subtractive manufacturing on the workpiece Wt based on the plurality of different processing conditions while performing the focus control (for example, while performing the focus control for allowing the light concentration position to follow the surface of the workpiece Wt) with fine accuracy based on the processing resolution determined at the step S54b (a step S52c). Furthermore, the processing apparatus 1 may measure the workpiece Wt on which the subtractive manufacturing has been performed without performing the focus control by using the measurement unit 12 (a step S54c). Then, the data generation server 2 may calculate the evaluation parameters for evaluating the result of the subtractive manufacturing performed at the step S52c (a step S55) and determine the processing condition based on the calculated evaluation parameters (a step S56).

### (4-4) Fourth Modified Example

In the above-described third modified example, the data generation server 2 generates the control data that designates the processing condition based on the measured result of the test workpiece Wt, on which the processing apparatus 1 has actually performed the subtractive manufacturing, by the measurement unit 12. On the other hand, in a fourth modified example, the data generation server 2 may generate the control data that designates the processing condition based on a condition database 221 stored in the storage apparatus 22.

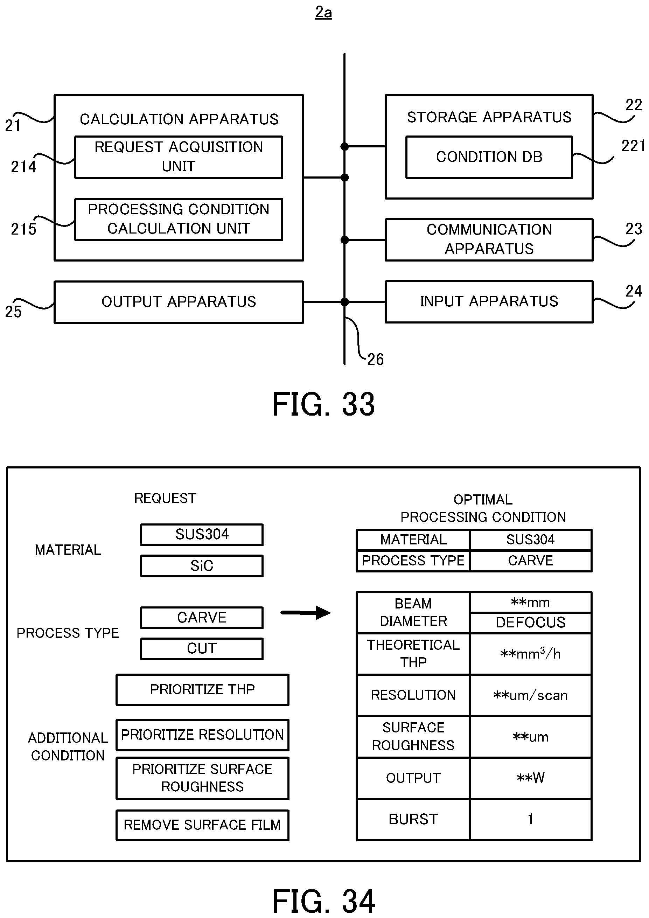

For example, FIG. 33 is a block diagram that illustrates a configuration of the data generation server 2 in the fourth modified example (in the below-described description, it is referred to as a "data generation server 2a"). As illustrated in FIG. 33, the data generation server 2a may include a request acquisition unit 214 and a processing condition calculation unit 215 as the logical blocks of the calculation apparatus 21. The storage apparatus 22 may store the condition database (DB) 221.

The request acquisition unit 214 may acquire, as the reference information, request information indicating a user's request (in other words, wish) for the processing condition. For example, the request acquisition unit 214 may acquire the request information from at least one of the processing apparatus 1 and the client terminal apparatus 3.

The user may designates the user's request for the processing condition by using a graphical user interface (GUI) illustrated in FIG. 34. For example, as illustrated in FIG. 34, the user may use the GUI to designate the type of material of the workpiece W. The user may designate the type of the subtractive manufacturing to be performed on the workpiece W. A type of subtractive manufacturing for carving the workpiece W and a type of subtractive manufacturing for cutting the workpiece W are examples of the type of subtractive manufacturing. The user may designate an item that is regarded as an important in performing the subtractive manufacturing. For example, the user may designate whether the throughput is prioritized, whether the processing resolution is prioritized, whether the surface roughness is prioritized, and whether a removal of a surface film caused by the subtractive manufacturing is prioritized. Information designated by the user may be transmitted to the data generation server 2a as the request information.

The processing condition calculation unit 215 calculates the processing condition optical for performing the subtractive manufacturing that satisfies the user's request indicated by the request information, based on the request information acquired by the request acquisition unit 214, a specification of the processing apparatus 1, and the condition database 221 stored in the storage apparatus 22. For example, the processing condition calculation unit 215 may calculate the processing condition including at least one of the fluence of the processing light EL, the beam diameter of the processing light EL, the overlap rate of the processing light EL, the scanning speed of the processing light EL, the pulse frequency of the pulsed light included in the processing light EL, and the energy amount of the pulsed light included in the processing light EL. The condition database 221 may be a database including a huge number of records in which of which the processing condition is associated with the result of the subtractive manufacturing performed based on this processing condition.

The processing condition calculated by the processing condition calculation unit 215 may be presented to the user through the GUI, as illustrated in FIG. 34. In the example illustrated in FIG. 34, the processing condition including the beam diameter of the processing light EL is presented to the user.

The processing condition calculation unit 215 may estimate the evaluation parameter in a case where it is assumed that the subtractive manufacturing is performed based on the processing condition calculated by the processing condition calculation unit 215. At least one of the surface roughness, the processing resolution, the processing efficiency, and the throughput is one example of the evaluation parameter, as described above. Furthermore, the evaluation parameter calculated by the processing condition calculation unit 215 may be presented to the user through the GUI, as illustrated in FIG. 34. In the example illustrated in FIG. 34, the evaluation parameters including the surface roughness, the processing resolution, and the throughput are presented to the user.

**(4-5) Other Modified Example**

In the above-described description, the processing apparatus 1 processes the workpiece W by irradiating the workpiece W with the processing light EL. However, the processing apparatus 1 may process the workpiece W by irradiating the workpiece W with any energy beam. In this case, the processing apparatus 1 may include a beam irradiation apparatus that is configured to emit any energy beam in addition to or instead of the processing light source 111. At least one of a charged particle beam, an electromagnetic wave and the like is one example of any energy beam. A least one of an electron beam, an ion beam and the like is one example of the charged particle beam.

In the above-described description, the measurement unit 12 is provided separately from the processing unit 11. However, the measurement unit 12 may be integrated with the processing unit 11, and may measure the workpiece W through a condensing optical system (the fθ lens 1123) that condenses the processing light EL of the processing unit 11. Such a processing and measurement apparatus is disclosed in WO2021/024480A1, for example.

In the above-described description, the information related to the processing light EL included in the reference information may include information related to the light intensity distribution or the fluence distribution of the processing light EL in the propagating direction of the processing light EL (in other words, in the irradiation direction).

In the above-described example embodiment, the data generation server 2 may calculate the light penetration depth from a processed result of the workpiece W in addition to or instead of calculating the light penetration depth from the processed result of the workpiece Wt for testing. In this case, the data generation server 2 may calculate the light penetration depth by processing and measuring a part of the workpiece W that is expected to be removed, and may acquire information related to the initial shape of the workpiece W by measuring the workpiece W on which the subtractive manufacturing has been performed to calculate the light penetration depth.

In the above-described description, the data generation server 2 uses the Response Surface Method to determine the optimal processing condition, however, it is not limited to the Response Surface Method, and other method such as Design of Experiments, a machine learning, a Bayesian inference and the like may be used, for example.

In the above-described description, the stage unit 13 may include a plurality of stages 132.

**(5) Supplementary Note**

Regarding the above described example embodiment, below described Supplementary notes are further disclosed.

[Supplementary Note 1]

A data generation method of generating control data for controlling a processing apparatus that is configured to perform a subtractive manufacturing on an object by irradiating a surface of the object with a pulse energy beam, the data generation method including:

after irradiating a test workpiece or the object with the pulse energy beam, measuring a shape of the test workpiece or the object after the subtractive manufacturing;
calculating information related to a light penetration depth into the test workpiece or the object based on shape information of the test workpiece or the object before the subtractive manufacturing and a measured result of the shape of the test workpiece or the object after the subtractive manufacturing;
calculating a unit processing amount of the object in a case where the object is irradiated with the pulse energy beam a unit number of times for each irradiation target position based on information related to an inclination of the object at each irradiation target position, which is irradiated with the pulse energy beam, with respect to an irradiation direction of the pulse energy beam and the information related to the light penetration depth; and
calculating a target number of times which each irradiation target position should be irradiated with the pulse energy beam based on a target processing amount for each irradiation target position and the unit processing amount for each irradiation target position.

[Supplementary Note 2]

The data generation method according to the Supplementary Note 1, wherein
an irradiation size on the object of the pulse energy beam with which the object is irradiated varies depending on an inclination of the object.

[Supplementary Note 3]

The data generation method according to the Supplementary Note 1 or 2, wherein
a cross-sectional shape on the object of the pulse energy beam with which the object is irradiated varies depending on an inclination of the object.

[Supplementary Note 4]

The data generation method according to any one of Supplementary Notes 1 to 3, wherein
a reflection characteristic of the pulse energy beam at the object varies depending on an inclination of the object.

[Supplementary Note 5]

The data generation method according to any one of Supplementary Notes 1 to 4 further including measuring a shape of the object before the subtractive manufacturing, wherein
the target processing amount is calculated based on the shape before the subtractive manufacturing.

[Supplementary Note 6]

The data generation method according to Supplementary Note 5 further including inputting a target shape of the object, wherein
the target processing amount is calculated based on the shape before the subtractive manufacturing and the target shape.

[Supplementary Note 7]

The data generation method according to any one of Supplementary Notes 1 to 6, wherein

the calculating the target number of times includes calculating the target number of times by solving an optimization problem,
the optimization problem includes such a problem that an expected processing amount at the irradiation target position is equal to the target processing amount in a case where the irradiation target position is irradiated with the pulse energy beam the target number of times.

[Supplementary Note 8]

The data generation method according to any one of Supplementary Notes 1 to 7, wherein

the target processing amount includes (i) a first target processing amount of the object at a first irradiation target position, and (ii) a second target processing amount of the object at a second irradiation target position that is different from the first irradiation target position,
the calculating the unit processing amount includes calculating (i) a first unit processing amount of the object at the first irradiation target position in a case where the first irradiation target position is irradiated with the pulse energy beam a unit number of times, (ii) a second unit processing amount of the object at the second irradiation target position in a case where the first irradiation target position is irradiated with the pulse energy beam a unit number of times, (iii) a third unit processing amount of the object at the first irradiation target position in a case where the second irradiation target position is irradiated with the pulse energy beam a unit number of times, and (iv) a fourth unit processing amount of the object at the second irradiation target position in a case where the second irradiation target position is irradiated with the pulse energy beam a unit number of times,
the calculating the target number of times includes calculating a first target number of times which the first irradiation target position should be irradiated with the pulse energy beam and a second target number of times which the second irradiation target position should be irradiated with the pulse energy beam based on the first to second target processing amounts and the first to fourth unit processing amounts.

[Supplementary Note 9]

The data generation method according to Supplementary Note 8, wherein

the calculating the target number of times includes calculating the target number of times by solving an optimization problem,
the optimization problem includes such a problem that a first expected processing amount of the object at the first irradiation target position is equal to the first target processing amount and a second expected processing amount of the object at the second irradiation target position is equal to the second target processing amount in a case where the first irradiation target position is irradiated with the pulse energy beam the first target number of times and the second irradiation target position is irradiated with the pulse energy beam the second target number of times.

[Supplementary Note 10]

The data generation method according to Supplementary Note 9, wherein

the first expected processing amount is calculated from a total sum of a product of the first unit processing amount and the first target number of times and a product of the third unit processing amount and the second target number of times,
the second expected processing amount is calculated from a total sum of a product of the second unit processing amount and the first target number of times and a product of the fourth unit processing amount and the second target number of times.

[Supplementary Note 11]

The data generation method according to any one of Supplementary Notes 1 to 10, wherein

the calculating the target number of times includes calculating the target number of times by solving an optimization problem expressed by an Equation 4,
the processing apparatus is configured to irradiate each of N (wherein, N is an integer that is equal to or larger than 2) irradiation target positions with the pulse energy beam,
"$C_k$ (wherein, k is a variable number representing an integer that is equal to or larger than 1 and that is equal to or smaller than N)" in the Equation 4 represents k-th irradiation target position of the N irradiation target positions,
"$\Delta h(C_k)$" in the Equation 4 represents the target processing amount of the object at the k-th irradiation target position,
"$\varphi(C_k - C_g, C_g$ (wherein, g is a variable number representing an integer that is equal to or larger than 1 and that is equal to or smaller than N))" in the Equation 4 represents the unit processing amount of the object at the k-th irradiation target position in a case where g-th irradiation target position of the N irradiation target positions is irradiated with the pulse energy beam a unit number of times,
"$p(C_k)$" in the Equation 4 represents the target number of times which the k-th irradiation target position should be irradiated with the pulse energy beam in order to perform the subtractive manufacturing on the object.

[Equation 4]

$$\begin{bmatrix} \Delta h(c_1) \\ \Delta h(c_2) \\ \vdots \\ \Delta h(c_N) \end{bmatrix} = \begin{bmatrix} \phi(c_1 - c_1, c_1) & \phi(c_1 - c_2, c_2) & \dots & \phi(c_1 - c_N, c_N) \\ \phi(c_2 - c_1, c_1) & \phi(c_2 - c_2, c_2) & \dots & \phi(c_2 - c_N, c_N) \\ \vdots & \vdots & \ddots & \vdots \\ \phi(c_N - c_1, c_1) & \phi(c_N - c_2, c_2) & \dots & \phi(c_N - c_N, c_N) \end{bmatrix} \begin{bmatrix} p(c_1) \\ p(c_2) \\ \vdots \\ p(c_N) \end{bmatrix}$$

[Supplementary Note 12]

The data generation method according to any one of Supplementary Notes 1 to 11, wherein
the calculating the unit processing amount includes calculating the unit processing amount based on an angle between a beam axis that is along a propagating direction of the pulse energy beam and a normal line to the object at the irradiation target position, a transmittance of the object at the irradiation target position to the pulse energy beam, and the light penetration depth of the pulse energy beam into the object.

[Supplementary Note 13]

The data generation method according to Supplementary Note 12, wherein

the calculating the unit processing amount includes calculating the unit processing amount by using an Equation 5,
the processing apparatus is configured to irradiate each of N (wherein, N is an integer that is equal to or larger than 2) irradiation target positions with the pulse energy beam,

"$\varphi(C_k - C_g, C_g$ (wherein, each of k and g is a variable number representing an integer that is equal to or larger than 1 and that is equal to or smaller than N))" in the Equation 5 represents the unit processing amount of the object at k-th irradiation target position of the N irradiation target positions in a case where g-th irradiation target position of the N irradiation target positions is irradiated with the pulse energy beam a unit number of times,

"$\alpha^{-1}$" in the Equation 5 represents the light penetration depth,

"$F(C_k - C_g, C_g)$" in the Equation 5 represents a fluence of the pulse energy beam at the k-th irradiation target position in a case where the g-th irradiation target position is irradiated with the pulse energy beam a unit number of times,

"$F_{th}$" in the Equation 5 represents a lower threshold value of the fluence of the pulse energy beam that can remove and process the object,

"$\theta_g$" in the Equation 5 represents an angle between the beam axis and a normal line to the object at the g-th irradiation target position,

"$T(\theta_g)$" in the Equation 5 represents a transmittance of the object at the g-th irradiation target position to the pulse energy beam.

[Equation 5]

$$\phi\left(C_k - C_g, C_g\right) = \alpha^{-1}\ln\left(\frac{F(C_k - C_g, C_g) \times T(\theta_g) \times cos\theta_g}{F_{th}}\right)$$

[Supplementary Note 14]

The data generation method according to any one of Supplementary Notes 1 to 13, wherein

the processing apparatus is configured to irradiate each of N (wherein, N is an integer that is equal to or larger than 2) irradiation target positions with the pulse energy beam,
the calculating the information related to the light penetration depth includes calculating the information related to the light penetration depth based on an actual processing amount of the object at i-th (wherein, i is a variable number representing an integer that is equal to or larger than 1 and that is equal to or smaller than N) irradiation target position of the N irradiation target positions in a case where the N irradiation target positions are actually irradiated with the pulse energy beam a unit number of times in sequence and a fluence of the pulse energy beam at the i-th irradiation target position in a case where at least a part of the N irradiation target positions are actually irradiated with the pulse energy beam a unit number of times in sequence.

[Supplementary Note 15]

The data generation method according to Supplementary Note 14, wherein

the calculating the information related to the light penetration depth includes calculating the information related to the light penetration depth by using an Equation 6,
"$\alpha^{-1}$" in the Equation 6 represents the light penetration depth,
"$\Delta z_{scan}$" in the Equation 3 represents the actual processing amount,
"$F(C_i - C_j, C_j)$" in the Equation 6 represents a fluence of the pulse energy beam at the i-th irradiation target position in a case where j-th (wherein, j is a variable number representing an integer that is equal to or larger than 1 and that is equal to or smaller than N) irradiation target position of the N irradiation target positions is irradiated with the pulse energy beam a unit number of times,
"$F_{th}$" in the Equation 6 represents a lower threshold value of the fluence of the pulse energy beam that can remove and process the object.

[Equation 6]

$$\alpha^{-1} = \Delta z_{scan}/\left(\sum_j \ln\left(\frac{F(C_i - C_j, C_j)}{F_{th}}\right)\right)$$

[Supplementary Note 16]

The data generation method according to any one of Supplementary Notes 1 to 15, wherein

the processing apparatus includes: a processing head that is configured to irradiate the object with the pulse energy beam; and a movement apparatus that is configured to move a relative position of the object and the processing head along a first plane that includes a first axial direction and that includes a second axial direction intersecting the first axial direction,
the irradiation target position includes a plurality of positions in the first plane.

[Supplementary Note 17]

The data generation method according to any one of Supplementary Notes 1 to 16 further including storing data in which the irradiation target position is associated with the target number of times which the pulse energy beam should be irradiated.

[Supplementary Note 18]

A data generation method of generating control data for controlling a processing apparatus that is configured to perform a subtractive manufacturing on an object by irradiating a surface of the object with a pulse energy beam, the data generation method including:

calculating a unit processing amount of the object in a case where the object is irradiated with the pulse energy beam a unit number of times for each irradiation target position based on information related to an inclination of the object at each irradiation target position, which is irradiated with the pulse energy beam, with respect to an irradiation direction of the pulse energy beam; and
calculating a target number of times which each irradiation target position should be irradiated with the pulse energy beam based on a target processing amount for each irradiation target position and the unit processing amount for each irradiation target position.

[Supplementary Note 19]

A data generation method of generating control data for controlling a processing apparatus that is configured to perform a subtractive manufacturing on an object by irradiating a surface of the object with a pulse energy beam, the data generation method including:

acquiring information related to a light penetration depth of the object; and
calculating a target number of times which each irradiation target position should be irradiated with the pulse energy beam based on the information related to the light penetration depth, information related to an inclination of the object at each irradiation target position, which is irradiated with the pulse energy beam, with respect to an irradiation direction of the pulse energy beam, and a target processing amount for each irradiation target position.

[Supplementary Note 20]

A data generation method of generating control data for controlling a processing apparatus that is configured to perform a subtractive manufacturing on an object by irradiating a surface of the object with a pulse energy beam, the data generation method including:

after irradiating a test workpiece or the object with the pulse energy beam, measuring a shape of the test workpiece or the object after the subtractive manufacturing; and
calculating a target number of times which each irradiation target position should be irradiated with the pulse energy beam based on shape information of the test workpiece or the object before the subtractive manufacturing, a measured result of the shape of the test workpiece or the object after the subtractive manufacturing, information related to an inclination of the object at each irradiation target position, which is irradiated with the pulse energy beam, with respect to an irradiation direction of the pulse energy beam, and a target processing amount for each irradiation target position.

[Supplementary Note 21]

A data generation method of generating control data for controlling a processing apparatus that is configured to perform a subtractive manufacturing on an object by irradiating a surface of the object with a pulse energy beam, the data generation method including:
calculating a target number of times which each irradiation target position should be irradiated with the pulse energy beam based on information related to an inclination of the object at each irradiation target position, which is irradiated with the pulse energy beam, with respect to an irradiation direction of the pulse energy beam and a target processing amount for each irradiation target position.

[Supplementary Note 22]

A data generation method of generating control data for controlling a processing apparatus that is configured to perform a subtractive manufacturing on an object by irradiating a surface of the object with a pulse energy beam, the data generation method including:

calculating a target number of times which each irradiation target position should be irradiated with the pulse energy beam based on information related to the pulse energy beam on the object at each irradiation target position, which is irradiated with the pulse energy beam, with respect to an irradiation direction of the pulse energy beam and a target processing amount for each irradiation target position; and
generating the control data indicating a relationship between the irradiation target position and the target number of times.

[Supplementary Note 23]

A data generation method of generating control data for controlling a processing apparatus that is configured to perform a subtractive manufacturing on an object by irradiating a surface of the object with a pulse energy beam, the data generation method including:
calculating a target number of times which each irradiation target position, which is irradiated with the pulse energy beam, should be irradiated with the pulse energy beam by performing a deconvolution calculation using information related to the pulse energy beam and target shape information after the subtractive manufacturing.

[Supplementary Note 24]

The data generation method according to any one of the Supplementary Notes 1 to 23, wherein the control data includes data indicating a relationship between the irradiation target position and the target number of times.

[Supplementary Note 25]

A cloud system including:

a communication apparatus that communicates with a client terminal of a user who uses a processing apparatus; and
a calculation apparatus that determines a processing condition of the processing apparatus based on information related to an energy beam of the processing apparatus, information related to a material of a processing target object processed by the processing apparatus, and information related to at least one of a shape of the processing target object before a processing and a shape of the processing target object after the processing, which are acquired from the client terminal through the communication apparatus, wherein
determining the processing condition by the calculation apparatus includes generating the control data by using the data generation method according to any one of the Supplementary Notes 1 to 24,
the communication apparatus transmits the processing condition determined by the calculation apparatus to the client terminal.

[Supplementary Note 26]

A data generation method of generating control data for controlling a processing apparatus that is configured to perform a subtractive manufacturing on an object by irradiating a surface of the object with an energy beam, the data generation method including:

acquiring fluence distribution information that indicates a distribution of a fluence of the energy beam on at least a part of the object in a case where the object is irradiated with the energy beam and processing amount information that indicates a relationship between the fluence of the energy beam and an actual processing amount of the object in a case where the object is irradiated with the energy beam in order to perform the subtractive manufacturing on the object;

generating, based on the fluence distribution information and the processing amount information, processing amount distribution information that indicates a distribution of an expected processing amount that is expected in a case where the processing apparatus performs the subtractive manufacturing on the object; and

generating the control data based on the processing amount distribution information.

[Supplementary Note 27]

The data generation method according to the Supplementary Note 26, wherein

the acquiring the processing amount information includes acquiring at least one of first processing amount information that indicates a relationship between the fluence and the actual processing amount in a case where a first object is irradiated with the energy beam in order to perform the subtractive manufacturing on the first object and second processing amount information that indicates a relationship between the fluence and the actual processing amount in a case where a second object is irradiated with the energy beam in order to perform the subtractive manufacturing on the second object that is different from the first object,

the generating the processing amount distribution information includes generating the processing amount distribution information based on the fluence distribution information and the first processing amount information in a case where the processing apparatus performs the subtractive manufacturing on the first object, and generating the processing amount distribution information based on the fluence distribution information and the second processing amount information in a case where the processing apparatus performs the subtractive manufacturing on the second object.

[Supplementary Note 28]

The data generation method according to the Supplementary Note 27, wherein
a type of a material of the first object is different from a type of a material of the second obj ect.

[Supplementary Note 29]

The data generation method according to any one of the Supplementary Notes 26 to 28, wherein
the processing amount information is generated based on a measured result of a first area in a case where the subtractive manufacturing is actually performed on the first area that is a part of a test object by using the energy beam whose fluence is a first intensity, and a measured result of a second area in a case where the subtractive manufacturing is actually performed on the second area that is a part of a test object and that is different from the first area by using the energy beam whose fluence is a second intensity that is different from the first intensity.

[Supplementary Note 30]

A condition determination method of determining a processing condition used by a processing apparatus that perform a subtractive manufacturing on a processing target object by irradiating the processing target object with an energy beam,
the condition determination method including:

performing, in a plurality of test processing areas of a test object, a test processing for removing and processing the object by irradiating the test object with the energy beam based on each of a plurality of different processing conditions by using the processing apparatus;

measuring the plurality of test processing areas that have been removed and processed by the test processing;

calculating an evaluation parameter for evaluating a result of the subtractive manufacturing performed on the plurality of test processing areas; and

calculating an approximate equation that approximates a relationship between the evaluation parameter and the processing condition, and determining at least one processing condition by which the evaluation parameter satisfies a predetermined criterion based on the approximate equation as the processing condition that is actually used by the processing apparatus to perform the subtractive manufacturing on the processing target object.

[Supplementary Note 31]

The condition determination method according to the Supplementary Note 30, wherein
the plurality of test processing areas include at least two test processing areas with different positions in a first direction that is along the test object.

[Supplementary Note 32]

The condition determination method according to the Supplementary Note 31, wherein
the plurality of test processing areas include at least two test processing areas with different positions in a second direction that is along the test object and that intersects the first direction.

[Supplementary Note 33]

The condition determination method according to any one of the Supplementary Notes 30 to 32, wherein

the processing apparatus is configured to perform a movement control for moving a converged position of the energy beam along an intersection direction that intersects a surface of each of the processing target object and the test object,
the performing the test processing includes performing, in at least one of the plurality of test processing areas as the test processing, (i) a first test processing for removing and processing the object by irradiating the test object with the energy beam based on each of the plurality of different processing conditions without performing the movement control, (ii) a second test processing for removing and processing the object by irradiating the test object with the energy beam based on each of the plurality of different processing conditions while performing the movement control based on a measured result of the plurality of test areas that have been removed and processed by the first test processing, and (iii) a third test processing for removing and processing the object by irradiating the test object with the energy beam based on each of the plurality of different processing conditions while performing the movement control with a movement accuracy that is higher than a movement accuracy of the movement control performed by the second test processing based on a measured result of the plurality of test areas that have been removed and processed by the second test processing.

[Supplementary Note 34]

The condition determination method according to any one of the Supplementary Notes 30 to 33, wherein the processing condition includes a fluence of the energy beam.

[Supplementary Note 35]

The condition determination method according to any one of the Supplementary Notes 30 to 34, wherein the processing condition includes an overlap rate between an area in which the energy beam with which a first position is irradiated at a first timing forms a beam spot and an area in which the energy beam with which a second position, which is located at a position that is different from the first position along a surface of each of the processing target object or the test object, is irradiated at a second timing after the first timing forms a beam spot.

[Supplementary Note 36]

A processing condition calculation method including:

acquiring, from a client terminal through a communication apparatus that communicates with the client terminal of a user who uses a processing apparatus, information related to an energy beam of the processing apparatus or identification information for identifying the processing apparatus;
determining a processing condition of the processing apparatus based on the information related to an energy beam of the processing apparatus or the identification information for identifying the processing apparatus; and
transmitting the determined processing condition to the client terminal through the communication apparatus.

[Supplementary Note 37]

A processing condition calculation method including:

acquiring, from a client terminal through a communication apparatus that communicates with the client terminal of a user who uses a processing apparatus, identification information for identifying the processing apparatus, information related to a material of a processing target object processed by the processing apparatus, and information related to at least one of a shape of the processing target object before a processing and a shape of the processing target object after the processing;

determining a processing condition of the processing apparatus based on the identification information for identifying the processing apparatus, the information related to the material of the processing target object processed by the processing apparatus, and the information related to at least one of the shape of the processing target object before the processing and the shape of the processing target object after the processing; and

transmitting the determined processing condition to the client terminal through the communication apparatus.

[Supplementary Note 38]

A computer program that allows a computer to execute the processing condition calculation method according to the Supplementary Note 36 or 37.

[Supplementary Note 39]

A recording medium on which the computer program according to the Supplementary Note 38 is recorded.

[Supplementary Note 40]

A data generation method of generating control data for controlling a processing apparatus that is configured to perform a subtractive manufacturing on an object by irradiating a surface of the object with a pulse energy beam, the data generation method including:

calculating a unit processing amount of the object in a case where the object is irradiated with the pulse energy beam a unit number of times for each irradiation target position based on information related to an inclination of the object at each irradiation target position, which is irradiated with the pulse energy beam, with respect to an irradiation direction of the pulse energy beam; and

calculating a target number of times which each irradiation target position should be irradiated with the pulse energy beam based on a target processing amount for each irradiation target position and the unit processing amount for each irradiation target position.

[Supplementary Note 41]

A data generation method of generating control data for controlling a processing apparatus that is configured to perform a subtractive manufacturing on an object by irradiating a surface of the object with a pulse energy beam, the data generation method including:

acquiring information related to a light penetration depth of the object;

calculating a target number of times which each irradiation target position should be irradiated with the pulse energy beam based on the information related to the light penetration depth, information related to an inclination of the object at each irradiation target position, which is irradiated with the pulse energy beam, with respect to an irradiation direction of the pulse energy beam, and a target processing amount for each irradiation target position.

[Supplementary Note 42]

A data generation method of generating control data for controlling a processing apparatus that is configured to perform a subtractive manufacturing on an object by irradiating a surface of the object with a pulse energy beam, the data generation method including:

after irradiating a test workpiece or the object with the pulse energy beam, measuring a shape of the test workpiece or the object after the subtractive manufacturing;

calculating a target number of times which each irradiation target position should be irradiated with the pulse energy beam based on shape information of the test workpiece or the object before the subtractive manufacturing, a measured result of the shape of the test workpiece or the object after the subtractive manufacturing, information related to an inclination of the object at each irradiation target position, which is irradiated with the pulse energy beam, with respect to an irradiation direction of the pulse energy beam, and a target processing amount for each irradiation target position.

[Supplementary Note 43]

A data generation apparatus that generates control data for controlling a processing apparatus that is configured to perform a subtractive manufacturing on an object by irradiating a surface of the object with a pulse energy beam, the data generation apparatus is configured to:

calculate information related to a light penetration depth into a test workpiece or the object based on shape information of the test workpiece or the object before the subtractive manufacturing and a measured result of a shape of the test workpiece or the object after the subtractive manufacturing;
calculate a unit processing amount of the object in a case where the object is irradiated with the pulse energy beam a unit number of times for each irradiation target position based on information related to an inclination of the object at each irradiation target position, which is irradiated with the pulse energy beam, with respect to an irradiation direction of the pulse energy beam and the information related to the light penetration depth; and
calculate a target number of times which each irradiation target position should be irradiated with the pulse energy beam based on a target processing amount for each irradiation target position and the unit processing amount for each irradiation target position.

[Supplementary Note 44]

A data generation apparatus that generates control data for controlling a processing apparatus that is configured to perform a subtractive manufacturing on an object by irradiating a surface of the object with a pulse energy beam, the data generation apparatus is configured to:

calculate a unit processing amount of the object in a case where the object is irradiated with the pulse energy beam a unit number of times for each irradiation target position based on information related to an inclination of the object at each irradiation target position, which is irradiated with the pulse energy beam, with respect to an irradiation direction of the pulse energy beam; and
calculate a target number of times which each irradiation target position should be irradiated with the pulse energy beam based on a target processing amount for each irradiation target position and the unit processing amount for each irradiation target position.

[Supplementary Note 45]

A data generation apparatus that generates control data for controlling a processing apparatus that is configured to perform a subtractive manufacturing on an object by irradiating a surface of the object with a pulse energy beam, the data generation apparatus is configured to:

acquire information related to a light penetration depth of the object; and
calculate a target number of times which each irradiation target position should be irradiated with the pulse energy beam based on the information related to the light penetration depth, information related to an inclination of the object at each irradiation target position, which is irradiated with the pulse energy beam, with respect to an irradiation direction of the pulse energy beam, and a target processing amount for each irradiation target position.

[Supplementary Note 46]

A data generation apparatus that generates control data for controlling a processing apparatus that is configured to perform a subtractive manufacturing on an object by irradiating a surface of the object with a pulse energy beam, the data generation apparatus is configured to:
calculate a target number of times which each irradiation target position should be irradiated with the pulse energy beam based on shape information of a test workpiece or the object before the subtractive manufacturing, a measured result of a shape of the test workpiece or the object after the subtractive manufacturing, information related to an inclination of the object at each irradiation target position, which is irradiated with the pulse energy beam, with respect to an irradiation direction of the pulse energy beam, and a target processing amount for each irradiation target position.

[Supplementary Note 47]

A data generation apparatus that generates control data for controlling a processing apparatus that is configured to perform a subtractive manufacturing on an object by irradiating a surface of the object with a pulse energy beam, the data generation apparatus is configured to:
calculate a target number of times which each irradiation target position should be irradiated with the pulse energy beam based on information related to an inclination of the object at each irradiation target position, which is irradiated with the pulse energy beam, with respect to an irradiation direction of the pulse energy beam and a target processing amount for each irradiation target position.

[Supplementary Note 48]

A data generation apparatus that generates control data for controlling a processing apparatus that is configured to perform a subtractive manufacturing on an object by irradiating a surface of the object with a pulse energy beam, the data generation apparatus is configured to:

calculate a target number of times which each irradiation target position should be irradiated with the pulse energy beam based on information related to the pulse energy beam on the object at each irradiation target position, which is irradiated with the pulse energy beam, with respect to an irradiation direction of the pulse energy beam and a target processing amount for each irradiation target position; and
generate the control data indicating a relationship between the irradiation target position and the target number of times.

[Supplementary Note 49]

A data generation apparatus that generates control data for controlling a processing apparatus that is configured to perform a subtractive manufacturing on an object by irradiating a surface of the object with a pulse energy beam, the data generation apparatus is configured to:
calculate a target number of times which each irradiation target position, which is irradiated with the pulse energy beam, should be irradiated with the pulse energy beam by performing a deconvolution calculation using information related to the pulse energy beam and target shape information after the subtractive manufacturing.

The features of each example embodiment described above may be appropriately combined with each other. A part of the features of each example embodiment described above may not be used. The feature of each example embodiment described above may be appropriately replaced with the feature of another example embodiment. Moreover, the disclosures of all publications and United States patents related to an apparatus and the like cited in each embodiment described above are incorporated in the disclosures of the present application by reference if it is legally permitted.

The present invention is not limited to the above described examples and is allowed to be changed, if desired, without departing from the essence or spirit of the invention which can be read from the claims and the entire specification, and a data generation method, a cloud system, a data generation apparatus, a processing apparatus, a computer program, and a recording medium, which involve such changes, are also intended to be within the technical scope of the present invention.

Description of Reference Codes

| | |
|---|---|
| SYS | processing system |
| 1 | processing apparatus |
| 11 | processing unit |
| 12 | measurement unit |
| 14 | control apparatus |
| 2 | data generation server |
| 21 | calculation apparatus |
| 211 | target processing amount calculation unit |
| 212 | unit processing amount calculation unit |
| 213 | target irradiation frequency calculation unit |
| 3 | client termina apparatus |
| EL | processing light |

W  workpiece
Δh  target processing amount
Δz  standard processing amount
Φ  unit processing amount
p  target irradiation frequency
C  irradiation target position

**Claims**

1. A data generation method of generating control data for controlling a processing apparatus that is configured to perform a subtractive manufacturing on an object by irradiating a surface of the object with a pulse energy beam, the data generation method comprising:

after irradiating a test workpiece or the object with the pulse energy beam, measuring a shape of the test workpiece or the object after the subtractive manufacturing;
calculating information related to a light penetration depth into the test workpiece or the object based on shape information of the test workpiece or the object before the subtractive manufacturing and a measured result of the shape of the test workpiece or the object after the subtractive manufacturing;
calculating a unit processing amount of the object in a case where the object is irradiated with the pulse energy beam a unit number of times for each irradiation target position based on information related to an inclination of the object at each irradiation target position, which is irradiated with the pulse energy beam, with respect to an irradiation direction of the pulse energy beam and the information related to the light penetration depth; and
calculating a target number of times which each irradiation target position should be irradiated with the pulse energy beam based on a target processing amount for each irradiation target position and the unit processing amount for each irradiation target position.

2. The data generation method according to claim 1, wherein
an irradiation size on the object of the pulse energy beam with which the object is irradiated varies depending on an inclination of the object.

3. The data generation method according to claim 1 or 2, wherein
a cross-sectional shape on the object of the pulse energy beam with which the object is irradiated varies depending on an inclination of the object.

4. The data generation method according to any one of claims 1 to 3, wherein
a reflection characteristic of the pulse energy beam at the object varies depending on an inclination of the object.

5. The data generation method according to any one of claims 1 to 4 further comprising measuring a shape of the object before the subtractive manufacturing, wherein
the target processing amount is calculated based on the shape before the subtractive manufacturing.

6. The data generation method according to claim 5 further comprising inputting a target shape of the object, wherein
the target processing amount is calculated based on the shape before the subtractive manufacturing and the target shape.

7. The data generation method according to any one of claims 1 to 6, wherein

the calculating the target number of times includes calculating the target number of times by solving an optimization problem,
the optimization problem includes such a problem that an expected processing amount at the irradiation target position is equal to the target processing amount in a case where the irradiation target position is irradiated with the pulse energy beam the target number of times.

8. The data generation method according to any one of claims 1 to 7, wherein

the target processing amount includes (i) a first target processing amount of the object at a first irradiation target position, and (ii) a second target processing amount of the object at a second irradiation target position that is different from the first irradiation target position,

the calculating the unit processing amount includes calculating (i) a first unit processing amount of the object at the first irradiation target position in a case where the first irradiation target position is irradiated with the pulse energy beam a unit number of times, (ii) a second unit processing amount of the object at the second irradiation target position in a case where the first irradiation target position is irradiated with the pulse energy beam a unit number of times, (iii) a third unit processing amount of the object at the first irradiation target position in a case where the second irradiation target position is irradiated with the pulse energy beam a unit number of times, and (iv) a fourth unit processing amount of the object at the second irradiation target position in a case where the second irradiation target position is irradiated with the pulse energy beam a unit number of times,

the calculating the target number of times includes calculating a first target number of times which the first irradiation target position should be irradiated with the pulse energy beam and a second target number of times which the second irradiation target position should be irradiated with the pulse energy beam based on the first to second target processing amounts and the first to fourth unit processing amounts.

9. The data generation method according to claim 8, wherein

the calculating the target number of times includes calculating the target number of times by solving an optimization problem,

the optimization problem includes such a problem that a first expected processing amount of the object at the first irradiation target position is equal to the first target processing amount and a second expected processing amount of the object at the second irradiation target position is equal to the second target processing amount in a case where the first irradiation target position is irradiated with the pulse energy beam the first target number of times and the second irradiation target position is irradiated with the pulse energy beam the second target number of times.

10. The data generation method according to claim 9, wherein

the first expected processing amount is calculated from a total sum of a product of the first unit processing amount and the first target number of times and a product of the third unit processing amount and the second target number of times,

the second expected processing amount is calculated from a total sum of a product of the second unit processing amount and the first target number of times and a product of the fourth unit processing amount and the second target number of times.

11. The data generation method according to any one of claims 1 to 10, wherein

the calculating the target number of times includes calculating the target number of times by solving an optimization problem expressed by an Equation 4,

the processing apparatus is configured to irradiate each of N (wherein, N is an integer that is equal to or larger than 2) irradiation target positions with the pulse energy beam,

"$C_k$ (wherein, k is a variable number representing an integer that is equal to or larger than 1 and that is equal to or smaller than N)" in the Equation 4 represents k-th irradiation target position of the N irradiation target positions,

"$\Delta h(C_k)$" in the Equation 4 represents the target processing amount of the object at the k-th irradiation target position,

"$\varphi(C_k - C_g, C_g$ (wherein, g is a variable number representing an integer that is equal to or larger than 1 and that is equal to or smaller than N))" in the Equation 4 represents the unit processing amount of the object at the k-th irradiation target position in a case where g-th irradiation target position of the N irradiation target positions is irradiated with the pulse energy beam a unit number of times,

"$p(C_k)$" in the Equation 4 represents the target number of times which the k-th irradiation target position should be irradiated with the pulse energy beam in order to perform the subtractive manufacturing on the object.

[Equation 1]

$$\begin{bmatrix} \Delta h(c_1) \\ \Delta h(c_2) \\ \vdots \\ \Delta h(c_N) \end{bmatrix} = \begin{bmatrix} \phi(c_1 - c_1, c_1) & \phi(c_1 - c_2, c_2) & \dots & \phi(c_1 - c_N, c_N) \\ \phi(c_2 - c_1, c_1) & \phi(c_2 - c_2, c_2) & \dots & \phi(c_2 - c_N, c_N) \\ \vdots & \vdots & \vdots & \vdots \\ \phi(c_N - c_1, c_1) & \phi(c_N - c_2, c_2) & \dots & \phi(c_N - c_N, c_N) \end{bmatrix} \begin{bmatrix} p(c_1) \\ p(c_2) \\ \vdots \\ p(c_N) \end{bmatrix}$$

**12.** The data generation method according to any one of claims 1 to 11, wherein
the calculating the unit processing amount includes calculating the unit processing amount based on an angle between a beam axis that is along a propagating direction of the pulse energy beam and a normal line to the object at the irradiation target position, a transmittance of the object at the irradiation target position to the pulse energy beam, and the light penetration depth of the pulse energy beam into the object.

**13.** The data generation method according to claim 12, wherein

the calculating the unit processing amount includes calculating the unit processing amount by using an Equation 5,
the processing apparatus is configured to irradiate each of N (wherein, N is an integer that is equal to or larger than 2) irradiation target positions with the pulse energy beam,
"$\varphi(C_k - C_g, C_g$ (wherein, each of k and g is a variable number representing an integer that is equal to or larger than 1 and that is equal to or smaller than N))" in the Equation 5 represents the unit processing amount of the object at k-th irradiation target position of the N irradiation target positions in a case where g-th irradiation target position of the N irradiation target positions is irradiated with the pulse energy beam a unit number of times,
"$\alpha^{-1}$" in the Equation 5 represents the light penetration depth,
"$F(C_k - C_g, C_g)$" in the Equation 5 represents a fluence of the pulse energy beam at the k-th irradiation target position in a case where the g-th irradiation target position is irradiated with the pulse energy beam a unit number of times,
"$F_{th}$" in the Equation 5 represents a lower threshold value of the fluence of the pulse energy beam that can remove and process the object,
"$\theta_g$" in the Equation 5 represents an angle between the beam axis and a normal line to the object at the g-th irradiation target position,
"$T(\theta_g)$" in the Equation 5 represents a transmittance of the object at the g-th irradiation target position to the pulse energy beam.

[Equation 2]

$$\phi(C_k - C_g, C_g) = \alpha^{-1}\ln\left(\frac{F(C_k - C_g, C_g) \times T(\theta_g) \times cos\theta_g}{F_{th}}\right)$$

**14.** The data generation method according to any one of claims 1 to 13, wherein

the processing apparatus is configured to irradiate each of N (wherein, N is an integer that is equal to or larger than 2) irradiation target positions with the pulse energy beam,
the calculating the information related to the light penetration depth includes calculating the information related to the light penetration depth based on an actual processing amount of the object at i-th (wherein, i is a variable number representing an integer that is equal to or larger than 1 and that is equal to or smaller than N) irradiation target position of the N irradiation target positions in a case where the N irradiation target positions are actually irradiated with the pulse energy beam a unit number of times in sequence and a fluence of the pulse energy beam at the i-th irradiation target position in a case where at least a part of the N irradiation target positions are actually irradiated with the pulse energy beam a unit number of times in sequence.

**15.** The data generation method according to claim 14, wherein

the calculating the information related to the light penetration depth includes calculating the information related to the light penetration depth by using an Equation 3,
"$\alpha^{-1}$" in the Equation 3 represents the light penetration depth,

"$\Delta z_{scan}$" in the Equation 3 represents the actual processing amount,
"F(C$_i$ - C$_j$, C$_j$)" in the Equation 3 represents a fluence of the pulse energy beam at the i-th irradiation target position in a case where j-th (wherein, j is a variable number representing an integer that is equal to or larger than 1 and that is equal to or smaller than N) irradiation target position of the N irradiation target positions is irradiated with the pulse energy beam a unit number of times,
"F$_{th}$" in the Equation 3 represents a lower threshold value of the fluence of the pulse energy beam that can remove and process the object.

[Equation 3]

$$\alpha^{-1} = \Delta z_{scan} / (\sum_{j} \ln \left( \frac{F(C_i - C_j, C_j)}{F_{th}} \right))$$

16. The data generation method according to any one of claims 1 to 15, wherein

the processing apparatus includes: a processing head that is configured to irradiate the object with the pulse energy beam; and a movement apparatus that is configured to move a relative position of the object and the processing head along a first plane that includes a first axial direction and that includes a second axial direction intersecting the first axial direction,
the irradiation target position includes a plurality of positions in the first plane.

17. The data generation method according to any one of claims 1 to 16 further comprising storing data in which the irradiation target position is associated with the target number of times which the pulse energy beam should be irradiated.

18. A cloud system comprising:

a communication apparatus that communicates with a client terminal of a user who uses a processing apparatus; and
a calculation apparatus that determines a processing condition of the processing apparatus based on information related to an energy beam of the processing apparatus, information related to a material of a processing target object processed by the processing apparatus, and information related to at least one of a shape of the processing target object before a processing and a shape of the processing target object after the processing, which are acquired from the client terminal through the communication apparatus, wherein
the communication apparatus transmits the processing condition determined by the calculation apparatus to the client terminal.

19. A cloud system comprising:

a communication apparatus that communicates with a client terminal of a user who uses a processing apparatus; and
a calculation apparatus that determines a processing condition of the processing apparatus based on identification information for identifying the processing apparatus, information related to a material of a processing target object processed by the processing apparatus, and information related to at least one of a shape of the processing target object before a processing and a shape of the processing target object after the processing, which are acquired from the client terminal through the communication apparatus, wherein
the communication apparatus transmits the processing condition determined by the calculation apparatus to the client terminal.

20. The cloud system according to claim 19, wherein
the cloud system further comprising a cloud server.

21. The cloud system according to claim 21, wherein
the cloud server is configured to store the identification information of the processing apparatus and information related to an energy beam of the processing apparatus with them being associated with each other.

22. The cloud system according to claim 18 or 21, wherein

the processing condition is calculated by performing a deconvolution calculation using at least one of the information related to the energy beam, the information related to the material, the information related to the shape of the processing target object before the processing, and the information related to the shape of the processing target object after the processing.

23. The cloud system according to any one of claims 18, 21, and 22, wherein
the information related to the energy beam includes at least one of information related to an intensity of the energy beam, information related to a shape of the energy beam, and information related to a fluence of the energy beam.

24. The cloud system according to any one of claims 18 to 23, wherein
the information related to the material includes information related to a type of metal that is irradiated with an energy beam of the processing apparatus.

25. The cloud system according to any one of claims 18 to 24, wherein
the calculation apparatus further acquires processing quality information related to a quality of the processing by the processing apparatus or processing throughput information related to a throughput of the processing by the processing apparatus from the client terminal through the communication apparatus, and calculates or selects the processing condition based on the processing quality information or the processing throughput information.

26. The cloud system according to claim 25, wherein
the processing quality information includes at least one of information related to a resolution of the processing by the processing apparatus, information related to a surface roughness after the processing target object is processed by the processing apparatus, and information related to an accuracy of the processing by the processing apparatus,

27. The cloud system according to any one of claims 18 to 26, wherein
the processing by the processing apparatus is a subtractive manufacturing.

28. The cloud system according to claim 27, wherein
the subtractive manufacturing is an ablation processing that sublimates or evaporates a part of the processing target by using the energy beam.

29. A cloud system comprising:

a communication apparatus that communicates with a client terminal of a user who uses a processing apparatus; and
a calculation apparatus that determines a processing condition of the processing apparatus based on information related to an energy beam of the processing apparatus or identification information for identifying the processing apparatus which are acquired from the client terminal through the communication apparatus, wherein
the communication apparatus transmits the processing condition determined by the calculation apparatus to the client terminal.

30. The cloud system according to claim 29, wherein
the calculation apparatus calculates the processing condition or selects the processing condition.

31. A processing condition calculation method comprising:

acquiring, from a client terminal through a communication apparatus that communicates with the client terminal of a user who uses a processing apparatus, information related to an energy beam of the processing apparatus, information related to a material of a processing target object processed by the processing apparatus, and information related to at least one of a shape of the processing target object before a processing and a shape of the processing target object after the processing;
determining a processing condition of the processing apparatus based on the information related to the energy beam of the processing apparatus, the information related to the material of the processing target object processed by the processing apparatus, and the information related to at least one of the shape of the processing target object before the processing and the shape of the processing target object after the processing; and
transmitting the determined processing condition to the client terminal through the communication apparatus.

32. A data generation method of generating control data for controlling a processing apparatus that is configured to perform a subtractive manufacturing on an object by irradiating a surface of the object with a pulse energy beam, the data generation method comprising:

calculating a target number of times which each irradiation target position should be irradiated with the pulse energy beam based on information related to an inclination of the object at each irradiation target position, which is irradiated with the pulse energy beam, with respect to an irradiation direction of the pulse energy beam and a target processing amount for each irradiation target position.

33. A data generation method of generating control data for controlling a processing apparatus that is configured to perform a subtractive manufacturing on an object by irradiating a surface of the object with a pulse energy beam, the data generation method comprising:

calculating a target number of times which each irradiation target position should be irradiated with the pulse energy beam based on information related to the pulse energy beam on the object at each irradiation target position, which is irradiated with the pulse energy beam, with respect to an irradiation direction of the pulse energy beam and a target processing amount for each irradiation target position.

34. A data generation method of generating control data for controlling a processing apparatus that is configured to perform a subtractive manufacturing on an object by irradiating a surface of the object with a pulse energy beam, the data generation method comprising:

calculating a target number of times which each irradiation target position, which is irradiated with the pulse energy beam, should be irradiated with the pulse energy beam by performing a deconvolution calculation using information related to the pulse energy beam and target shape information after the subtractive manufacturing.

35. The data generation method according to any one of claims 1 to 17 and 32 to 34, wherein

the control data includes data indicating a relationship between the irradiation target position and the target number of times.

36. A computer program that allows a computer to execute the data generation method according to any one of claims 1 to 17 and 32 to 35.

37. A recording medium on which the computer program according to claim 36 is recorded.

38. A processing apparatus that performs the subtractive manufacturing on the object by using the control data generated by the data generation method according to any one of claims 1 to 17 and 32 to 35.

39. The processing apparatus according to claim 38 comprising a control apparatus that generates the control data by performing the data generation method.

SYS

TERMINAL
APPARATUS

3

2

DATA GENERATION
SERVER

4

PROCESSING
APPARATUS

1

FIG. 1

FIG. 2

1

15

11 PROCESSING UNIT

111 PROCESSING LIGHT SOURCE

112 PROCESSING HEAD

1120 IRRADIATION OPTICAL SYSTEM

113 HEAD DRIVING SYSTEM

12 MEASUREMENT UNIT

121 MEASUREMENT HEAD

122 HEAD DRIVING SYSTEM

STAGE UNIT

13

132 STAGE

133 STAGE DRIVING SYSTEM

14 CONTROL APPARATUS

FIG. 3

1120

1122X

1122Y

Z

Y

X

1121

EL

1123

AX

EA

W

PSA

FIG. 4

FIG. 5A

FIG. 5B

FIG. 5C

[BEFORE PROCESSING]                    [AFTER PROCESSING]

# FIG. 6

W_rmv    W

W_rmv

W

## FIG. 7

SL(SL#1)
SL(SL#2)
SL(SL#3)

SL(SL#Q)

Δz    W_rmv

## FIG. 8

Z
Y
X

RANGE FROM WHICH REMOVAL
LAYER SL#1 IS REMOVED
(RANGE IRRADIATED WITH
PROCESSING LIGHT EL)

W

## FIG. 9A

Z
Y
X

RANGE FROM WHICH REMOVAL
LAYER SL#2 IS REMOVED
(RANGE IRRADIATED WITH
PROCESSING LIGHT EL)

W

## FIG. 9B

Z
Y
X

RANGE FROM WHICH REMOVAL
LAYER SL#3 IS REMOVED
(RANGE IRRADIATED WITH
PROCESSING LIGHT EL)

W

## FIG. 9C

Z
Y
X

RANGE FROM WHICH REMOVAL
LAYER SL#Q IS REMOVED
(RANGE IRRADIATED WITH
PROCESSING LIGHT EL)

W

## FIG. 9D

Z ⊙ → Y
X ↓

C    SCANNING
     TRAJECTORY    PSA

FIG. 10A

Z ⊙ → Y
X ↓

C        C
$(C_1)$  $(C_2)$              PL/W

PSA

C
$(C_N)$

FIG. 10B

**FIG. 11**

START

CALCULATE TARGET
PROCESSING AMOUNT Δh  —— S11

CALCULATE TARGET IRRADIATION
FREQUENCY p BASED ON TARGET
PROCESSING AMOUNT Δh AND  —— S12
UNIT PROCESSING AMOUNT Δz

GENERATE
CONTROL DATA  —— S13

END

# FIG. 12

# FIG. 13

START

CALCULATE TARGET
PROCESSING AMOUNT $\Delta h$ — S21

CALCULATE LIGHT
PENETRATION DEPTH — S22

CALCULATE UNIT
PROCESSING AMOUNT $\phi$ — S23

CALCULATE TARGET
IRRADIATION FREQUENCY p — S24

GENERATE
CONTROL DATA — S25

END

FIG. 14

FIG. 15

FIG. 16

FIG. 17

EP 4 424 454 A1

FIG. 18A

FIG. 18B

64

FIG. 19A

FIG. 19B

FIG. 20A

FIG. 20B

INCLINED SURFACE

Z

Y

X

NON-INCLINED SURFACE

NON-INCLINED SURFACE

W1

W1

W2

1ST OPERATION

2ND OPERATION

1ST OPERATION

## FIG. 21

INCLINED SURFACE

Z

Y

X

NON-INCLINED SURFACE

NON-INCLINED SURFACE

W1

W1

W2

W3

W3

1ST OPERATION

2ND OPERATION

1ST OPERATION

## FIG. 22

FIG. 23

FIG. 24

START

ACQUIRE FLUENCE MAP — S41

ACQUIRE PROCESSING AMOUNT
INFO CORRESPONDING TO
MATERIAL OF WORKPIECE — S42

GENERATE PROCESSING
AMOUNT DISTRIBUTION DATA — S43

END

# FIG. 25

Z ⊙ → Y
↓
X

[FLUENCE MAP]

PSA

×

[PROCESSING AMOUNT INFO]

SUS

PROCESSING AMOUNT

FLUENCE

. . . .

[PROCESSING AMOUNT INFO]

SiC

PROCESSING AMOUNT

FLUENCE

=

Z ⊙ → Y
↓
X

[PROCESSING AMOUNT
DISTRIBUTION INFO]

W

FIG. 26

START

SET PROCESSING
CONDITION ⟶ S51

PROCESS TEST WORKPIECE
USING SET PROCESSING
CONDITION ⟶ S52

IS
PROCESSING PERFORMED
AS MANY AS NECESSARY
? ⟶ S53

No

Yes

MEASURE TEST
WORKPIECE ⟶ S54

CALCULATE EVALUATION
PARAMETER ⟶ S55

DETERMINE PROCESSING
CONDITION ⟶ S57

END

# FIG. 27

Z → Y
X

TP(TP#4)    TP(TP#5)

W

TP(TP#7)    TP(TP#1)

TP(TP#8)    TP(TP#2)

TP(TP#9)    TP(TP#3)

TP(TP#6)

# FIG. 28

OVERLAP RATE

PROCESSING CONDTION#6    PROCESSING CONDTION#9

OR3 — PROCESSING CONDTION#5

PROCESSING CONDTION#3

OR2 — PROCESSING CONDTION#8

PROCESSING CONDTION#2 — PROCESSING CONDTION#4

OR1 — PROCESSING CONDTION#7

PROCESSING CONDTION#1

F1    F2    F3    FLUENCE

## FIG. 29

EVALUATION PARAMETER

OPTIMAL PROCESSING CONDITION

ACTUALLY MEASURED SAMPLE

APPROXIMATE CURVED PLANE

FLUENCE

OPTIMAL OVERLAP RATE

OPTIMAL FLUENCE

OVERLAP RATE

## FIG. 30

Z → Y
↓
X

W

WT

## FIG. 31

FIG. 32

2a

FIG. 33

FIG. 34

| | | |
|---|---|---|
| **INTERNATIONAL SEARCH REPORT** | International application No. | |
| | **PCT/JP2021/039660** | |

**A.    CLASSIFICATION OF SUBJECT MATTER**

*B23K 26/36*(2014.01)i
FI:    B23K26/36

According to International Patent Classification (IPC) or to both national classification and IPC

**B.    FIELDS SEARCHED**

Minimum documentation searched (classification system followed by classification symbols)

B23K26/36

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | JP 2009-532213 A (3M INNOVATIVE PROPERTIES CO.) 10 September 2009 (2009-09-10) paragraphs [0055]-[0057] | 1-7, 12, 16-17, 32-39 |
| A | | 8-11, 13-15 |
| Y | JP 2021-511216 A (LASER ENGINEERING APPLICATIONS) 06 May 2021 (2021-05-06) paragraphs [0011], [0194]-[0199], [0246]-[0289], fig. 16-19 | 1-7, 12, 16-17, 32-39 |
| A | | 8-11, 13-15 |
| X | WO 2015/016254 A1 (BROTHER KOGYO KK) 05 February 2015 (2015-02-05) paragraphs [0015]-[0042], [0062]-[0114], fig. 1-13 | 18-31 |
| A | JP 2012-94591 A (DISCO ABRASIVE SYST., LTD.) 17 May 2012 (2012-05-17) claims 1-2 | 1-17, 32-39 |
| A | JP 2017-185518 A (TAMARI INDUSTRY CO., LTD.) 12 October 2017 (2017-10-12) claims 1-4 | 1-17, 32-39 |

✓ Further documents are listed in the continuation of Box C.        ✓ See patent family annex.

| | |
|---|---|
| *    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **21 December 2021** | **11 January 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2021/039660**

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2015/151540 A1 (PANASONIC INDUSTRIAL DEVICES SUNX CO., LTD.) 08 October 2015 (2015-10-08)<br>claim 1, fig. 1-4 | 18-31 |

Form PCT/ISA/210 (second sheet) (January 2015)

<table>
<tr><td>**INTERNATIONAL SEARCH REPORT**</td><td>International application No.<br>**PCT/JP2021/039660**</td></tr>
</table>

**Box No. III    Observations where unity of invention is lacking (Continuation of item 3 of first sheet)**

This International Searching Authority found multiple inventions in this international application, as follows:

The claims are classified into the two inventions below.
(Invention 1) Claims 1-17 and 32-39
The invention of claim 1 has the special technical feature of "a data generation method" including, on the basis of information including "information on the inclinations, at irradiation target positions, of an object that is irradiated with a pulse energy beam", "calculating the target number of times when the object is to be irradiated at each of the irradiation target positions with a pulse energy beam". The invention of claims 1-17 and 32-39 has the same special technical feature as the invention of claim 1.
Accordingly the invention of claims 1-17 and 32-39 is classified as invention 1.

(Invention 2) Claims 18-31
The invention of claims 18-31 cannot be said to have the same or corresponding special technical features between this invention and the invention of claim 1 classified as invention 1. In addition, the invention of claims 18-31 has a low technical relevance to the invention of claim 1. Thus, it is not considered that the invention of claims 18-31 has a link of invention to the invention of claim 1. Furthermore, the invention of claims 18-31 is not substantially identical to or similarly closely related to the invention of any of the claims classified as invention 1.
Accordingly the invention of claims 18-31 cannot be identified as invention 1.
Accordingly the invention of claims 18-31 is classified as invention 2.

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☑ No protest accompanied the payment of additional search fees.

Form PCT/ISA/210 (continuation of first sheet) (January 2015)

**INTERNATIONAL SEARCH REPORT**
**Information on patent family members**

International application No.

**PCT/JP2021/039660**

| Patent document cited in search report | | | Publication date (day/month/year) | Patent family member(s) | | | Publication date (day/month/year) |
|---|---|---|---|---|---|---|---|
| JP | 2009-532213 | A | 10 September 2009 | WO 2008/063686 A2 page 12 US 2007/0231541 A1 KR 10-2009-0003278 A CN 101443189 A | | | |
| JP | 2021-511216 | A | 06 May 2021 | US 2021/0031304 A1 paragraphs [0024], [0267]-[0271], [0322]-[0370] WO 2019/145513 A2 | | | |
| WO | 2015/016254 | A1 | 05 February 2015 | (Family: none) | | | |
| JP | 2012-94591 | A | 17 May 2012 | (Family: none) | | | |
| JP | 2017-185518 | A | 12 October 2017 | (Family: none) | | | |
| WO | 2015/151540 | A1 | 08 October 2015 | CN 106163730 A claim 1, fig. 1-4 | | | |

Form PCT/ISA/210 (patent family annex) (January 2015)

**EP 4 424 454 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20020017509 A1
- US 20170044002 A1
- JP 2016524864 A
- WO 2021024480 A1